(19) **Europäisches Patentamt European Patent Office Office européen des brevets**

(11) **EP 4 309 500 B1**

(12) **EUROPEAN PATENT SPECIFICATION**

(45) Date of publication and mention
of the grant of the patent:
**04.06.2025 Bulletin 2025/23**

(21) Application number: **22213605.3**

(22) Date of filing: **14.12.2022**

(51) International Patent Classification (IPC):
*A01N 37/46* (2006.01)     *A01N 63/22* (2020.01)
*A01N 59/00* (2006.01)     *A01N 59/12* (2006.01)
*A01P 1/00* (2006.01)      *A01P 3/00* (2006.01)

(52) Cooperative Patent Classification (CPC):
(C-Sets available)
**A01N 37/46; A01N 63/22; A01P 1/00; A01P 3/00**
(Cont.)

(54) **PEROXIDASE BASED BIOCONTROL AGENTS**

BIOKONTROLLMITTEL AUF PEROXIDASE-BASIS

AGENTS DE LUTTE BIOLOGIQUE A BASE DE PEROXYDASE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.07.2022 EP 22185556**

(43) Date of publication of application:
**24.01.2024 Bulletin 2024/04**

(73) Proprietor: **Acies Bio d.o.o.**
**1000 Ljubljana (SI)**

(72) Inventors:
• **KOSEC, Gregor**
**1000 Ljubljana (SI)**
• **MAGDEVSKA, Vasilka**
**1000 Ljubljana (SI)**
• **FUJS, Stefan**
**1000 Ljubljana (SI)**
• **KLANCNIK, Bor**
**3210 Slovenjske Konjice (SI)**
• **KOZLEVCAR, Monika**
**1261 Ljubljana-Dobrunje (SI)**
• **JALSOVEC, Helena**
**1223 Blagovica (SI)**

(74) Representative: **Vossius & Partner
Patentanwälte Rechtsanwälte mbB
Siebertstraße 3
81675 München (DE)**

(56) References cited:
EP-B1- 1 094 710     WO-A1-99/22597
WO-A2-95/27046      US-A- 5 849 291
US-A1- 2014 134 213

• DATABASE UniParc | UniProt [online] 22 August
2017 (2017-08-22), ANONYMOUS:
"UPI000B9AD1D3", XP093043460, retrieved from
https://www.uniprot.org/uniparc/
UPI000B9AD1D3/entry?facets=dbTypes:RefSeq
Database accession no. UPI000B9AD1D3
• DATABASE UniParc | UniProt [online] 17 June
2020 (2020-06-17), ANONYMOUS:
"UPI00144C50F4", XP093043464, retrieved from
https://www.uniprot.org/uniparc/
UPI00144C50F4/entry Database accession no.
UPI00144C50F4
• DATABASE UniParc | UniProt [online] 29
September 2021 (2021-09-29), ANONYMOUS:
"UPI0013BEBD13", XP093043466, retrieved from
https://www.uniprot.org/uniparc/
UPI0013BEBD13/entry Database accession no.
UPI0013BEBD13
• DATABASE UniParc | UniProt [online] 29
September 2021 (2021-09-29), ANONYMOUS:
"UPI000F520AB0", XP093043467, retrieved from
https://www.uniprot.org/uniparc/
UPI000F520AB0/entry Database accession no.
UPI000F520AB0

EP 4 309 500 B1

- DATABASE UniParc | UniProt [online] 20 December 2017 (2017-12-20), ANONYMOUS: "UPI000BD5B84C", XP093043605, retrieved from https://www.uniprot.org/uniparc/ UPI000BD5B84C/entry Database accession no. UPI000BD5B84C
- TONOYAN LILIT ET AL: "Antibacterial Potential of an Antimicrobial Agent Inspired by Peroxidase-Catalyzed Systems", FRONTIERS IN MICROBIOLOGY, vol. 8, 2 May 2017 (2017-05-02), pages 680, XP055814524, DOI: 10.3389/ fmicb.2017.00680
- SEYMOUR J KLEBANOFF: "Iodination of Bacteria: A bactericidal mechanism", 1 January 1967 (1967-01-01), pages 1063 - 1079, XP055070609, Retrieved from the Internet <URL:http://jem.rupress.org/content/126/6/1063. full.pdf#page=1&view=FitH> [retrieved on 20130710], DOI: 10.1084/jem.126.6.1063
- IHALIN RIIKKA ET AL: "The effects of different (pseudo)halide substrates on peroxidase-mediated killing of Actinobacillus actinomycetemcomitans", JOURNAL OF PERIODONTAL RESEARCH, vol. 33, no. 7, 1 October 1998 (1998-10-01), Hoboken, USA, pages 421 - 427, XP093043640, ISSN: 0022-3484, DOI: 10.1111/j.1600-0765.1998.tb02338.x
- HEINRICH JANINE ET AL: "The YoaW signal peptide directs efficient secretion of different heterologous proteins fused to a StrepII-SUMO tag in Bacillus subtilis", MICROBIAL CELL FACTORIES, vol. 18, no. 1, 7 February 2019 (2019-02-07), XP093043865, Retrieved from the Internet <URL:http://link.springer.com/content/ pdf/10.1186/s12934-019-1078-0.pdf> DOI: 10.1186/s12934-019-1078-0

Remarks:

The complete document including Reference Table(s) and the Sequence Listing(s) can be downloaded from the EPO website

(52) Cooperative Patent Classification (CPC): (Cont.)

C-Sets
A01N 37/46, A01N 59/00, A01N 59/12;
A01N 63/22, A01N 59/00, A01N 59/12

**Description**

The present invention relates to means and methods comprising a bacterial heme peroxidase and/or a functional fragment thereof for non-medical use in preventing and/or controlling a pathogen on food, or plants, or to compositions for use as a medicine in or on the human or animal body. The present invention thus relates to novel non-medical uses of a bacterial heme peroxidase and/or a functional fragment thereof for preventing and/or controlling a pathogen on food, or plants, or to compositions for use in the treatment of an infection with a pathogen in or on the human or animal body. Furthermore, the present invention relates to corresponding non-therapeutic methods comprising a bacterial heme peroxidase and/or a functional fragment thereof for preventing and/or controlling a pathogen on food, or plants or to composition for use in the treatment of an infection with a pathogen in or on or in the human or animal body comprising applying a sufficient amount of the bacterial heme peroxidase and/or a functional fragment thereof on said food, plants, or on mucosae, skin, in particular epidermal skin like scalp or facial skin and/or teeth to reduce the number of cells of said pathogen. In addition, the invention relates to specific heme peroxidases that have been identified to have desired properties. The invention also relates to fragments of or small heme peroxidases that have particularly advantageous properties. Moreover, the present invention further relates to corresponding compositions comprising a bacterial heme peroxidase and/or a functional fragment thereof for preventing and/or controlling a pathogen on food, plants, or in or on the human or animal body.

Furthermore, provided is the use of a bacterial heme peroxidase and/or of a functional fragment thereof for the preparation of the compositions of the present invention. The present invention finally also relates to a method for producing a bacterial heme peroxidase protein and/or a functional fragment thereof in an engineered *Bacillus subtilis* strain. The inventive use of the bacterial heme peroxidase of the present invention for preventing and/or controlling a pathogen is without being limiting, particularly useful in ecologically compatible commercial plant/crop protection campaigns as well as in daily personal care products such as toothpaste for example.

A novel non-medical use of a bacterial heme peroxidase in preventing and/or controlling a pathogen is provided. Furthermore, a novel composition for use as a medicine comprising a bacterial heme peroxidase in preventing and/or controlling a pathogen in or on the human or animal body is provided. The bacterial heme peroxidase can be delivered or contained in agricultural or medical formulations and can be applied to food, plants or to the human or animal body to achieve prevention and/or control of pathogen infection.

Peroxidases are enzymes found in all plants and animals and they are essential for living systems. Depending on the chemistry of the active site, they can be classified in heme and nonheme peroxidases. Most peroxidases are heme containing enzymes catalyzing the oxidation of diverse substrates in the presence of hydrogen peroxide ($H_2O_2$). Some of the heme peroxidase enzymes catalyze a two-electron oxidation of thiocyanate ($SCN^-$) or other halogen ions ($I^-$, $Cl^-$, $Br$) in the presence of $H_2O_2$ thereby generating intermediate reaction products such as hypothiocyanite ions ($OSCN^-$).

A heme peroxidase which is known to be part of a natural mammalian host defense system against pathogens is bovine lactoperoxidase (LpoPOX). Bovine lactoperoxidase has been employed as antimicrobial biocontrol agent, in for example medtech applications like in sterilization and/or agriculture and/or the cosmetics industry. Therefore, mammalian LpoPOX has been used as biocontrol agent in the past (as for example documented in WO 1997/026908 A1 and WO 1999/022597 A1) and it is therefore regarded as a "gold-standard" in the field. However, bovine lactoperoxidase as employed in such applications inherently exhibits hampered/low enzymatic activity, as reflected in its unfavorable high $K_M$ and/or low $k_{cat}$ and/or $v_{max}$ values which makes it thus prohibitively expensive, especially for large-scale applications. Due to its low enzymatic activity, bovine lactoperoxidase may be employed in the *in-situ* production of intermediate reaction products such as $OI^-$, $OBr$, $OSCN^-$. However, due to the rather unfavorable kinetics, such a production leads to a rather low concentration of such reaction products and is, thus, inefficient or even poor when used as e.g. biocontrol agent in an industrial and/or commercial setting. In addition, LpoPOX is currently obtained from milk and thus does not allow for animal free production (vegan), e.g. using bacterial fermentation.

Another heme peroxidase which has high similarity to bovine lactoperoxidases (LpoPOX) and which was identified from the cyanobacterium *Lyngbya* sp. PCC 8106 and termed LspPOX, showed only marginal if any improvements over LpoPOX when enzymatic activities were compared (Auer, J Biol Chem, 288, 2013). Furthermore, no antimicrobial use case of such a heme peroxidase has been presented or foreshadowed to date. Thus, LspPOX still has hampered enzymatic activity which prohibit its use as biocontrol agent and was (therefore) not suggested or foreshadowed to be useful for pathogen control.

LpoPOX is a glycosylated eukaryotic protein and about 10% of its molecular mass correspond to the carbohydrate part. Because of the specific enzyme structure, its recombinant production is not straightforward. In the past, recombinant expression of the bovine LpoPOX was intended in Chinese hamster ovary (CHO) cells and in engineered baculovirus/insect cell system, however, very low and industrially unsuitable quantities were obtained (Watanabe et al., DOI: 10.1016/s0014-5793(98)01595-6; Tanaka, Biosci Biotechnol Biochem, 67, 2003, DOI: 10.1271/bbb.67.2254). In contrast, recombinant expression of the bacterial peroxidase LspPOX was achieved in *E. coli.* (Auer, J Biol Chem, 288, 2013).

Thus, LpoPOX is particularly laborious/difficult to obtain and LspPOX does not achieve the desired high activity for a peroxidase to be useful as a biocontrol agent for pathogen control.

Therefore, it is desirable to find and to develop other environmentally friendly biocontrol agent alternatives that are less expensive (to produce) and that require less enzyme equivalent units than bovine lactoperoxidase (and/or LspPOX) in order to achieve the same/or even an enhanced enzymatic activity. In addition, it is desired that the amount of residual I⁻, Br or SCN⁻ions on the treated products is kept at minimum concentrations since otherwise a product containing a peroxidase would be designated an endocrine disruptor which would prohibit its commercial use. Furthermore, it is desired to produce peroxidases without the need for animals (vegan). Therefore, bacterial heme peroxidases that have lower $K_M$ values (high activity at low substrate concentrations) and/or that are suitable as, e.g. biocontrol agents, are particularly desired.

UniProt accession no. UPI000B9AD1D3 discloses a 659 amino acid protein from *Hydrocoleaum* sp. CS-953, which represents SEQ ID No. 1.

UniProt accession no. UPI00144C50F4 discloses a 659 amino acid protein from *Okeania* sp. SIO1F9. UniProt accession no. UPI0013BEBD13 discloses a 659 amino acid protein from *Okeania* sp. SIO2C9. UniProt accession no. UPI000F520AB0 discloses a 659 amino acid protein from *Okeania hirsuta, Okeania* sp. SIO1H2, or *Okeania* sp. SIO1H5, which represents SEQ ID No. 11.

UniProt accession no. UPI000BD5B84C discloses a 544 amino acid protein from *Hydrocoleum* sp. CS-953, which represents SEQ ID No. 26.

Accordingly, the technical problem underlying the present invention is the provision of a peroxidase for pathogen control which has improved capabilities (such as improved peroxidase activity and/or allowing improved production/purification) compared to the mammalian peroxidase gold standard in the field (LpoPOX) or compared to a recently defined bacterial peroxidase (LspPOX) that has merely shown marginal (if at all) improvements over the mammalian peroxidase gold standard.

The technical problem is solved by the embodiments and items as provided herein and as specifically provided in the appended claims.

The present invention relates to a non-therapeutic method for preventing and/or controlling the growth and/or the spreading of a pathogen, said method comprising contacting the pathogen with one or more bacterial heme peroxidase as defined in SEQ ID NO: 1 (HydPOX), SEQ ID NO: 18 or 26 (HydPOXs), SEQ ID NO: 11 (OkePOX), or SEQ ID NO: 25 or 27 (OkePOXs), wherein said contacting of said pathogen with the bacterial heme peroxidase comprises the co-administration of said bacterial heme peroxidase with a reducing agent, and

(i) hydrogen peroxide and/or
(ii) a hydrogen-peroxide donor system;

in aqueous solution. In one embodiment said pathogen is in or on tissues of a plant preferably a crop. In one embodiment said said pathogen is selected from the group consisting of fungi, preferably moulds and yeasts, and bacteria, preferably pathogenic bacteria. In one embodiment the heme peroxidase has at least 10% , or preferably at least 30% increased peroxidase activity in the standard ABTS activity assay or thymol blue assay compared to bovine lactoperoxidase (LpoPOX) or LspPOX; or the substrate concentration at which half maximal velocity/half-saturation (K0.5) of the heme peroxidase is achieved is at least 5-fold lower, preferably at least 10-fold lower than that of bovine lactoperoxidase (LpoPOX) or LspPOX.

The invention also provides a non-therapeutic use of a composition comprising one or more bacterial heme peroxidase as defined in any one of SEQ ID NOs: 1, 18, 11, or 25-27 as a pesticide, wherein the composition further comprises a reducing agent and

(i) hydrogen peroxide and/or
(ii) a hydrogen-peroxide donor system

in aqueous solution. In one embodiment the heme peroxidase has at least 10% , or preferably at least 30% increased peroxidase activity in the standard ABTS activity assay or thymol blue assay compared to bovine lactoperoxidase (LpoPOX) or LspPOX; or
the substrate concentration at which half maximal velocity/half-saturation (K0.5) of the heme peroxidase is achieved is at least 5-fold lower, preferably at least 10-fold lower than that of bovine lactoperoxidase (LpoPOX) or LspPOX.

The invention also provides a composition comprising one or more bacterial heme peroxidase as defined in any one of SEQ ID NOs: 1, 18, 11, or 25-27,

a reducing agent, and

(i) hydrogen peroxide, and/or
(ii) a hydrogen-peroxide donor system,

in aqueous solution for use as a medicament. In one embodiment the heme peroxidase has at least 10% , or preferably at least 30% increased peroxidase activity in the standard ABTS activity assay or thymol blue assay compared to bovine lactoperoxidase (LpoPOX) or LspPOX; or
the substrate concentration at which half maximal velocity/half-saturation (K0.5) of the heme peroxidase is achieved is at least 5-fold lower, preferably at least 10-fold lower than that of bovine lactoperoxidase (LpoPOX) or LspPOX.

The invention also provides a composition comprising one or more bacterial heme peroxidase as defined in any one of SEQ ID NOs: 1, 18, 11, or 25-27,

a reducing agent, and

(i) hydrogen peroxide, and/or
(ii) a hydrogen-peroxide donor system,

in aqueous solution for use in the treatment of an infection with a pathogen in or on a human or animal body. In one embodiment said bacterial heme peroxidase is to be brought into contact with biological tissue of said human or animal, in particular with mucosae or with skin, in particular epidermal skin like scalp or facial skin. In one embodiment the heme peroxidase has at least 10% , or preferably at least 30% increased peroxidase activity in the standard ABTS activity assay or thymol blue assay compared to bovine lactoperoxidase (LpoPOX) or LspPOX; or
the substrate concentration at which half maximal velocity/half-saturation (K0.5) of the heme peroxidase is achieved is at least 5-fold lower, preferably at least 10-fold lower than that of bovine lactoperoxidase (LpoPOX) or LspPOX.

The invention also provides a bacterial heme peroxidase as defined in any one of SEQ ID NOs: 18, 25, or 27. In one embodiment the heme peroxidase has at least 10% , or preferably at least 30% increased peroxidase activity in the standard ABTS activity assay or thymol blue assay compared to bovine lactoperoxidase (LpoPOX) or LspPOX; or the substrate concentration at which half maximal velocity/half-saturation (K0.5) of the heme peroxidase is achieved is at least 5-fold lower, preferably at least 10-fold lower than that of bovine lactoperoxidase (LpoPOX) or LspPOX.

The invention also provides a method for producing one or more bacterial heme peroxidase as defined in any one of SEQ ID NOs: 18, 25 or 27 in an engineered Bacillus subtilis strain, preferably wherein said engineered Bacillus subtilis strain has reduced activity of one or more extracellular Bacillus subtilis protease(s). In one embodiment said reduced activity of one or more extracellular Bacillus subtilis protease(s) results from the stable knock-out, transient downregulation/repression and/or transient inhibition of said Bacillus subtilis protease(s) on the DNA, RNA and/or protein level, optionally wherein said one or more extracellular Bacillus subtilis protease(s) are selected from the group consisting of NprE, AprE, Epr, Bpr, Mpr, NprB, Vpr, and WprA.

The invention also provides a method for producing a pesticide composition comprising one or more heme peroxidase protein as defined in any one of SEQ ID NOs: 18, 25 or 27 in an engineered Bacillus subtilis strain, preferably wherein said engineered Bacillus subtilis strain has reduced activity of one or more extracellular Bacillus subtilis protease(s), optionally, wherein the method further comprises complementing the one or more heme peroxidase as defined in SEQ ID NOs: 18, 25 or 27 with a reducing agent and/or (i) hydrogen peroxide and/or (ii) a hydrogen-peroxide donor system, in aqueous solution. In one embodiment said reduced activity of one or more extracellular Bacillus subtilis protease(s) results from the stable knock-out, transient downregulation/repression and/or transient inhibition of said Bacillus subtilis protease(s) on the DNA, RNA and/or protein level, optionally wherein said one or more extracellular Bacillus subtilis protease(s) are selected from the group consisting of NprE, AprE, Epr, Bpr, Mpr, NprB, Vpr, and WprA.

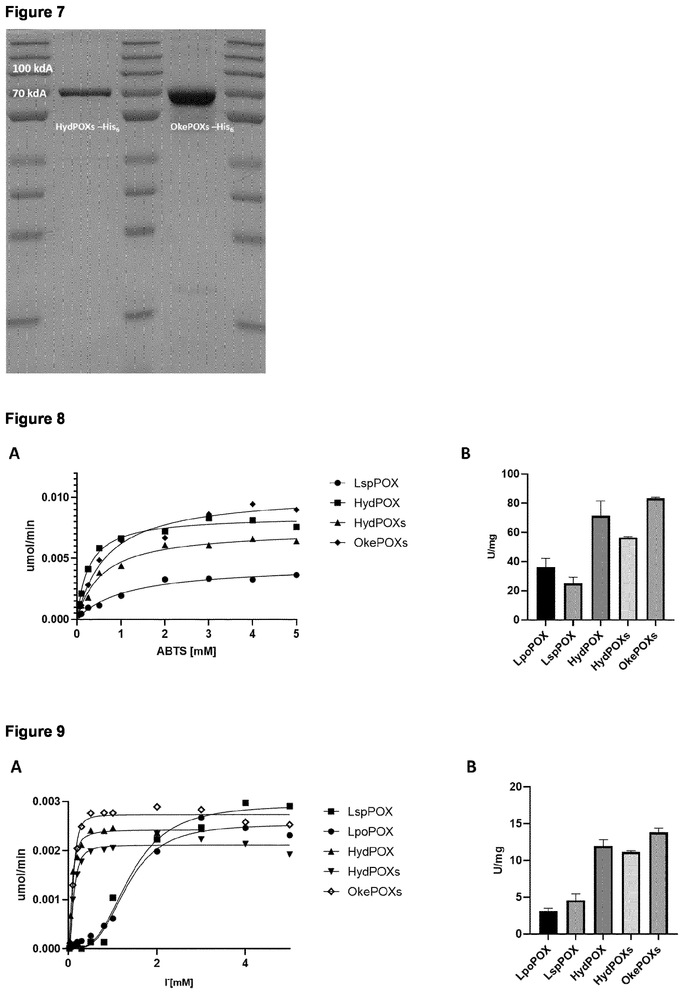

In elaborate studies, the present inventors have surprisingly found highly active (bacterial) heme peroxidases that have superior activity over known peroxidases, in particular over LpoPOX and/or LspPOX. In particular, as also illustrated in the appended examples, the (bacterial) heme peroxidases HydPOX, HydPOXs and OkePOXs as provided herein show a tremendously increased peroxidase activity over LpoPOX and LspPOX. As shown in Figure 8B and Table 5, HydPOX has 98% increased activity compared to LpoPOX and 184% increased activity compared to LspPOX. HydPOXs has 56% increased activity compared to LpoPOX and 125% increased activity compared to LspPOX. OkePOXs has 131% increased activity compared to LpoPOX and 232% increased activity compared to LspPOX. Thus all measured bacterial peroxidases show a tremendously increased peroxidase activity when compared to LpoPOX or LspPOX in the ABTS assay. In addition, as shown in Figure 9B and Table 7, HydPOX has 299% increased activity compared to LpoPOX and 161% increased activity compared to LspPOX. HydPOXs has 233% increased activity compared to LpoPOX and 143% increased activity compared to LspPOX. OkePOXs has 348% increased activity compared to LpoPOX and 202% increased activity compared to LspPOX. Thus all measured bacterial peroxidases show a tremendously increased peroxidase activity when compared to LpoPOX or LspPOX in the thymol blue assay. Further, as evident from Figure 9A, the HydPOX, HydPOXs and OkePOXs peroxidases show a dramatically increased activitiy at low substrate concentrations also indicated in the low $K_{0.5}$ values in Table 6. This improvement of the enzymatic activity translates into better pathogen control, because HydPOX, HydPOXs and OkePOXs generate higher *in-situ* concentrations of molecules such as OI⁻, OBr, OSCN⁻ which subsequently prevent and/or control bacteria. In a pathogen killing assay, the inventors have therefore also found, that the HydPOX, HydPOXs and OkePOXs enzymes can also prevent and/or control the growth of bacteria and fungi (Example 8, Table 2 and 3, and Example 16).

The inventors concluded from these surprising experimental data that (bacterial) heme peroxidases such as HydPOX, HydPOXs or OkePOXs constitute (less expensive) suitable biocontrol agents for preventing and/or controlling a pathogen. This is because they:

(i) have superior enzymatic activity compared to LpoPOX and/or LspPOX, since they generate higher *in-situ* concentrations of intermediate reaction products such as OI⁻, OBr, OSCN⁻ which the inventors have recognized directly translates into an enhanced pathogen killing activity;

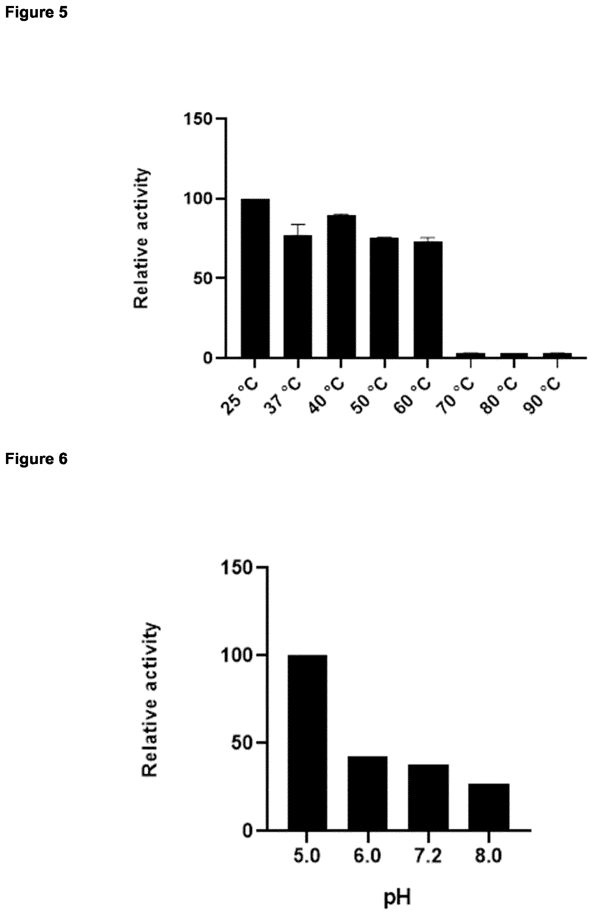

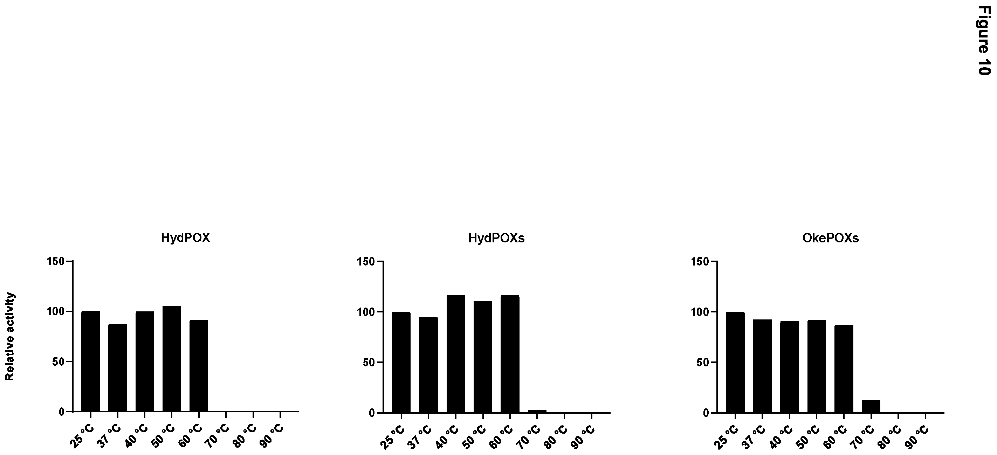

(ii) are stable over a wide temperature range which allows for the application to plants/crop/food on agricultural/farm land (approximately 10 °C - 50 °C) as well as to the human/animal body (approximately 37 °C) (see also Example 6 and Figure 5, and Example 14 and Figure 10);

(iii) due to their bacterial origin, they can be recombinantly produced in bacteria in quantitative amounts without the need of animals (vegan production). Since HydPOX, HydPOXs and OkePOXs have such a high enzymatic activity even at low substrate concentrations, its commercial application is furthermore less expensive since less enzyme equivalent units are required than for LpoPOX for example in order to achieve the same protective result (Figures 3B, 3.1B, 4B, 4.1B and in particular Figures 8 and 9);

(iv) show exceptionally high enzymatic activity at a low substate concentration, which allows to reduce the amount of iodide (I⁻), e.g. when used as a composition to treat plants in the field. This results in a lower contamination of the field with I⁻, which is desired (see Figure 9A).

It is envisioned that also the full-length fragment of OkePOX as defined in SEQ ID NO: 11 is able to achieve the above stated effects.

Accordingly, in one embodiment the present invention relates to a non-therapeutic method for preventing and/or controlling the growth and/or the spreading of a pathogen, said method comprising contacting the pathogen with one or more bacterial heme peroxidase as defined in SEQ ID NO: 1 (HydPOX), SEQ ID NO: 18 or 26 (HydPOXs), SEQ ID NO: 11 (OkePOX), or SEQ ID NO: 25 or 27 (OkePOXs),

wherein said contacting of said pathogen with the bacterial heme peroxidase comprises the co-administration of said bacterial heme peroxidase with a reducing agent, and

(i) hydrogen peroxide and/or
(ii) a hydrogen-peroxide donor system;

in aqueous solution.. In one embodiment, the invention relates to a method for preventing and/or controlling a pathogen on food or plants, said method comprising applying a sufficient amount of a (bacterial) heme peroxidase on said food or plants to reduce the number of cells of said pathogen. In one embodiment, the invention relates to a non-therapeutic use of a composition comprising one or more bacterial heme peroxidase as defined in any one of SEQ ID NOs: 1, 18, 11, or 25-27 as a pesticide, wherein the composition further comprises a reducing agent and

(i) hydrogen peroxide and/or
(ii) a hydrogen-peroxide donor system

in aqueous solution.. In a further embodiment, the invention relates to a composition comprising one or more bacterial heme peroxidase as defined in any one of SEQ ID NOs: 1, 18, 11, or 25-27,
a reducing agent, and

(i) hydrogen peroxide, and/or
(ii) a hydrogen-peroxide donor system,

in aqueous solution for use as a medicament.. In a further embodiment, the invention relates to a composition comprising one or more bacterial heme peroxidase as defined in any one of SEQ ID NOs: 1, 18, 11, or 25-27, a reducing agent, and

(i) hydrogen peroxide, and/or
(ii) a hydrogen-peroxide donor system,

in aqueous solution for use in the treatment of an infection with a pathogen in or on a human or animal body. In another embodiment, said bacterial heme peroxidase is to be brought into contact with mucosae, skin, in particular epidermal skin like scalp or facial skin and/or teeth to reduce the number of cells of said pathogen. In another embodiment, the present invention relates to a method for producing one or more bacterial heme peroxidase as defined in any one of SEQ ID NOs: 18, 25 or 27 in an engineered Bacillus subtilis strain, preferably wherein said engineered Bacillus subtilis strain has reduced activity of one or more extracellular Bacillus subtilis protease(s).. In one specific embodiment, said (bacterial) heme peroxidase may be of *Hydrocoleum sp.* or *Okeania sp.* cyanobacterial origin, preferably wherein said (bacterial) heme peroxidase may be a heme peroxidase of *Hydrocoleum sp.* or *Okeania sp.* as defined in SEQ ID NO: 1, and/or SEQ ID NO: 18, and/or SEQ ID NO: 11, and/or SEQ ID NO: 25-27 which may have at least 30% increased peroxidase activity in the standard ABTS activity assay compared to bovine lactoperoxidase or LspPOX. In another specific embodiment, said (bacterial) heme peroxidase may be of *Hydrocoleum sp.* or *Okeania sp.* cyanobacterial origin, preferably wherein said (bacterial) heme peroxidase may be a heme peroxidase of *Hydrocoleum sp.* or *Okeania sp.* as defined in SEQ ID NO: 1, and/or SEQ ID NO: 18, and/or SEQ ID NO: 11, and/or SEQ ID NO: 25-27 which may have at least 10% increased peroxidase activity in the standard ABTS activity assay compared to a reference lactoperoxidase, e.g. bovine lactoperoxidase (LpoPOX) or LspPOX. In one embodiment, the invention provides a (bacterial) heme peroxidase as defined in any one of SEQ ID NOs: 18, 25, or 27.

The term "preventing and/or controlling the growth and/or the spreading" of a pathogen in this context means that a (bacterial) heme peroxidase of the present invention may exert cytostatic and/or cytotoxic effects on a pathogen or a population of the same or different pathogens which consequently lead(s) to the impairment or abolishment of pathogen multiplication or the reduction of the number of (individual) pathogens compared to when the (bacterial) heme peroxidase was brought in contact with the pathogen or the population of pathogens. On a macroscopic level, preventing and/or controlling pathogen spreading may furthermore describe the containment of the spatial expansion of a pathogen or a population of the same or different pathogens on biological tissues or non-biological surfaces. For example, in case of plants, the (bacterial) heme peroxidase of the present invention may prevent the spreading from one single plant to (an) other plant(s) that may be different from said one single plant. Accordingly, the (bacterial) heme peroxidase of the present invention can be a pesticide or can be formulated into a pesticide composition. Agents that may exert the described effect of "preventing and/or controlling the growth and/or the spreading" of a pathogen may be termed "biocontrol agents" throughout this application. Biocontrol agents thus exert an "antimicrobial activity/effect".
In the place of "contacting of the pathogen" as described herein (or in addition thereto), the methods/uses can comprise "contacting the food or plant" with a (bacterial) heme peroxidase (or a composition comprising the same, e.g. a pesticide composition). For example, a food or plant can be contacted with the heme peroxidase. The pathogen may then get into contact with the heme peroxidase (or a composition comprising the same, e.g. a pesticide composition) that was applied to the food or plant.
As used herein "pesticide" can refer to the active agent(s) having pesticidal activity, such as the (bacterial) heme peroxidase of the present invention. A pesticide is preferably a substance having the ability to deter, retard the growth, incapacitate, kill, or otherwise discourage pests, such as pathogens. Pests in the sense of the present invention are preferably pathogens as described and defined herein. For example, a pest, may be selected from the group consisting of fungi, preferably moulds and yeasts, and bacteria, preferably pathogenic bacteria. Pests in particular relate to plant pathogens. In the sense of the invention, a pesticide preferably relates to a bactericide, microbicide and/or fungicide. The term "pesticide" as used herein can also refer to "a pesticide composition".
Accordingly, the invention provides in one aspect a non-therapeutic use of a composition comprising one or more bacterial heme peroxidase as defined in any one of SEQ ID NOs: 1, 18, 11, or 25-27 as a pesticide, wherein the composition further comprises a reducing agent and

(i) hydrogen peroxide and/or
(ii) a hydrogen-peroxide donor system

in aqueous solution.
In another aspect, the invention provides method for producing a pesticide composition comprising one or more heme peroxidase protein as defined in any one of SEQ ID NOs: 18, 25 or 27 in an engineered Bacillus subtilis strain, preferably wherein said engineered Bacillus subtilis strain has reduced activity of one or more extracellular Bacillus subtilis protease(s), optionally, wherein the method further comprises complementing the one or more heme peroxidase as defined in SEQ ID NOs: 18, 25 or 27 with a reducing agent and/or (i) hydrogen peroxide and/or (ii) a hydrogen-peroxide donor system, in aqueous solution.

In another aspect, the invention provides a pesticide composition comprising one or more bacterial heme peroxidase as defined in any one of SEQ ID NOs: 18, 25 or 27.

In another aspect, the invention provides a pesticide composition comprising one or more bacterial heme peroxidase as defined in any one of SEQ ID NOs: 18, 25 or 27.

The (bacterial) heme peroxidase which may be employed in the herein provided methods for preventing and/or controlling the growth and/or the spreading of a pathogen may be derived/obtained from *Hydrocoleum sp.* or *Okeania sp.* cyanobacterial origin. The (bacterial) heme peroxidase which may be employed in this method for preventing and/or controlling the growth and/or the spreading of a pathogen may be a heme peroxidase that is obtained and/or derived from cyanobacteria, in particular from *Hydrocoleum sp.* or *Okeania sp.* as defined in SEQ ID NO: 1 (HydPOX), SEQ ID NO: 18 or 26 (HydPOXs), SEQ ID NO: 11 (OkePOX), or SEQ ID NO: 25 or 27 (OkePOXs).

In context of this invention, the term "bacterial" relates to the biological origin of the herein used and employed heme peroxidase. For example, the preferred heme peroxidase to be employed in accordance with the present invention is the herein described heme peroxidase obtainable and/or derived from *Hydrocoleum sp.* which is a bacterium.


<u>SEQ ID NO: 1</u> (wildtype amino acid sequence of (bacterial) heme peroxidase from *Hydrocoleum sp.*; "HydPOX")

MDDNYENNNSIQQAFDFSENEQTLLSNINGLGVALDNDFYEIEATEGSLDIFVELTFNHNEGNLDLFLF
DSTGNEIASSNSLDDNEIIDFTVDKAGTYYIQVTSGDGTFSGNTYDLFWDDVIAENTFRTINGLNNNLQ
NPEFGSATEKGTRYTQLLRLGPEAYQDELSEPRGGGLTTPLELPSAREVSNAIADQGEQSIANDFKLS
DWFWQWGQFIDHDISLTEADTSGDSFPIPVPTGDPDFDPFGTGTQTIPLTRSIFDPATGTTNPREQINE
ITAFLDGSMVYGSDEATALSLRANDGTGKLATSIGPDGEILLPTDSDGNFLAGDIRVNEQLGLISVHTLF
VREHNRLAQKTADVLDNGKGRKANKLNELFEESGLSRGDFIYESARRLVGAEIQTITYNEFLPFLLGKN
VLDKYTGYDETVDPGIFTEFSTGVFRFGHTMLSPQLLQVEEDGSYEAVALRDAFFQPGKIMEDGVDSL
LKGLESQQAQEVDNLLIDDVRNFLFGRPGAGGFDLASLNIQRGRENGVADINTFRNAIGLSPYTDFDE
LTGGDSELAAKFASVYDSIDDVDLWIGGLAEQDVNGGVVGETISAIIIEQFSNLRDGDRFYFENDQYLK
ELKGILDKNIDKVSLANIIEDNSDVQIVGSAFTVNNPIVV

SEQ ID NO: 1 corresponds to NCBI Reference Sequence WP_094674510.1 and represents the unmodified wildtype amino acid sequence of the preferred cyanobacterial heme peroxidase of the present invention. For ease of reference, whenever a protein sequence comprises SEQ ID NO: 1 with or without the initial methionine, this cyanobacterial heme peroxidase protein will be referred to as "HydPOX" wherever appropriate in this application.

In means and methods disclosed herein but not claimed, not only full-length peroxidase(s) as disclosed and provided herein may be employed and/or used but also functional fragments of the herein described and disclosed peroxidase(s). A functional fragment of such a peroxidase may comprise or consist of at least about 10%, at least about 20%, at least about 30%, at least about 40%, at least about 50%, at least about 60%, at least about 70%, at least about 75%, at least about 80%, at least about 82%, at least about 85%, at least about 90% or at least about 95% amino acids of the sequences for the peroxidases as disclosed herein and is capable of the herein described favorable peroxidase activity. In this context, it is envisaged that the "X %" refers to a stretch of contiguous amino acids of the herein peroxidases, e.g. if a full-length peroxidase was 100 amino acids in length a fragment comprising 75 % thereof would comprise or consist of a contiguous amino acid stretch of 75 amino acids of the full-length amino acid sequence of the peroxidase. In addition, such a fragment can comprise other amino acid residues not present in the full-length peroxidase, e.g. amino acid residues attached to the N-terminal and/or C-terminus which are not present in the full-length peroxidase. For example, a fragment comprising a contiguous amino acid stretch of 75 amino acids of the full-length amino acid sequence of the peroxidase can comprise at the N-terminus and/or the C-terminus one or more amino acids which are not present at the corresponding positions of the full-length sequence of the peroxidase. Preferably, said functional fragment comprises about the same enzymatic activity as the full-length peroxidase as provided and described herein. Enzymatic activity, in particular peroxidase activity, may be measured by assays/tests that are known to the skilled artisan like, *inter alia,* the herein described ABTS and thymol blue assay as is also evident from the appended examples. About the same enzymatic activity as employed herein means an activity that is +/- 5 %, +/- 10% of the activity of the herein provided bacterial heme peroxidases.

According to the invention, certain specific functional fragments of full length peroxidases may be used.

One exemplary functional fragment of SEQ ID NO: 1 is e.g. provided in SEQ ID NO: 18. SEQ ID NO: 18 corresponds to SEQ ID NO: 1 but is missing amino acids 1 to 116 of SEQ ID NO: 1. Therefore, the functional fragment which is defined in SEQ ID NO: 18 represents the amino acid sequence from position 117 to position 659 of SEQ ID NO: 1. As is evident by comparison from SEQ ID NO: 1 and SEQ ID NO: 18, SEQ ID NO: 18 shares 543 consecutive amino acids with SEQ ID NO: 1. Therefore, the amino acid sequence of the functional fragment as defined in SEQ ID NO: 18 may be about 82% identical to SEQ ID NO: 1.

In certain aspects, it may be necessary that the functional fragment as defined in SEQ ID NO: 18 may be preceded by a methionine immediately at the N-terminus of the functional fragment.

SEQ ID NO: 18 (functional fragment of HydPOX as defined in SEQ ID NO: 1; this amino acid sequence only comprises amino acids 117 to 659 of SEQ ID NO: 1; amino acid sequence of HydPOX peroxidase without proregion - HydPOXs

FWDDVIAENTFRTINGLNNNLQNPEFGSATEKGTRYTQLLRLGPEAYQDELSEPRGGGLTTPLELPSA
REVSNAIADQGEQSIANDFKLSDWFWQWGQFIDHDISLTEADTSGDSFPIPVPTGDPDFDPFGTGTQT
IPLTRSIFDPATGTTNPREQINEITAFLDGSMVYGSDEATALSLRANDGTGKLATSIGPDGEILLPTDSD
GNFLAGDIRVNEQLGLISVHTLFVREHNRLAQKTADVLDNGKGRKANKLNELFEESGLSRGDFIYESA
RRLVGAEIQTITYNEFLPFLLGKNVLDKYTGYDETVDPGIFTEFSTGVFRFGHTMLSPQLLQVEEDGSY
EAVALRDAFFQPGKIMEDGVDSLLKGLESQQAQEVDNLLIDDVRNFLFGRPGAGGFDLASLNIQRGRE
NGVADINTFRNAIGLSPYTDFDELTGGDSELAAKFASVYDSIDDVDLWIGGLAEQDVNGGVVGETISAII
IEQFSNLRDGDRFYFENDQYLKELKGILDKNIDKVSLANIIEDNSDVQIVGSAFTVNNPIVV

One exemplary functional fragment of SEQ ID NO: 11 is defined in SEQ ID NO: 25 and represents the amino acid sequence from position 117 to position 659 of SEQ ID NO: 11. As is evident by comparison from SEQ ID NO: 11 and SEQ ID NO: 25, SEQ ID NO: 25 shares 543 consecutive amino acids with SEQ ID NO: 11. Therefore, the amino acid sequence of the functional fragment as defined in SEQ ID NO: 25 may be about 82% identical to SEQ ID NO: 11.

In certain aspects, it may be envisaged that the functional fragment as defined in SEQ ID NO: 25 may be preceded by a methionine immediately at the N-terminus of the functional fragment.

SEQ ID NO: 11 discloses a heme peroxidase from *Okeania hirsuta* (wildtype amino acid sequence of the corresponding bacterial heme peroxidase is defined in SEQ ID NO: 11 and a fragment thereof as defined in SEQ ID NOs: 25 or 27). These two exemplary (bacterial) heme peroxidases which may also be employed in preventing and/or controlling a pathogen share a 90.4% (bacterial peroxidase from *Okeania sp. SIO2C9*) and 91.8% (bacterial peroxidase from *Okeania hirsuta*) amino acid sequence homology with HydPOX as defined in SEQ ID NO: 1.

<u>SEQ ID NO: 11</u> (wildtype amino acid sequence of bacterial heme peroxidase from *Okeania*

*hirsuta*)

MDDNYEKNNRIQQAFDFSENEQTLLSDINGLGVALDDDLYKIEATEGSLDIFVELTFNHNEGNLDLFLL

DSTGNEIASSDSLDDNEIIDFTVDKAGTYYIQVTSGDGTFSGNTYDLLWDDVIGENTFRTINGLNNNLQ
NPEFGSATEKGTRYTQLLRLGPEAYEDGLSEPRGGGLTTPLELPSARAVSNAIADQGEESIVNDFKLS
DWFWQWGQFIDHDIDLTEADSSGDSFPIQVPTGDPDFDPFGTGTQTIPLTRSIFDPATGTTNPREQIN
EITAFLDGSMVYGSDEATALSLRADDGTGKLATSIGPDGEILLPTDSDGNFLAGDIRVNEQLGLISVHTL
FVREHNRLADEITDVLDNGNGSKADKLNELFEESGLSRGDFIYESARRLVGAKIQTITYNEFLPLLLGKD
ALGEYTGYDETLEPGIFTEFSTGVFRFGHTMLSPQLLQVEEDGSYEAVALRDAFFQPSKIMEDGVDSL
LKGLESQQAQAVDNFLIDDVRNFLFGPPGAGGFDLASLNIQRGRENGVADINTVRNAIGLSSYTDFDE
LTGGNSELAAKFASVYDSIDDVDLWIGGLAEQDINGGVVGETISAIIIKQFTNLRDGDRFYVKNDPYLKE
LEGIIDKNLDNVSLADIIEDNSDVKIVASAFTVNNPIVV

In one embodiment, the nucleotide sequence of a (bacterial) heme peroxidase or a functional fragment thereof which may be employed for preventing and/or controlling the growth and/or the spreading of a pathogen may be codon-optimized for recombinant protein expression in bacteria or mammalian cells, preferably wherein the nucleotide sequence of said (bacterial) heme peroxidase may be codon-optimized for recombinant protein expression in bacteria, more preferably wherein the nucleotide sequence of said (bacterial) heme peroxidase may be codon-optimized for recombinant protein expression in *Bacillus,* most preferably wherein the nucleotide sequence of said (bacterial) heme peroxidase may be codon-optimized for recombinant protein expression in *Bacillus subtilis.*

Therefore, while the wildtype nucleotide sequence of the preferred (bacterial) heme peroxidase that corresponds to SEQ ID NO: 1 is defined and illustrated in SEQ ID NO: 8 below, various codons may be replaced by synonymous codons (i.e., codons that encode for the same amino acid but may be more frequently used in a given host such as *Bacillus subtilis)* in the codon-optimized nucleotide sequence as defined and illustrated in SEQ ID NO: 9. Additionally, the nucleic acid encoding the preferred peroxidases as defined in SEQ ID NO: 1, and/or SEQ ID NO: 18, and/or SEQ ID NO: 11, and/or SEQ ID NO: 25-27 can be codon optimized for recombinant expression, e.g. in *Bacillus subtilis.* Exemplary codon optimized nucleic acid sequences are provided in SEQ ID NOs: 2, 9, 19, 21 and 24.

SEQ ID NO: 8 (wildtype nucleotide sequence excluding stop-codon of the bacterial heme peroxidase from *Hydro-coleum sp.*)

ATGGACGATAATTACGAAAACAATAATAGTATCCAACAAGCTTTTGATTTTTCAGAGAATGAACAG
ACTCTTCTGAGCAACATTAATGGGCTGGGAGTTGCTTTAGATAATGACTTTTATGAAATTGAAGCC
ACAGAAGGCTCTTTAGATATCTTTGTCGAGTTAACCTTTAACCATAATGAAGGAAATCTTGATTTAT
TTCTCTTTGATTCAACAGGAAATGAAATTGCCTCTTCAAATTCTCTAGATGATAATGAAATAATTGA
TTTTACTGTTGACAAAGCAGGAACTTATTATATCCAAGTTACTTCAGGGGATGGTACTTTTTCAGG
GAATACCTATGATTTGTTCTGGGATGATGTTATTGCCGAAAATACCTTTCGCACTATTAATGGTTTA
AATAATAATCTTCAAAACCCTGAATTTGGTAGTGCAACAGAAAAAGGCACTCGATACACTCAATTA
TTACGCTTAGGTCCTGAAGCTTACCAAGATGAATTATCTGAACCAAGAGGTGGTGGACTAACTAC
GCCCCTTGAACTTCCTAGTGCGCGGGAAGTCAGTAATGCGATCGCCGATCAAGGAGAACAATCT
ATTGCCAACGACTTTAAACTTTCTGACTGGTTTTGGCAGTGGGGACAATTTATCGATCATGACATC
AGTTTAACAGAAGCCGACACTTCAGGGGACTCATTTCCTATTCCAGTTCCTACAGGCGATCCAGA
TTTTGATCCTTTTGGCACAGGAACTCAAACCATACCCTTAACTCGTTCTATTTTCGATCCTGCCAC
CGGAACCACAAACCCCCGTGAACAGATTAACGAAATTACAGCGTTTCTTGATGGTTCTATGGTTTA
TGGTTCCGATGAAGCAACGGCCCTTTCTTTGCGAGCTAATGATGGCACTGGAAAACTAGCCACCA
GCATCGGTCCTGATGGGGAGATTTTACTGCCTACTGATAGTGATGGTAACTTTCTTGCCGGGGAT
ATCCGTGTTAATGAACAATTAGGCTTAATTTCTGTTCACACCCTTTTTGTTAGAGAACATAACCGCT
TGGCACAAAAAACTGCTGATGTTTTAGACAATGGGAAGGGAAGAAAAGCAAACAAACTGAATGAA
CTGTTTGAAGAGTCTGGGTTAAGTCGTGGTGACTTTATCTATGAATCAGCCCGCCGTTTAGTTGG
GGCAGAAATTCAGACCATTACCTATAATGAATTTTTACCCTTCCTCTTAGGAAAGAATGTTCTTGAT
AAGTATACGGGTTATGATGAAACCGTCGATCCTGGTATTTTCACTGAATTCTCCACTGGTGTTTTC
CGCTTTGGTCATACCATGCTTTCTCCTCAACTCTTACAAGTGGAAGAGGATGGAAGCTATGAAGC
GGTTGCTCTACGGGATGCTTTCTTTCAACCTGGCAAAATTATGGAGGATGGAGTTGATTCTTTATT
GAAAGGGTTAGAATCCCAACAAGCCCAAGAAGTTGATAATTTACTGATTGATGATGTTCGTAACTT
CTTGTTTGGTCGTCCTGGGGCTGGTGGTTTTGACTTAGCCTCTCTTAATATTCAACGGGGACGGG
AGAATGGTGTAGCTGATATTAATACATTTCGTAATGCTATCGGTTTATCGCCTTATACAGACTTTGA
TGAATTAACAGGAGGAGACAGCGAGCTTGCTGCTAAATTTGCATCGGTGTATGATTCCATTGATG
ATGTGGATCTTTGGATTGGTGGATTAGCCGAACAGGATGTTAATGGTGGAGTGGTTGGTGAGACA
ATTAGTGCCATCATTATCGAGCAATTTAGTAATTTACGGGATGGCGATCGCTTTTATTTTGAAAAC
GATCAGTATCTCAAGGAACTTAAAGGCATTCTTGATAAGAATATTGATAAGGTTAGTCTCGCTAAT
ATTATCGAAGATAACTCTGATGTTCAAATTGTGGGTAGTGCATTTACAGTCAATAATCCCATAGTT
GTT

SEQ ID NO: 9 (codon-optimized nucleotide sequence excluding stop-codon of the bacterial heme peroxidase HydPOX from *Hydrocoleum sp.* for expression in *Bacillus subtilis)*

ATGGATGATAATTACGAAAACAATAATTCCATTCAGCAGGCGTTTGATTTTAGCGAGAATGAACAA
ACGCTTCTTTCCAATATTAATGGGCTTGGCGTTGCCCTTGATAACGATTTTTATGAAATTGAAGCG
ACAGAAGGCAGTCTGGATATTTTTGTCGAATTAACATTTAACCATAATGAGGGAAACCTTGATCTT
TTTCTTTTCGATTCGACAGGCAACGAAATTGCCTCATCTAACAGTCTCGATGACAATGAAATTATT
GACTTTACTGTAGACAAGGCCGGCACATATTATATTCAAGTGACGAGCGGGGATGGCACGTTTTC
GGGCAACACATATGATCTGTTCTGGGATGACGTGATCGCAGAAAATACATTTCGTACGATTAACG
GACTTAATAACAATTTGCAAAATCCCGAATTTGGATCAGCGACCGAGAAAGGTACCAGGTATACA

CAACTACTTAGACTTGGACCAGAAGCTTATCAGGATGAACTGAGCGAACCGCGCGGAGGTGGCT
TAACCACACCCCTGGAGTTGCCGTCTGCCCGAGAGGTGTCTAACGCTATCGCCGATCAGGGCGA
ACAATCCATCGCGAACGATTTTAAATTGTCAGATTGGTTCTGGCAATGGGGACAGTTTATTGATCA
CGACATCAGCCTCACAGAAGCGGATACCTCAGGTGATTCCTTTCCGATCCCAGTTCCGACAGGT
GACCCGGATTTCGATCCATTCGGTACTGGAACGCAGACAATCCCGTTGACTCGCTCAATTTTTGA
TCCTGCTACAGGTACAACAAACCCTCGTGAACAGATTAACGAGATAACGGCTTTCTTGGATGGTT
CCATGGTATACGGCAGCGACGAAGCAACAGCACTGAGCCTTAGAGCGAATGATGGCACTGGAAA
ATTGGCAACATCTATCGGCCCGGATGGGGAAATTCTGCTCCCGACAGACTCTGATGGGAATTTTT
TGGCAGGTGATATTAGAGTTAACGAACAACTAGGTTTAATCTCAGTACATACATTGTTTGTTCGGG
AACACAATAGACTGGCGCAAAAACCGCGGACGTCTTAGATAACGGCAAAGGGCGAAAGGCCAA
CAAACTTAATGAACTGTTCGAAGAATCAGGCTTGAGCCGAGGAGATTTTATCTACGAATCAGCTA
GGCGTCTGGTTGGAGCGGAAATTCAAACAATCACATATAACGAATTTCTTCCTTTTCTTTTAGGGA
AAAATGTCCTCGATAAGTACACAGGGTACGACGAAACGGTCGATCCTGGCATATTCACAGAATTT
AGCACAGGCGTTTTTCGATTTGGGCATACGATGTTATCACCACAGCTGTTACAAGTGGAGGAAGA
TGGCTCGTATGAAGCAGTTGCTTTAAGAGATGCTTTTTTTCAGCCAGGCAAAATTATGGAAGATGG
GGTTGATTCACTCCTGAAAGGACTGGAGAGCCAACAGGCACAAGAAGTGGACAATCTTCTGATTG
ACGACGTTAGAAACTTCTTATTTGGGCGGCCAGGAGCGGGAGGGTTCGACTTAGCATCCTTGAAT
ATACAACGCGGGCGCGAGAATGGAGTTGCAGATATTAACACGTTTAGAAACGCCATCGGTCTTAG
CCCGTATACAGATTTCGATGAGCTTACCGGAGGAGATTCAGAATTGGCAGCGAAATTCGCTTCCG
TCTATGATTCGATTGATGATGTAGACTTGTGGATAGGAGGCCTTGCTGAACAGGATGTAAATGGC
GGTGTTGTGGGGGAAACAATCTCAGCCATTATTCGAACAATTTAGCAATCTCCGCGACGGCGA
CCGTTTCTATTTCGAAATGATCAATACCTTAAAGAGTTAAAGGGAATTCTTGATAAAAACATTGAT
AAAGTTAGCCTCGCTAACATCATTGAAGATAACTCCGATGTGCAAATTGTGGGGTCCGCGTTCAC
AGTCAACAATCCGATTGTAGTG

Therefore, codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase or a functional fragment thereof with synonymous codons that lead to increased levels of RNA-transcription in *Bacillus,* preferably wherein the codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase or a functional fragment thereof with synonymous codons that lead to increased levels of RNA-transcription in *Bacillus subtilis.* A person skilled in the art is aware of means and methods to perform such a codon-optimization.

The (bacterial) heme peroxidase or (a) functional fragment(s) thereof which may be employed for preventing and/or controlling the growth and/or the spreading of a pathogen may be recombinantly or stably expressed by bacteria or mammalian cells. It may be preferred that the (bacterial) heme peroxidase/functional fragments thereof may be recombinantly expressed by bacteria, preferably by *Bacillus,* more preferably by *Bacillus subtilis.* Recombinant protein production of the bacterial heme peroxidase/functional fragments thereof may involve the secretion of the bacterial heme peroxidase into the bacterial expression culture supernatant, periplasmic or cytoplasmic protein expression, wherein the secretion of the bacterial heme peroxidase or (a) functional fragment(s) thereof into the bacterial expression culture supernatant may be preferred.

The bacterial heme peroxidase and/or the functional fragment(s) thereof which may be employed in preventing and/or controlling the growth and/or the spreading of a pathogen may comprise a N- and/or C-terminally linked signal peptide, purification tag and/or a protease cleavage site. Exemplary non-limiting signal peptides which may be used may be derived/obtained and selected from the group consisting of a signal peptide of the extracellular *Bacillus subtilis* protease nprE, a signal peptide of spA, phoA, ribose binding protein, pelB, ompA, ompT, dsbA, torA, torT, tolT, or signal peptides from the TAT secretion pathway in bacteria. Non-limiting (epitope) tags or purification tags which may be used may be selected from the group consisting of His$_6$-tag, glutathione S-transferase (GST), maltose binding protein (MBP), calmodulin binding peptide (CBP), intein-chitin binding domain (intein-CBD) tag, streptavidin, (Twin) Strep-tag (I/II), flag-tag, HA-tag, c-myc tag, V5-tag, T7-tag, NE-tag, HaloTag, SUMO-tag. (Epitope) tags or purification tags may be detected with detection reagents such as detectable monoclonal or polyclonal antibodies/antibody-conjugates in applications such as Western blotting for example. The (bacterial) heme peroxidase may further be linked to detectable reporter tags such as β-galactosidase (β-gal), alkaline phosphatase (AP), chloramphenicol acetyl transferase (CAT), and horseradish peroxidase (HRP) or fluorescent reporter proteins such as (e)GFP, (e)CFP, (e)BFP, (e)YFP, (e)RFP, mCherry, mRuby or mOrange. Non-limiting protease cleavage sites that may be used comprise cleavage sites of proteases selected from the group consisting of TEV-protease, enteropeptidase, thrombin, factor Xa, rhinovirus 3C protease, carboxypeptidase A, carboxypeptidase B, DAPase. "N- and/or C-terminally linked" in the context of a (bacterial) heme peroxidase may be understood to mean that a signal peptide, purification tag and/or protease cleavage site may be genetically fused in-frame with the 5' and/or 3' end of the coding sequence of the (bacterial) heme peroxidase. In instances where a signal peptide, purification tag, protease cleavage site, and/or fluorescent reporter protein which already encode an initial methionine may be fused to the 5' end of the (bacterial) heme peroxidase, the initial methionine of the (bacterial) heme peroxidase may be removed.

The (bacterial) heme peroxidase and/or (a) functional fragment(s) thereof which may be employed for preventing and/or controlling the growth and/or the spreading of a pathogen may not comprise a N- and/or C-terminally linked signal peptide, purification tag and/or a protease cleavage site.

In a preferred embodiment, the (bacterial) heme peroxidase and/or (the) functional fragment(s) thereof which may be employed for preventing and/or controlling the growth and/or the spreading of a pathogen may comprise a signal peptide, preferably a signal peptide of an extracellular *Bacillus subtilis* protease, and a $His_6$-tag.

The (bacterial) heme peroxidase/functional fragment(s) thereof may be purified from bacterial expression culture supernatant or may at least be separated from the bacterial cell mass. The skilled person is aware of means and methods to purify the (bacterial) heme peroxidase from the bacterial expression culture supernatant. Exemplary purification workflows are well known in the art and may involve the centrifugation of the bacterial expression culture at about 5,000 g to about 18,000 g for about 5 to about 45 minutes to separate the bacterial cell mass from the bacterial expression culture supernatant. The bacterial expression culture supernatant may optionally be sterile filtrated. The (bacterial) heme peroxidase may subsequently be purified from the sterile filtrated bacterial expression culture supernatant by one or more purification methods which may be selected from the group consisting of immobilized metal affinity chromatography (IMAC), ion-exchange chromatography, affinity-chromatography, size-exclusion chromatography, gel filtration chromatography. In one embodiment, the (bacterial) heme peroxidase may comprise a $His_6$-tag for purification via immobilized metal affinity chromatography. The purified (bacterial) heme peroxidase may be dialyzed against an appropriate diluent, such as standard phosphate buffered saline, concentrated and snap-frozen in liquid nitrogen. In some aspects, the purified (bacterial) heme peroxidase may be lyophilized using standard dry freezing protocols.

In one embodiment of the present method, the contacting of the pathogen with the (bacterial) heme peroxidase or (a) functional fragment(s) thereof which may be employed in this method comprises the co-administration of said (bacterial) heme peroxidase or (a) functional fragment(s) thereof with a reducing agent and/or

(i) hydrogen peroxide and/or
(ii) a hydrogen-peroxide donor system;

in aqueous solution.

Thus, a (bacterial) heme peroxidase/functional fragment(s) thereof of the present invention may be co-administered (to a pathogen/biological tissue/non-biological surface) with a reducing agent; and (i) a hydrogen peroxide and/or (ii) a hydrogen-peroxide donor system in aqueous solution. In a preferred embodiment, a (bacterial) heme peroxidase of the present invention may be co-administered (to a pathogen/biological tissue/non-biological surface) with a reducing agent and (i) hydrogen peroxide and/or (ii) a hydrogen-peroxide donor system in aqueous solution. In an even more preferred embodiment, a (bacterial) heme peroxidase of the present invention may be co-administered (to a pathogen/biological tissue/non-biological surface) with a reducing agent and either (i) hydrogen peroxide or (ii) a hydrogen-peroxide donor system in aqueous solution. As is also evident from Example 8, a (bacterial) heme peroxidase of the present invention may be co-administered (to a pathogen/biological tissue/non-biological surface) with a reducing agent such as iodide and hydrogen peroxide (i.e. its substrate) in aqueous solution. However, since its substrate (being hydrogen peroxide) is an unstable molecule, it may be preferred that a (bacterial) heme peroxidase of the present invention may be co-administered (to a pathogen/biological tissue/non-biological surface) with a reducing agent and a hydrogen-peroxide donor system in aqueous solution.

Thus, a system comprising the (bacterial) heme peroxidase/functional fragment(s) thereof which may be employed in a method for preventing and/or controlling the growth and/or the spreading of a pathogen, may be regarded as at least a two-component system. However, as described above, it may be preferred that the system comprising the (bacterial) heme peroxidase which may be employed in a method for preventing and/or controlling the growth and/or the spreading of a pathogen, may be a three-component system comprising the (bacterial) heme peroxidase of the present invention, a reducing agent and hydrogen peroxide or a hydrogen-peroxide donor system in aqueous solution.

An aqueous solution, i.e. a water-based solution, may be necessary for the (bacterial) heme peroxidase or (a) functional fragment(s) thereof to exert its antimicrobial effect. However, it may not be necessary that a system comprising the (bacterial) heme peroxidase together with a reducing agent and/or (i) hydrogen peroxide and/or (ii) a hydrogen-peroxide donor system may be formulated as an aqueous solution. In one embodiment, the addition of water to these components which may be formulated as a powder, paste, ointment etc may give the (bacterial) heme peroxidase its ability to exert its antimicrobial effect while simultaneously ensuring an extended shelf life (since no enzymatic reaction may occur prior to the addition of water and thus no reaction components may be consumed). In certain aspects, when a (bacterial) heme peroxidase of the present invention may be contained in a paste such as a toothpaste for example, contacting the toothpaste to saliva may be sufficient to provide an aqueous solution, i.e. to give the (bacterial) heme peroxidase its ability to exert its antimicrobial effect.

Reducing agents in the context of this invention may be agents that (can) reduce other agents. In other words, a reducing agent is a chemical species that may "donate" (an) electron(s) to an electron recipient (which is called an oxidizing agent). Suitable reducing agents in the context of this invention may be selected from the group consisting of iodide (I⁻), bromide (Br⁻) or thiocyanate (SCN⁻). As is also evident from the appended Examples, in particular Example 5 and 8, iodide (I-) may preferably be used as reducing agent. Without being limiting, a corresponding salt which may be used as reducing agent may *inter alia* be kaliumiodide (KI) for example.

Since hydrogen peroxide is an unstable molecule, it may be preferred that a (bacterial) heme peroxidase or (a) functional fragment(s) thereof of the present invention may be co-administered (to a pathogen/biological tissue/non-biological surface) with a reducing agent and a hydrogen-peroxide donor system (instead of hydrogen peroxide itself) in aqueous solution which ensures the indirect hydrogen peroxide substrate supply via sugar oxidation. A suitable hydrogen-peroxide donor system preferably comprises an oxidase and a corresponding sugar substrate which the oxidase is specific for. Exemplary preferred hydrogen-peroxide donor systems, without being limiting, may comprise, *inter alia,* glucose oxidase/glucose or galactose oxidase/galactose. As an alternative hydrogen-peroxide donor system that may not be based on an oxidase or a corresponding sugar substrate, sodium percarbonate or stabilized hydrogen peroxide may be used.

In one embodiment, a (bacterial) heme peroxidase or (a) functional fragment(s) thereof of the present invention may be co-formulated with at least one further agent. In other words, a (bacterial) heme peroxidase, a reducing agent and/or (i) hydrogen peroxide and/or (ii) a hydrogen-peroxide donor system in aqueous solution may preferably be co-formulated with at least one further agent. The at least one further agent may be selected from the group consisting of oils, spreading agents, emulsifiers, ionic compounds, sugars, inorganic compounds, organic compounds, non-ionic compounds, amino acids, peptides, lipids, and/or proteins.

In one embodiment, the pathogen may be in or on a biological tissue or in or on a nonbiological surface. In accordance with the present invention, said biological tissue may be a tissue of a living organism, preferably an animal, more preferably a mammal, or preferably a tissue of a plant, preferably a crop. Plants in the context of the present invention may be fruit bearing/fruit producing plants and plants that do not produce fruits, wherein fruits may in particular also comprise nuts.

However, as indicated above, the pathogen may also be in or on a nonbiological surface. Nonbiological surfaces in this context without being limiting may, *inter alia,* comprise (medical) equipment, prostheses, implant(s), bedding, furniture, walls, floors, or combinations thereof. Accordingly, the (bacterial) heme peroxidase or (a) functional fragment(s) thereof may be used in a (non-medical) method of disinfecting or sterilizing a nonbiological surface such as an implant for example, before the implant may be introduced into a patient in need thereof.

The term "animal" in this context comprises all sorts of animals, in particular mammals like dogs, cats, rabbits, horses, cattle, sheep, goats, pigs, llama, alpaca and the like. However, also fish may be envisaged.

In accordance with this invention, pathogens may be selected from the group consisting of fungi, preferably moulds and yeasts, and bacteria, preferably pathogenic bacteria. Pathogens in particular comprise human, animal and plant pathogens.

In accordance with this invention, pathogens may, *inter alia,* be fungi or pathogenic bacteria as is also evident from the appended Examples, in particular Example 8.

For non-medical uses, fungi may preferably be selected from moulds and yeasts. Such fungi without being limiting, may, *inter alia,* be selected from the group consisting of *Botryotinia* spp ("grey moulds"), such as for instance *B. fuckeliana* (anamorphic *Botrytis cinerea*), *Didymella* spp, such as for instance *D. bryonia* (= *Mycospherella* in *Cucurbitaceae*), *D. lycopersici* (= cancer in tomato), *Puccunia* spp ("rusts"), such as for instance *P. horiana* (= Japanese rust), *Sphaerotheca* spp ("true mildew"), such as for instance *S. fuliginea* (mildew in cucumber) and *S. pannose* (mildew in rose), *Erysiphe* spp, *Oidium* spp and *Leveillula Taurica* (also true mildew types), *Fusarium* spp ("foot rot and/or wilt disease"), *Phytophtora* spp ("foot and/or root disease), such as *Phytophthora infestans, Pythium* spp ("foot disease"), *Plasmopara, Peronospora,* and *Sclerospora* spp (the downy mildew types), *Rhizoctonia, Verticillium* and *Sclerotinia* spp (causes of spot), *Rhizopus* and *Penicillium* spp (causes of (storage) rot) and *Venturia* spp (causes of scab). Fungi may additionally be selected from the group consisting of: *Colletotrichum gloeosporioides, Penicillium expansum, Penicillium digitatum, Penicillium italicum, Geotrichum citri-aurantii, Zymoseptoria tritici, Phytophthora infestans* and *Puccinia triticina.*

For medical uses, fungi, without being limiting, may preferably be selected from the group consisting of *Candida, Cladosporium, Aspergillus, Fusarium, Glomus, Alternaria, Penicillium, Cryptococcus and* fungi that infect the lung.

Pathogenic bacteria in the context of non-medical uses may, *inter alia,* be selected from the group consisting of *Erwinia amylovora, Erwinia chrysanthemi, Pseudomonas syringae, Xanthomonas campestris, Curtobactrium flaccumfaciens, Clavibacter michiganensis, Agrobacterium tumefaciens, Xanthomonas campestris p.v. phaseoli, Pseudomonas syringae pv. lachrymans, Pseudomonas syringae pv. tomato, Streptomyces scabies, Xanthomonas campestris pv.*

*campestris* and *Xanthomonas capestris pv. Vesicatoria.*

For medical uses, pathogenic bacteria without being limiting may be selected from the group consisting of *Actinomyces, Arachnia (Propionibacterium propionicus), Bacteroides, Bifidobacterium, Eubacterium, Fusobacterium, Lactobacillus, Leptotrichia, Peptococcus, Peptostreptococcus, Propionibacterium, Selenomonas, Treponema* and *Veillonella.*

In one embodiment, a composition comprising one or more bacterial heme peroxidase as defined in any one of SEQ ID NOs: 1, 18, 11, or 25-27,

　　　a reducing agent, and

　　　　　(i) hydrogen peroxide, and/or
　　　　　(ii) a hydrogen-peroxide donor system,

　　　in aqueous solution for use in the treatment of an infection with a pathogen in or on a human or animal body is provided. In this context, said (bacterial) heme peroxidase or (a) functional fragment(s) thereof may be brought into contact with biological tissue of said human or animal, in particular with mucosae or with skin, in particular epidermal skin like scalp or facial skin. Mucosae in the context of this invention may comprise oral mucosa, lung mucosa, gut mucosa vaginal mucosa, preputial skin, glans, anoderm, and corresponding animal mucosae. It may also be envisaged that the (bacterial) heme peroxidase may be brought into contact with teeth of said human or animal.

The terms "contacting" or "brought into contact" in the context of this invention means that a (bacterial) heme peroxidase or (a) functional fragment(s) thereof may be applied to biological tissue for a sufficiently long time, in a sufficiently high concentration, and/or in sufficiently often (repeated time intervals that said (bacterial) heme peroxidase may exert its antimicrobial effect on a pathogen.

Whenever "prevention and/or controlling of a pathogen" is used by itself (i.e. without any further explanatory attribute) throughout this application, it is meant that the growth and/or the spreading of said pathogen may be prevented/controlled.

In one embodiment, a (bacterial) heme peroxidase or (a) functional fragment(s) thereof of the present invention may be used in a method for preventing and/or controlling a pathogen on food or plants, said method comprising applying a sufficient amount of the (bacterial) heme peroxidase as defined in SEQ ID NO: 1, and/or SEQ ID NO: 18, and/or SEQ ID NO: 11, and/or SEQ ID NO: 25-27for example on said food or plants to reduce the number of cells of said pathogen. The pathogen may be in or on a food or plant.

Food in the context of the present invention may, *inter alia,* comprise edible and non-edible produce as produced by plants or animals. Edible produce in this context may be selected from the group consisting of leaves, stems, twigs, roots, trunks, limbs, shoots, fruits (including nuts) and processed food products including but not limited to dairy products like cheese or fermented milk products including yoghurts, or fish and meat products like sausages or processed meat like hams etc. Non-edible produce in this context may be selected from the group consisting of horticulture products such as flowers, leaves, whole plants.

A "sufficient amount" in the context of this invention indicates the amount of a (bacterial) heme peroxidase of the present invention that may be required for the (bacterial) heme peroxidase to exert its cytostatic as well as its cytotoxic effect(s), i.e. to prevent and/or control (the growth and/or the spreading of) a pathogen.

In accordance with this invention, whenever a (bacterial) heme peroxidase as defined in SEQ ID NO: 1 (HydPOX), SEQ ID NO: 18 or 26 (HydPOXs), SEQ ID NO: 11 (OkePOX), or SEQ ID NO: 25 or 27 (OkePOXs) may be used in a method of preventing and/or controlling the growth and/or the spreading of a pathogen, or whenever a (bacterial) heme peroxidase may be used for the prevention and/or controlling of a pathogen in or on a human or animal body, and/or whenever a (bacterial) heme peroxidase may be used in a method for preventing and/or controlling a pathogen on food or plants, said (bacterial) heme peroxidase may be applied with a reducing agent and

　　　　　(i) hydrogen peroxide and/or
　　　　　(ii) a hydrogen-peroxide donor system

　　　in aqueous solution as explained above. In all of these and related contexts, said heme peroxidase or functional fragment(s) thereof has/have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, or at least 300% increased peroxidase activity in the standard ABTS activity assay compared to bovine lactoperoxidase or LspPOX as is also evident from Example 12 and Figure 8B, Table 5 (see Auer, Markus, et al. "A stable bacterial peroxidase with novel halogenating activity and an autocatalytically linked heme prosthetic group." Journal of Biological Chemistry 288.38 (2013): 27181-27199, for ABTS assay. In one preferred embodiment, said heme peroxidase or (a) functional fragment(s) thereof has/have at least 10% increased peroxidase activity in the standard ABTS activity assay compared to bovine lactoperoxidase. In one preferred embodiment, said heme peroxidase or (a) functional fragment(s) thereof has/have at least 30% increased peroxidase activity in the standard ABTS activity assay compared to bovine lactoperoxidase. In another preferred embodiment, said heme peroxidase or (a) functional fragment(s) thereof has/have at least 100% increased peroxidase activity in the standard ABTS activity assay compared to LspPOX. In another preferred embodiment, said heme peroxidase or (a) functional fragment(s) thereof has/have at least 150% increased peroxidase activity in the standard ABTS activity assay compared to LspPOX. In another preferred embodiment, said heme peroxidase or (a) functional fragment(s) thereof has/have at least 200% increased peroxidase activity in the standard ABTS activity assay compared to LspPOX. In other preferred embodiments, HydPOX has about 98% increased activity compared to LpoPOX and about 184% increased activity compared to LspPOX, HydPOXs has about 56% increased activity compared to LpoPOX and about 125% increased activity compared to LspPOX, OkePOXs has about 131% increased activity compared to LpoPOX and about 232% increased activity compared to LspPOX in the standard ABTS acitivity assay. The (bacterial) heme peroxidase in the context of the above embodiments may be any peroxidase as defined in SEQ ID NO: 1, and/or SEQ ID NO: 18, and/or SEQ ID NO: 11, and/or SEQ ID NO: 25-27.

The increased peroxidase activity compared to bovine lactoperoxidase (LpoPOX) or LspPOX can be determined e.g. by a standard ABTS activity assay, see also Example 12. In particular, for the determination of the peroxidase activity of (recombinant) peroxidases (e.g. produced in *B. subtilis*) a standard activity assay can be performed using the artificial one-electron donor ABTS (2,2'-azino-bis (3-ethylbenzothiazoline-6-sulfonic acid)) and $H_2O_2$ in aqueous solution. ABTS (2,2'-Azinobis [3-ethylbenzothiazoline-6-sulfonic acid]-diammonium salt) is a watersoluble peroxidase substrate that yields an oxidized product upon reaction with peroxidase and has two major absorbance peaks, 410 nm and 650 nm. The reaction in presence of $H_2O_2$ can be easily measured on microplate reader. From absorbance the amount of product can be calculated and subsequently active units can be determined and compared between different peroxidases (Auer, J Biol Chem 288, 2013).

The assay can be performed in triplicates on a TECAN microtiter plate reader in a total of 200 $\mu$L. The assay mixture can contain 6.45 nM peroxidase, 1 mM ABTS (or varying concentrations thereof), 100 $\mu$M $H_2O_2$ in 50 mM sodium acetate buffer pH 5.0. The oxidation reaction can be read for 30 min at 25 °C. Rates of ABTS oxidation can be calculated by following the absorbance increase at 414 nm ($\varepsilon414$ = 36 mM$^{-1}$cm$^{-1}$).

For determination of enzymatic kinetic constants ABTS can be used in a concentration range from 0.025 - 5 mM together with a 50 mM sodium acetate buffer pH 5.0. Kinetic constants can be calculated using a nonlinear regression fitting curve.

The turnover number of an enzyme, or the $k_{cat}$, is the maximal number of molecules of substrate converted to product per enzyme per unit time when the enzyme is saturated. The higher $k_{cat}$ can indicate that this peroxidase turnover, showing better processivity of the enzyme compared to other peroxidases.

The peroxidase activity can subsequently be compared to LspPOX activity (peroxidase from *Lyngbya sp.* PCC 8106) and/or LpoPOX activity (bovine lactoperoxidase; commercial protein can be used e.g. having the amino acid sequence as defined in SEQ ID NO: 16 which lacks the propeptide region, for comparison, the full length LpoPOX amino acid sequence is defined in SEQ ID NO: 17), preferably determined by a standard ABTS activity assay, e.g. as described above. One unit of peroxidase activity can be defined as the amount of peroxidase enzyme that oxidizes 1 $\mu$mol of substrate (ie ABTS)/min at the defined pH. The activity of the bacterial peroxidases (in U/mg) can be compared to the activity of LpoPOX and bacterial LspPOX peroxidase. One unit of peroxidase activity can be defined as the amount of peroxidase enzyme that oxidizes 1 $\mu$mol of substrate (ie ABTS)/min at a defined pH. Activity of peroxidases in comparison to LspPOX and LpoPOX can be calculated from the difference in active units per mg of peroxidase.

In all of these and related contexts, said heme peroxidase or functional fragment(s) thereof has/have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, at least 300%, at least 310%, at least 320%, at least 330%, at least 340%, at least 350%, at least 360%, at least 370%, at least 380%, at least 390%, or at least 400% increased peroxidase activity in the thymol blue assay compared to bovine lactoperoxidase or LspPOX as is also evident from Example 13 and Figure 9B, Table 7 (see Verhaeghe, Elodie, et al. "A colorimetric assay for steady-state analyses of iodo-and bromoperoxidase activities." Analytical biochemistry 379.1 (2008): 60-65, for thymol blue assay. In one preferred embodiment, said heme peroxidase or (a) functional fragment(s) thereof has/have at least 100% increased peroxidase activity in the thymol blue assay compared to bovine lactoperoxidase or LspPOX. In one preferred embodiment, said heme peroxidase or (a) functional fragment(s) thereof has/have at least 200% increased peroxidase activity in the thymol blue assay compared to bovine lactoperoxidase or LspPOX. In other preferred embodiments HydPOX has about 98% increased activity compared to LpoPOX and about 184% increased activity compared to LspPOX, HydPOXs has about 56% increased activity compared to LpoPOX and about 125% increased activity compared to LspPOX, OkePOXs has about 131% increased activity compared to LpoPOX and about 232% increased activity compared to LspPOX in the thymol blue assay.

The (bacterial) heme peroxidase in the context of the above embodiments may be any peroxidase as defined in SEQ ID NO: 1, and/or SEQ ID NO: 18, and/or SEQ ID NO: 11, and/or SEQ ID NO: 25-27.

The heme peroxidase or functional fragment(s) thereof of the present invention are particularly useful since they embody a high peroxidase activity at low substrate concentration, e.g. when compared to bovine lactoperoxidase (LpoPOX) or LspPOX. Accordingly, the present invention provides a (bacterial) heme peroxidase, wherein the substrate concentration at which half maximal velocity/half-saturation ($K_{0.5}$) of the heme peroxidase is achieved is lower than that of bovine lactoperoxidase (LpoPOX) or LspPOX. The invention also provides a (bacterial) heme peroxidase as defined in any one of SEQ ID NOs: 18, 25, or 27, wherein the substrate concentration at which half maximal velocity/half-saturation ($K_{0.5}$) of the heme peroxidase is achieved is at least about 1-fold, at least about 2-fold, at least about 3-fold, at least about 4-fold, at least about 5-fold, at least about 6-fold, at least about 7-fold, at least about 8-fold, at least about 9-fold, at least about 10-fold, at least about 11-fold, at least about 12-fold, at least about 13-fold, at least about 14-fold, at least about 15-fold, at least about 16-fold, at least about 17-fold, at least about 18-fold, at least about 19-fold, or at least about 20-fold lower than that of bovine lactoperoxidase (LpoPOX). In a preferred embodiment, the invention provides a (bacterial) heme peroxidase as defined in any one of SEQ ID NOs: 18, 25, or 27, wherein the substrate concentration at which half maximal velocity/half-saturation ($K_{0.5}$) of the heme peroxidase is achieved is at least about 11-fold to at least about 17-fold lower than that of bovine lactoperoxidase (LpoPOX). In a preferred embodiment, the invention provides a (bacterial) heme peroxidase as defined in any one of SEQ ID NOs: 18, 25, or 27, wherein the substrate concentration at which half maximal velocity/half-saturation ($K_{0.5}$) of the heme peroxidase is achieved is about 11-fold or about 16.5-fold lower than that of bovine lactoperoxidase (LpoPOX). The (bacterial) heme peroxidase in the context of the above embodiments may be any peroxidase in the sense of the present invention as defined in SEQ ID NO: 1, and/or SEQ ID NO: 18, and/or SEQ ID NO: 11, and/or SEQ ID NO: 25-27.

In another preferred embodiment, the invention provides a peroxidase as defined in SEQ ID NO: 1, wherein the substrate concentration at which half maximal velocity/half-saturation ($K_{0.5}$) of the heme peroxidase is achieved is about 16.5-fold lower than that of bovine lactoperoxidase (LpoPOX).

In another preferred embodiment, the invention provides a peroxidase as defined in SEQ ID NO: 18 wherein the substrate concentration at which half maximal velocity/half-saturation ($K_{0.5}$) of the heme peroxidase is achieved is about 11-fold lower than that of bovine lactoperoxidase (LpoPOX).

In another preferred embodiment, the invention provides a peroxidase as defined in SEQ ID NO: 25 and/or 27, wherein the substrate concentration at which half maximal velocity/halfsaturation ($K_{0.5}$) of the heme peroxidase is achieved is about 11-fold lower than that of bovine lactoperoxidase (LpoPOX).

The invention also provides a (bacterial) heme peroxidase, wherein the substrate concentration at which half maximal velocity/half-saturation ($K_{0.5}$) of the heme peroxidase is achieved is at least about 1-fold, at least about 2-fold, at least about 3-fold, at least about 4-fold, at least about 5-fold, at least about 6-fold, at least about 7-fold, at least about 8-fold, at least about 9-fold, at least about 10-fold, at least about 11-fold, at least about 12-fold, at least about 13-fold, at least about 14-fold, at least about 15-fold, at least about 16-fold, at least about 17-fold, at least about 18-fold, at least about 19-fold, or at least about 20-fold lower than that of LspPOX. In a preferred embodiment, the invention provides a (bacterial) heme peroxidase, wherein the substrate concentration at which half maximal velocity/half-saturation ($K_{0.5}$) of the heme peroxidase is achieved is at least about 11-fold to at least about 17-fold lower than that of LspPOX. In a preferred embodiment, the invention provides a (bacterial) heme peroxidase, wherein the substrate concentration at which half maximal velocity/half-saturation ($K_{0.5}$) of the heme peroxidase is achieved is about 11-fold or about 17-fold lower than that of LspPOX. The (bacterial) heme peroxidase in the context of the above embodiments may be any peroxidase in the sense of the present invention as defined in SEQ ID NO: 1, and/or SEQ ID NO: 18, and/or SEQ ID NO: 11, and/or SEQ ID NO: 25-27.

In another preferred embodiment, the invention provides a peroxidase as defined in SEQ ID NO: 18 wherein the substrate concentration at which half maximal velocity/half-saturation ($K_{0.5}$) of the heme peroxidase is achieved is about 11-fold lower than that of LspPOX.

In another preferred embodiment, the invention provides a peroxidase as defined in SEQ ID NO: 25 and/or 27, wherein the substrate concentration at which half maximal velocity/half-saturation ($K_{0.5}$) of the heme peroxidase is achieved is about 11-fold lower than that of LspPOX.

The lower substrate concentration at which half maximal velocity/half-saturation ($K_{0.5}$) of the heme peroxidase of the present invention is achieved and/or the corresponding peroxidase activity when compared to LpoPOX or LspPOX can be determined e.g. by a thymol blue assay (halogenation assay), see also Example 13. In particular, peroxidase activity towards iodide can be determined using the Thymol blue assay read out on a TECAN microtiter plate reader. The thymol blue assay is based on the reactivity of thymolsulfonphthalein (thymol blue [TB]) toward oxidized halogen species. A peroxidase is able to catalyze the halogenation of the thymolsulfonphthalein which produces stable molecules with distinct spectral properties. A reaction between peroxidase and substrate thymol blue in presence of iodide and $H_2O_2$ in aqueous solution gives an absorbance peak at 620 nM ($\varepsilon_{620}$ = 40.3 mM$^{-1}$cm$^{-1}$). The assay can be used to determine halogenation activity of peroxidases. The reaction can be easily measured on a microplate reader. From absorbance the amount of product can be calculated and subsequently active units can be determined and compared between different peroxidases (Verhaeghe et al., Anal Biochem 379 2008).

The enzymatic reactions can be performed e.g. at room temperature for 30 min in clear flatbottomed microplate wells containing 200 $\mu$l 0.1 M phosphate buffer pH 7.2, 100 $\mu$M thymol blue, 1 $\mu$g/ml of recombinant bacterial peroxidase, $H_2O_2$ and a reducing agent such as I$^-$.

For determination of kinetic constants for peroxidases, varying concentrations of KI (0.03 - 4 mM) and 0.1 mM $H_2O_2$ can be used. Kinetic constants can be calculated using a nonlinear regression fitting curve.

For determination of peroxidase activity (active units), 1 mM KI and 0.1 mM $H_2O$, can be used. One unit of peroxidase activity can be defined as the amount of peroxidase enzyme that oxidizes 1 $\mu$mol of substrate/min at a defined pH. Increased peroxidase activity (e.g. displayed as difference in active units of peroxidase per mg) can be shown when bacterial peroxidases are compared to LspPOX and/or LpoPOX as controls (i.e. compared to LspPOX activity and/or LpoPOX activity), preferably determined by a standard thymol blue assay, e.g. as described above.

In accordance with the above, the present invention relates to a bacterial heme peroxidase as provided herein (one or more bacterial heme peroxidase as defined in any one of SEQ ID NOs: 1, 18, 11, or 25-27) for use in the treatment of an infection.

Where a (bacterial) heme peroxidase of the present invention may be employed for use in the treatment of an infection with a pathogen, it may be established/diagnosed prior to the administration of said (bacterial) heme peroxidase that the subject may be in need of such treatment. Such diagnose may be based on characteristic symptoms that may be associated with the infection with a given pathogen such as fever, swelling, sore throat and the like. Furthermore, a "pharmacological active amount" of a (bacterial) heme peroxidase or of a functional fragment thereof defines the minimally required amount of the (bacterial) heme peroxidase/functional fragment thereof that may be administered to achieve a detectable in vivo effect in a subject, which may lead to the amelioration of the characteristic symptoms that may be associated with the diagnosed infection with a pathogen.

In one embodiment, the present invention also relates to a composition comprising one or more bacterial heme peroxidase as defined in any one of SEQ ID NOs: 1, 18, 11, or 25-27,

a reducing agent, and

(i) hydrogen peroxide, and/or
(ii) a hydrogen-peroxide donor system,

in aqueous solution for use in the treatment of an infection with a pathogen in or on a human or animal body. In this context, said treatment may comprise preventing and/or controlling the growth and/or the spreading of a pathogen. Pathogens in this context may be selected from the group consisting of fungi, preferably moulds and yeasts, and bacteria, preferably pathogenic bacteria. Pathogens in particular may comprise human as well as animal pathogens.

In accordance with all embodiments of the present invention, the (bacterial) heme peroxidase may be an isolated (bacterial) heme peroxidase.

In some embodiments, (bacterial) heme peroxidases can be the peroxidases as defined in any one of SEQ ID NO: 1, 18, 11 or 25 or a combination thereof. As mentioned before, it may be necessary that a methionine is added immediately at the N-terminus of the amino acid sequence of a (bacterial) heme peroxidase. Accordingly, in some embodiments, the (bacterial) heme peroxidases can include an N-terminal methionine, i.e. the peroxidases as defined in SEQ ID NOs: 26 or 27. In some embodiments a (bacterial) heme peroxidase of the present invention can be one or more (bacterial) heme peroxidase as defined in SEQ ID NOs: 1, 18, 11, 25, 26, or 27. In some embodiments a (bacterial) heme peroxidase of the present invention is the (bacterial) heme peroxidase as defined in SEQ ID NO: 1. In some embodiments a (bacterial) heme peroxidase of the present invention is the (bacterial) heme peroxidase as defined in SEQ ID NO: 18. In some embodiments a (bacterial) heme peroxidase of the present invention is the (bacterial) heme peroxidase as defined in SEQ ID NO: 11. In some embodiments a (bacterial) heme peroxidase of the present invention is the (bacterial) heme peroxidase as defined in SEQ ID NO: 25. In some embodiments a (bacterial) heme peroxidase of the present invention is the (bacterial) heme peroxidase as defined in SEQ ID NO: 26. In some embodiments a (bacterial) heme peroxidase of the present invention is the (bacterial) heme peroxidase as defined in SEQ ID NO: 27.

As used herein "a/the (bacterial) heme peroxidase of the present invention" means one or more bacterial heme peroxidase as defined in SEQ ID NO: 1 (HydPOX), SEQ ID NO: 18 or 26 (HydPOXs), SEQ ID NO: 11 (OkePOX), or SEQ ID NO: 25 or 27 (OkePOXs) when used in the context of the non-therapeutic method for preventing and/or controlling the growth and/or the spreading of a pathogen, the non-therapeutic use of a composition, the composition for use as a medicament, and the composition for use in the treatment of an infection as defined herein. As used herein "a/the (bacterial) heme peroxidase of the present invention" means one or more heme peroxidase protein as defined in any one of SEQ ID NOs: 18, 25 or 27, when used in the context of the bacterial heme peroxidase, the method for producing one or more bacterial heme peroxidase and the method for producing a pesticide composition as defined herein.

In the following, more specific embodiments of the present invention in particular for medical and non-medical uses of the (bacterial) heme peroxidase of the present invention will be described. The provisions as laid out in the above apply mutatis mutandis to these more specific embodiments unless otherwise specified/defined.

A. (Bacterial) heme peroxidase of the present invention for non-medical use

In accordance with this invention, a (bacterial) heme peroxidase and/or (a) functional fragments thereof may be employed for non-medical use in preventing and/or controlling (the growth and/or the spreading of) a pathogen, in particular a pathogen that may be located on food or plants. In other words, the (bacterial) heme peroxidase or functional fragments thereof may be employed in the broadest sense for plant and/or crop protection and pathogen control in for instance agriculture, horticulture, vegetable growing, ornamental plant cultivation, fruit growing, bulb growing, the culture of potted plants, forestry etc., and as consumer product for indoor plants. For example, a heme peroxidase and/or (a) functional fragments thereof (or a composition comprising the same) may be used as a pesticide. Accordingly, in one aspect, the invention relates to the non-therapeutic use of a composition comprising one or more bacterial heme peroxidase as defined in any one of SEQ ID NOs: 1, 18, 11, or 25-27 as a pesticide, wherein the composition further comprises a reducing agent and

       (i) hydrogen peroxide and/or
       (ii) a hydrogen-peroxide donor system

in aqueous solution..

The term "non-medical use" includes (and can be replaced herein by) the term "non-therapeutic use".

In one aspect, the method(s) or use(s) disclosed herein may be in vitro or ex vivo.

In one aspect, the method(s) or use(s) disclosed herein is (a) method(s) or use(s) wherein the method is not a method for treatment of the human or animal body by therapy.

The (bacterial) heme peroxidase for non-medical use in preventing and/or controlling a pathogen may be derived/obtained from *Hydrocoleum sp.* or *Okeania sp.* cyanobacterial origin. he (bacterial) heme peroxidase for non-medical use in preventing and/or controlling a pathogen may be a heme peroxidase of *Hydrocoleum sp.* or *Okeania sp.* as defined in SEQ ID NO: 1, and/or SEQ ID NO: 18, and/or SEQ ID NO: 11, and/or SEQ ID NO: 25-27 (see above).

SEQ ID NO: 1 corresponds to NCBI Reference Sequence WP_094674510.1 and represents the unmodified wildtype amino acid sequence of the preferred cyanobacterial heme peroxidase of the present invention. For ease of reference, whenever a protein sequence comprises SEQ ID NO: 1 with or without the initial methionine, this cyanobacterial heme peroxidase protein will be referred to as "HydPOX" wherever appropriate in this application.

One exemplary functional fragment of SEQ ID NO: 1 that may also be employed in this context is defined in SEQ ID NO: 18. SEQ ID NO: 18 corresponds to SEQ ID NO: 1 but is missing amino acids 1 to 116 of SEQ ID NO: 1. Therefore, the functional fragment which is defined in SEQ ID NO: 18 represents the amino acid sequence from position 117 to position 659 of SEQ ID NO: 1. As is evident by comparison from SEQ ID NO: 1 and SEQ ID NO: 18, SEQ ID NO: 18 shares 543 consecutive amino acids with SEQ ID NO: 1. Therefore, the amino acid sequence of the functional fragment as defined in SEQ ID NO: 18 is about 82% identical to SEQ ID NO: 1.

In certain aspects, it may be necessary that the functional fragment as defined in SEQ ID NO: 18 may be preceded by a methionine immediately at the N-terminus of the functional fragment. One exemplary functional fragment of SEQ ID NO: 11 is provided in SEQ ID NO: 25. SEQ ID NO: 25 corresponds to SEQ ID NO: 11 but is missing amino acids 1 to 116 of SEQ ID NO: 11. Therefore, the functional fragment which is defined in SEQ ID NO: 25 represents the amino acid sequence from position 117 to position 659 of SEQ ID NO: 11. As is evident by comparison from SEQ ID NO: 11 and SEQ ID NO: 25, SEQ ID NO: 25 shares 543 consecutive amino acids with SEQ ID NO: 11. Therefore, the amino acid sequence of the functional fragment as defined in SEQ ID NO: 25 may be about 82% identical to SEQ ID NO: 11.

In certain aspects, it may be necessary that the functional fragment as defined in SEQ ID NO: 25 may be preceded by a methionine immediately at the N-terminus of the functional fragment.

SEQ ID NO: 11 discloses a peroxidase from *Okeania hirsuta* (wildtype amino acid sequence of the corresponding bacterial heme peroxidase is defined in SEQ ID NO: 11; see above and a fragment thereof as defined in SEQ ID NO: 25 or 27). These two exemplary (bacterial) heme peroxidases share a 90.4% (bacterial peroxidase from *Okeania sp. SIO2C9*) and 91.8% (bacterial peroxidase from *Okeania hirsuta*) amino acid sequence homology with HydPOX as defined in SEQ ID NO: 1.

In one embodiment, the nucleotide sequence of a (bacterial) heme peroxidase for non-medical use in preventing and/or controlling a pathogen may be codon-optimized for recombinant protein expression in bacteria or mammalian cells, preferably wherein the nucleotide sequence of said (bacterial) heme peroxidase may be codon-optimized for recombinant protein expression in bacteria, more preferably wherein the nucleotide sequence of said (bacterial) heme peroxidase may be codon-optimized for recombinant protein expression in *Bacillus,* most preferably wherein the nucleotide sequence of said (bacterial) heme peroxidase may be codon-optimized for recombinant protein expression in *Bacillus subtilis.*

Therefore, while the wildtype nucleotide sequence of the preferred (bacterial) heme peroxidase that corresponds to SEQ ID NO: 1 is defined and illustrated in SEQ ID NO: 8 (see above), various codons may be replaced by synonymous codons (i.e., codons that encode for the same amino acid but may be more frequently used in a given host such as *Bacillus subtilis)* in the codon-optimized nucleotide sequence as defined and illustrated in SEQ ID NO: 9 (see above). Additionally, the nucleic acid encoding the preferred peroxidases as defined in SEQ ID NO: 1, and/or SEQ ID NO: 18, and/or SEQ ID NO: 11, and/or SEQ ID NO: 25-27 can be codon optimized for recombinant expression, e.g. in *Bacillus subtilis.* Exemplary codon optimized nucleic acid sequences are provided in SEQ ID NOs: 2, 9, 19, 21 and 24.

Therefore, codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase with synonymous codons that lead to increased levels of RNA-transcription in *Bacillus,* preferably wherein the codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase with synonymous codons that lead to increased levels of RNA-transcription in *Bacillus subtilis.* A person skilled in the art is aware of means and methods to perform such a codon-optimization.

The (bacterial) heme peroxidase or the functional fragment(s) thereof for non-medical use in preventing and/or controlling a pathogen may be recombinantly or stably expressed by bacteria or mammalian cells. It may be preferred that the (bacterial) heme peroxidase for non-medical use in preventing and/or controlling a pathogen may be recombinantly expressed by bacteria, preferably by *Bacillus,* more preferably by *Bacillus subtilis.* Recombinant protein production of the (bacterial) heme peroxidase may involve the secretion of the (bacterial) heme peroxidase into the bacterial expression culture supernatant, periplasmic or cytoplasmic protein expression, wherein the secretion of the (bacterial) heme peroxidase into the bacterial expression culture supernatant may be preferred.

In one embodiment, the (bacterial) heme peroxidase or the functional fragment(s) thereof for non-medical use in preventing and/or controlling a pathogen may comprise a N- and/or C-terminally linked signal peptide, purification tag and/or a protease cleavage site. Exemplary non-limiting signal peptides which may be used may be derived and selected from the group consisting of a signal peptide of the extracellular *Bacillus subtilis* protease nprE, a signal peptide of spA, phoA, ribose binding protein, pelB, ompA, ompT, dsbA, torA, torT, tolT, or signal peptides from the TAT secretion pathway in bacteria. Non-limiting (epitope) tags or purification tags which may be used may be selected from the group consisting of His$_6$-tag, glutathione S-transferase (GST), maltose binding protein (MBP), calmodulin binding peptide (CBP), intein-chitin binding domain (intein-CBD) tag, streptavidin, (Twin) Strep-tag (I/II), flag-tag, HA-tag, c-myc tag, V5-tag, T7-tag, NE-tag, HaloTag, SUMO-tag. (Epitope) tags or purification tags may be detected with detection reagents such as detectable monoclonal or polyclonal antibodies/antibody-conjugates in applications such as Western blotting for example. The (bacterial) heme peroxidase for non-medical use in preventing and/or controlling a pathogen may further be linked to detectable reporter tags such as β-galactosidase (β-gal), alkaline phosphatase (AP), chloramphenicol acetyl transferase (CAT), and horseradish peroxidase (HRP) or fluorescent reporter proteins such as (e)GFP, (e)CFP, (e)BFP, (e)YFP, (e)RFP, mCherry, mRuby or mOrange. Non-limiting protease cleavage sites that may be used comprise cleavage sites of proteases selected from the group consisting of TEV-protease, enteropeptidase, thrombin, factor Xa, rhinovirus 3C protease, carboxypeptidase A, carboxypeptidase B, DAPase. "N- and/or C-terminally linked" in the context of a (bacterial) heme peroxidase for non-medical use in preventing and/or controlling a pathogen may be understood to mean that a signal peptide, purification tag and/or protease cleavage site may be genetically fused in-frame with the 5' and/or 3' end of the coding sequence of the (bacterial) heme peroxidase. In instances where a signal peptide, purification tag, protease cleavage site, and/or fluorescent reporter protein which already encode an initial methionine may be fused to the 5' end of the (bacterial) heme peroxidase, the initial methionine of the (bacterial) heme peroxidase may be removed.

In an alternative embodiment, the (bacterial) heme peroxidase/functional fragment(s) thereof for non-medical use in preventing and/or controlling a pathogen may not comprise a N- and/or C-terminally linked signal peptide, purification tag and/or a protease cleavage site.

In a preferred embodiment, the (bacterial) heme peroxidase/functional fragment(s) thereof for non-medical use may comprise a signal peptide, preferably a signal peptide of an extracellular *Bacillus subtilis* protease, and a His$_6$-tag.

The (bacterial) heme peroxidase/functional fragment(s) thereof for non-medical use in preventing and/or controlling a pathogen may be purified from bacterial expression culture supernatant or may at least be separated from the bacterial cell mass. The skilled person is aware of means and methods to purify the (bacterial) heme peroxidase from the bacterial expression culture supernatant. Exemplary purification workflows are well known in the art and may involve the centrifugation of the bacterial expression culture at about 5,000 g to about 18,000 g for about 5 to about 45 minutes to separate the bacterial cell mass from the bacterial expression culture supernatant. The bacterial expression culture supernatant may optionally be sterile filtrated. The (bacterial) heme peroxidase may subsequently be purified from the sterile filtrated bacterial expression culture supernatant by one or more purification methods which may be selected from the group consisting of immobilized metal affinity chromatography (IMAC), ion-exchange chromatography, affinity-chromatography, size-exclusion chromatography, gel filtration chromatography. In one embodiment, the (bacterial) heme peroxidase may comprise a $His_6$-tag for purification via immobilized metal affinity chromatography. The purified (bacterial) heme peroxidase may be dialyzed against an appropriate diluent, such as standard phosphate buffered saline, concentrated and snap-frozen in liquid nitrogen. In some aspects, the purified (bacterial) heme peroxidase may be lyophilized using standard dry freezing protocols.

The (bacterial) heme peroxidase/functional fragment(s) thereof for non-medical use in preventing and/or controlling a pathogen (and as defined in SEQ ID NO: 1, and/or SEQ ID NO: 18, and/or SEQ ID NO: 11, and/or SEQ ID NO: 25-27) may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, or at least 300% increased peroxidase activity in the standard ABTS activity assay compared to bovine lactoperoxidase or LspPOX, whose "reference" peroxidase activity may be measured under identical conditions as is also evident from Example 12 and Figure 8B, Table 5. In one preferred embodiment, said heme peroxidase or (a) functional fragment(s) thereof has/have at least 10% increased peroxidase activity in the standard ABTS activity assay compared to bovine lactoperoxidase. In one preferred embodiment, the (bacterial) heme peroxidase/functional fragment(s) thereof may have at least 30% increased peroxidase activity in the standard ABTS activity assay compared to bovine lactoperoxidase.

In another preferred embodiment, said heme peroxidase or (a) functional fragment(s) thereof has/have at least 100% increased peroxidase activity in the standard ABTS activity assay compared to LspPOX. In another preferred embodiment, said heme peroxidase or (a) functional fragment(s) thereof has/have at least 150% increased peroxidase activity in the standard ABTS activity assay compared to LspPOX. In another preferred embodiment, said heme peroxidase or (a) functional fragment(s) thereof has/have at least 200% increased peroxidase activity in the standard ABTS activity assay compared to LspPOX.

The (bacterial) heme peroxidase/functional fragment(s) thereof for non-medical use in preventing and/or controlling a pathogen (and as defined in SEQ ID NO: 1, and/or SEQ ID NO: 18, and/or SEQ ID NO: 11, and/or SEQ ID NO: 25-27) may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, at least 300%, at least 310%, at least 320%, at least 330%, at least 340%, at least 350%, at least 360%, at least 370%, at least 380%, at least 390%, or at least 400% increased peroxidase activity in the thymol blue assay compared to bovine lactoperoxidase or LspPOX, whose "reference" peroxidase activity may be measured under identical conditions as is also evident from Example 13 and Figure 9B, Table 7.

In one preferred embodiment, said heme peroxidase or (a) functional fragment(s) thereof has/have at least 100% increased peroxidase activity in the thymol blue assay compared to bovine lactoperoxidase or LspPOX. In one preferred embodiment, said heme peroxidase or (a) functional fragment(s) thereof has/have at least 200% increased peroxidase activity in the thymol blue assay compared to bovine lactoperoxidase or LspPOX.

As is also evident from the appended figures, in particular Fig. 8B and Fig. 9B, HydPOX, HydPOXs and OkePOXs surprisingly exhibits an increased peroxidase activity compared to LpoPOX and LspPOX in two independent enzymatic activity assays. In the standard ABTS activity assay (Example 12, Table 5), HydPOX exhibits about 98% increased peroxidase activity, HydPOXs exhibits about 56% increased peroxidase activity, and OkePOXs exhibits about 131% increased peroxidase activity compared to LpoPOX and HydPOX exhibits about 184% increased peroxidase activity, HydPOXs exhibits about 125% increased peroxidase activity and OkePOXs exhibits about 232% increased peroxidase activity compared to LspPOX. In the thymol blue assay (halogenation assay; Example 13, Table 7), HydPOX exhibits about 299% increased peroxidase activity, HydPOXs exhibits about 233% increased peroxidase activity, and OkePOXs exhibits about 348% increased peroxidase activity compared to LpoPOX and HydPOX exhibits about 161% increased peroxidase activity, HydPOXs exhibits about 143% increased peroxidase activity and OkePOXs exhibits about 202% increased peroxidase activity compared to LspPOX. Since HydPOX, HydPOXs and OkePOXs thus exhibit increased peroxidase activity compared to LpoPOX (and/or LspPOX), this increased peroxidase activity is assumed to translate into an increased ability of HydPOX, HydPOXs and OkePOXs to prevent and/or control a pathogen, which thus makes HydPOX, HydPOXs and OkePOXs suitable biocontrol agents for non-medical use. In addition, it is envisioned that also the full-length fragment of OkePOX as defined in SEQ ID NO: 11 is able to achieve the above stated effects.

In accordance with the invention, pathogens in the context of a (bacterial) heme peroxidase/functional fragment(s) thereof for non-medical use may *inter alia* be fungi or pathogenic bacteria as is also evident from Example 8. A non-medical use comprises, *inter alia,* the use of the herein provided (bacterial) heme peroxidase in plant and/or crop protection. Fungi may preferably be selected from moulds and yeasts. Such fungi without being limiting, may *inter alia* be selected from the group consisting of *Botryotinia* spp ("grey moulds"), such as for instance *B. fuckeliana* (anamorphic *Botrytis cinerea*), *Didymella* spp, such as for instance *D. bryonia* (= *Mycospherella* in *Cucurbitaceae*), *D. lycopersici* (= cancer in tomato), *Puccunia* spp ("rusts"), such as for instance *P. horiana* (= Japanese rust), *Sphaerotheca* spp ("true mildew"), such as for instance *S. fuliginea* (mildew in cucumber) and *S. pannose* (mildew in rose), *Erysiphe* spp, *Oidium* spp and *Leveillula Taurica* (also true mildew types), *Fusarium* spp ("foot rot and/or wilt disease"), *Phytophtora* spp ("foot and/or root disease), such as *Phytophthora infestans, Pythium* spp ("foot disease"), *Plasmopara, Peronospora,* and *Sclerospora* spp (the downy mildew types), *Rhizoctonia, Verticillium* and *Sclerotinia* spp (causes of spot), *Rhizopus* and *Penicillium* spp (causes of (storage) rot) and *Venturia* spp (causes of scab). Fungi may additionally be selected from the group consisting of: *Colletotrichum gloeosporioides, Penicillium expansum, Penicillium digitatum, Penicillium italicum, Geotrichum citri-aurantii, Zymoseptoria tritici, Phytophthora infestans* and *Puccinia triticina.*

Without being limiting pathogenic bacteria may, *inter alia,* be selected from the group consisting of *Erwinia amylovora, Erwinia chrysanthemi, Pseudomonas syringae, Xanthomonas campestris, Curtobactrium flaccumfaciens, Clavibacter michiganensis, Agrobacterium tumefaciens, Xanthomonas campestris p.v. phaseoli, Pseudomonas syringae pv. lachrymans, Pseudomonas syringae pv. tomato, Streptomyces scabies, Xanthomonas campestris pv. campestris* and *Xanthomonas capestris pv. Vesicatoria.*

Food in the context for non-medical use may *inter alia* comprise edible and non-edible produce as produced by plants or animals. Edible produce in this context may be selected from the group consisting of leaves, stems, twigs, roots, trunks, limbs, shoots, fruits (including nuts) and processed food products including but not limited to dairy products like cheese or fermented milk products including yoghurts, or fish and meat products like sausages or processed meat like hams etc. Non-edible produce in this context may be selected from the group consisting of horticulture products such as flowers, leaves, whole plants.

In one embodiment, a non-therapeutic use of a composition comprising one or more bacterial heme peroxidase as defined in any one of SEQ ID NOs: 1, 18, 11, or 25-27 as a pesticide, wherein the composition further comprises a reducing agent and

(i) hydrogen peroxide and/or
(ii) a hydrogen-peroxide donor system

in aqueous solution is provided..

Thus, a (bacterial) heme peroxidase/functional fragment(s) thereof for non-medical use in preventing and/or controlling a pathogen may be applied to said pathogen with a reducing agent; and/or (i) a hydrogen peroxide and/or (ii) a hydrogen-peroxide donor system in aqueous solution. In a preferred embodiment, a (bacterial) heme peroxidase or (a) functional fragment(s) thereof may be applied to said pathogen with a reducing agent and (i) hydrogen peroxide and/or (ii) a hydrogen-peroxide donor system in aqueous solution. In an even more preferred embodiment, a (bacterial) heme peroxidase/functional fragment(s) thereof may be applied to said pathogen with a reducing agent and either (i) hydrogen peroxide or (ii) a hydrogen-peroxide donor system in aqueous solution. As is also evident from Example 8, a (bacterial) heme peroxidase of the present invention may be applied to said pathogen with a reducing agent such as iodide and hydrogen peroxide (i.e. its substrate) in aqueous solution. However, since its substrate (being hydrogen peroxide) is an unstable molecule, it may be preferred that a (bacterial) heme peroxidase of the present invention may be applied to said pathogen with a reducing agent and a hydrogen-peroxide donor system in aqueous solution.

Thus, a system comprising the (bacterial) heme peroxidase/functional fragment(s) thereof for non-medical use in preventing and/or controlling a pathogen may be regarded as at least a two-component system. However, as described above, it may be preferred that the system comprising the (bacterial) heme peroxidase for non-medical use in preventing and/or controlling a pathogen, may be a three-component system comprising the (bacterial) heme peroxidase of the present invention, a reducing agent and hydrogen peroxide or a hydrogen-peroxide donor system in aqueous solution.

An aqueous solution, i.e. a water-based solution, may be necessary for the (bacterial) heme peroxidase to exert its antimicrobial effect. However, it may not be necessary that a system comprising the (bacterial) heme peroxidase together with a reducing agent and/or (i) hydrogen peroxide and/or (ii) a hydrogen-peroxide donor system may be formulated in an aqueous solution. In one embodiment, the addition of water to these components which may be formulated as a powder, paste, ointment etc may give the (bacterial) heme peroxidase its ability to exert its antimicrobial effect while simultaneously ensuring an extended shelf life (since no enzymatic reaction may occur prior to the addition of water and thus no reaction components may be consumed).

Reducing agents in this context may be agents that (can) reduce other agents. Suitable reducing agents may, *inter alia,* be selected from the group consisting of iodide (I⁻), bromide (Br) or thiocyanate (SCN⁻). As is also evident from the appended Examples, in particular Example 5 and 8, iodide (I⁻) may be used as reducing agent since it is able to reduce $H_2O_2$ to $H_2O$ and $O_2$.

Since hydrogen peroxide is an unstable molecule, it may be preferred that a (bacterial) heme peroxidase or functional fragment(s) therof for non-medical use in preventing and/or controlling a pathogen may be applied to a pathogen with a reducing agent and a hydrogen-peroxide donor system (instead of hydrogen peroxide itself) in aqueous solution which ensures the indirect hydrogen peroxide substrate supply via sugar oxidation. A suitable hydrogen-peroxide donor system preferably comprises an oxidase and a corresponding sugar substrate which the oxidase is specific for. Exemplary preferred hydrogen-peroxide donor systems, without being limiting, may comprise, *inter alia,* glucose oxidase/glucose or galactose oxidase/galactose. As an alternative hydrogen-peroxide donor system that may not be based on an oxidase or a corresponding sugar substrate, sodium percarbonate or stabilized hydrogen peroxide may be used.

In one embodiment, a (bacterial) heme peroxidase/functional fragment(s) thereof for non-medical use may be co-formulated with at least one further agent. In other words, a (bacterial) heme peroxidase/functional fragment(s) thereof, a reducing agent and/or (i) hydrogen peroxide and/or (ii) a hydrogen-peroxide donor system in aqueous solution may preferably be co-formulated with at least one further agent. Said at least one further agent may be selected from the group consisting of oils, spreading agents, emulsifiers, ionic compounds, sugars, inorganic compounds, organic compounds, non-ionic compounds, amino acids, peptides, lipids, and/or proteins.

In one embodiment the at least one further agent may be an agriculturally acceptable carrier such as oil or a spreading agent which may ensure a good distribution of the formulated (bacterial) heme peroxidase on plants, plant parts and food/crop. The term "agriculturally acceptable carrier" in this context may refer to carriers which are known and accepted in the art for the formulation of compositions for agricultural or horticultural use. The oil may be selected from the group consisting of mineral oils, vegetable oils, animal oils or is a mixture of one or more oils from one or more of these groups. Examples of vegetable oils may be peanut oil, sesame oil, rape-seed oil, linseed oil, castor oil, soybean oil, corn germ oil, cotton-seed oil. A suitable animal oil may be fish oil. A suitable mineral oil may be paraffin or kerosine-type oils. Spreading agents may be ethoxylated alcohols and phosphatidyl lipids. Furthermore, it may also be envisaged that one or more adhesives may be added.

The (bacterial) heme peroxidase or functional fragment(s) thereof for non-medical use in preventing and/or controlling a pathogen may be formulated in a powder, liquid, spray, tonic, paste, lotion and/or an ointment. In certain instances where the (bacterial) heme peroxidase/fragment(s) thereof may be formulated in a powder, said powder may have to be reconstituted with a suitable diluent, such as for example water which also allows the (bacterial) heme peroxidase to exert its antimicrobial effect. After reconstitution, the (bacterial) heme peroxidase/functional fragment(s) thereof for non-medical use may be applied to food, crops or plants by means of spraying, sprinkling, atomizing, overhead spraying, watering, immersing, and/or drip irrigation.

The (bacterial) heme peroxidase or functional fragment(s) thereof ("its fragments") for non-medical use in preventing and/or controlling a pathogen may be used at a rate of about 1 mg/L to about 100 mg/L, preferably wherein said (bacterial) heme peroxidase may be used at a rate of about 10 mg/L to about 50 mg/L.

The (bacterial) heme peroxidase/functional fragment(s) thereof for non-medical use in preventing and/or controlling a pathogen may be used at a pH of from about 2 to about 10. In a preferred embodiment, the (bacterial) heme peroxidase or its fragment(s) may be used at a pH of from about 4 to about 6 or at a pH of about 5 as is also evident from Example 7 and Figure 6.

The (bacterial) heme peroxidase or its fragments for non-medical use in preventing and/or controlling a pathogen may be used at a temperature of from about 10 °C to about 60 °C. As is also evident from Example 6 and Figure 5, the (bacterial) heme peroxidase for non-medical use may be used up to about 60 °C without significant loss of enzyme activity which makes it suitable for non-medical applications in agriculture for example.

B. (Bacterial) heme peroxidase of the present invention for medical use

In accordance with this invention, a (bacterial) heme peroxidase and/or (a) functional fragment(s) thereof may also be employed in preventing and/or controlling (the growth and/or the spreading of) a pathogen in or on the human or animal body, in particular a pathogen that may be located on mucosae, skin, in particular epidermal skin like scalp or facial skin and/or teeth. In other words, the (bacterial) heme peroxidase or its fragments may also be employed in a medical pathogen control setting.

Accordingly, the invention provides a composition comprising one or more bacterial heme peroxidase as defined in any one of SEQ ID NOs: 1, 18, 11, or 25-27,

a reducing agent, and

(i) hydrogen peroxide, and/or
(ii) a hydrogen-peroxide donor system,

in aqueous solution for use as a medicament.

Furthermore, the invention provides a composition comprising one or more bacterial heme peroxidase as defined in any one of SEQ ID NOs: 1, 18, 11, or 25-27,

a reducing agent, and

(i) hydrogen peroxide, and/or
(ii) a hydrogen-peroxide donor system,

in aqueous solution for use in the treatment of an infection with a pathogen in or on a human or animal body.

The (bacterial) heme peroxidase for use in preventing and/or controlling a pathogen in or on the human or animal body may be derived/obtained from *Hydrocoleum sp.* or *Okeania sp.* cyanobacterial origin. The (bacterial) heme peroxidase for use in preventing and/or controlling a pathogen in or on the human or animal body may be a heme peroxidase of *Hydrocoleum sp.* or *Okeania sp.* as defined in SEQ ID NO: 1, and/or SEQ ID NO: 18, and/or SEQ ID NO: 11, and/or SEQ ID NO: 25-27 (see above).

One exemplary functional fragment of SEQ ID NO: 1 that may also be employed in in this context is defined in SEQ ID NO: 18. SEQ ID NO: 18 corresponds to SEQ ID NO: 1 but is missing amino acids 1 to 116 of SEQ ID NO: 1. Therefore, the functional fragment which is defined in SEQ ID NO: 18 represents the amino acid sequence from position 117 to position 659 of SEQ ID NO: 1. As is evident by comparison from SEQ ID NO: 1 and SEQ ID NO: 18, SEQ ID NO: 18 shares 543 consecutive amino acids with SEQ ID NO: 1. Therefore, the amino acid sequence of the functional fragment as defined in SEQ ID NO: 18 may be about 82% identical to SEQ ID NO: 1.

In certain aspects, it may be necessary that the functional fragment as defined in SEQ ID NO: 18 may be preceded by a methionine immediately at the N-terminus of the functional fragment. One exemplary functional fragment of SEQ ID NO: is provided in SEQ ID NO: 25. SEQ ID NO: 25 corresponds to SEQ ID NO: 11 but is missing amino acids 1 to 116 of SEQ ID NO: 11. Therefore, the functional fragment which is defined in SEQ ID NO: 25 represents the amino acid sequence from position 117 to position 659 of SEQ ID NO: 11. As is evident by comparison from SEQ ID NO: 11 and SEQ ID NO: 25, SEQ ID NO: 25 shares 543 consecutive amino acids with SEQ ID NO: 11. Therefore, the amino acid sequence of the functional fragment as defined in SEQ ID NO: 25 may be about 82% identical to SEQ ID NO: 11.

In certain aspects, it may be necessary that the functional fragment as defined in SEQ ID NO: 25 may be preceded by a methionine immediately at the N-terminus of the functional fragment.

SEQ ID NO: 11 discloses a peroxidase from *Okeania hirsuta* (wildtype amino acid sequence of the corresponding bacterial heme peroxidase is defined in SEQ ID NO: 11 above and a fragment thereof as defined in SEQ ID NO: 25 or 27). These two exemplary (bacterial) heme peroxidases share a 90.4% (bacterial peroxidase from *Okeania sp. SIO2C9*) and 91.8% (bacterial peroxidase from *Okeania hirsuta*) amino acid sequence homology with HydPOX as defined in SEQ ID NO: 1.

In one embodiment, the nucleotide sequence of a (bacterial) heme peroxidase for use in preventing and/or controlling a pathogen in or on the human or animal body may be codon-optimized for recombinant protein expression in bacteria or mammalian cells, preferably wherein the nucleotide sequence of said (bacterial) heme peroxidase may be codon-optimized for recombinant protein expression in bacteria, more preferably wherein the nucleotide sequence of said (bacterial) heme peroxidase may be codon-optimized for recombinant protein expression **in** *Bacillus,* most preferably wherein the nucleotide sequence of said (bacterial) heme peroxidase may be codon-optimized for recombinant protein expression in *Bacillus subtilis.*

Therefore, while the wildtype nucleotide sequence of the preferred (bacterial) heme peroxidase that corresponds to SEQ ID NO: 1 is defined and illustrated in SEQ ID NO: 8 above, various codons may be replaced by synonymous codons (i.e., codons that encode for the same amino acid but may be more frequently used in a given host such as *Bacillus subtilis)* in the codon-optimized nucleotide sequence as defined and illustrated in SEQ ID NO: 9 (see above). Additionally, the nucleic acid encoding the preferred peroxidases as defined in SEQ ID NO: 1, and/or SEQ ID NO: 18, and/or SEQ ID NO: 11, and/or SEQ ID NO: 25-27 can be codon optimized for recombinant expression, e.g. in *Bacillus subtilis.* Exemplary codon optimized nucleic acid sequences are provided in SEQ ID NOs: 2, 9, 19, 21 and 24.

Therefore, codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase/functional fragment thereof with synonymous codons that lead to increased levels of RNA-transcription in *Bacillus,* preferably wherein the codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of the (bacterial) heme peroxidase or the functional fragment thereof with synonymous codons that lead to increased levels of RNA-transcription in *Bacillus subtilis.* A person skilled in the art is aware of means and methods to perform such a codon-optimization.

The (bacterial) heme peroxidase/functional fragment(s) thereof for use in preventing and/or controlling a pathogen in or on the human or animal body may be recombinantly or stably expressed by bacteria or mammalian cells. It may be preferred that the (bacterial) heme peroxidase/functional fragment(s) thereof for use in preventing and/or controlling a pathogen in or on the human or animal body may be recombinantly expressed by bacteria, preferably by *Bacillus,* more preferably by *Bacillus subtilis.* Recombinant protein production of the (bacterial) heme peroxidase may involve the secretion of the (bacterial) heme peroxidase/functional fragment thereof into the bacterial expression culture supernatant, periplasmic or cytoplasmic protein expression, wherein the secretion of the (bacterial) heme peroxidase into the bacterial expression culture supernatant may be preferred.

In one embodiment, the (bacterial) heme peroxidase or the functional fragment(s) thereof for use in preventing and/or controlling a pathogen in or on the human or animal body may comprise a N- and/or C-terminally linked signal peptide, purification tag and/or a protease cleavage site. Exemplary non-limiting signal peptides which may be used may be derived/obtained and selected from the group consisting of a signal peptide of the extracellular *Bacillus subtilis* protease nprE, a signal peptide of spA, phoA, ribose binding protein, pelB, ompA, ompT, dsbA, torA, torT, tolT, or signal peptides from the TAT secretion pathway in bacteria. Non-limiting (epitope) tags or purification tags which may be used may be selected from the group consisting of $His_6$-tag, glutathione S-transferase (GST), maltose binding protein (MBP), calmodulin binding peptide (CBP), intein-chitin binding domain (intein-CBD) tag, streptavidin, (Twin) Strep-tag (I/II), flag-tag, HA-tag, c-myc tag, V5-tag, T7-tag, NE-tag, HaloTag, SUMO-tag. (Epitope) tags or purification tags may be detected with detection reagents such as detectable monoclonal or polyclonal antibodies/antibody-conjugates in applications such as Western blotting for example. The (bacterial) heme peroxidase for use in preventing and/or controlling a pathogen in or on the human or animal body may further be linked to detectable reporter tags like β-galactosidase (β-gal), alkaline phosphatase (AP), chloramphenicol acetyl transferase (CAT), and horseradish peroxidase (HRP) or fluorescent reporter proteins like (e)GFP, (e)CFP, (e)BFP, (e)YFP, (e)RFP, mCherry, mRuby or mOrange. Non-limiting protease cleavage sites that may be used may comprise cleavage sites of proteases selected from the group consisting of TEV-protease, enteropeptidase, thrombin, factor Xa, rhinovirus 3C protease, carboxypeptidase A, carboxypeptidase B, DAPase. "N-and/or C-terminally linked" in the context of a (bacterial) heme peroxidase for use in preventing and/or controlling a pathogen in or on the human or animal body may be understood to mean that a signal peptide, purification tag and/or protease cleavage site may be genetically fused in-frame with the 5' and/or 3' end of the coding sequence of the (bacterial) heme peroxidase. In instances where a signal peptide, purification tag, protease cleavage site, and/or fluorescent reporter protein which already encode an initial methionine may be fused to the 5' end of the (bacterial) heme peroxidase, the initial methionine of the (bacterial) heme peroxidase may be removed.

In an alternative embodiment, the (bacterial) heme peroxidase/functional fragment(s) thereof for use in preventing and/or controlling a pathogen in or on the human or animal body may not comprise a N- and/or C-terminally linked signal peptide, purification tag and/or a protease cleavage site.

In another embodiment, the (bacterial) heme peroxidase/functional fragment(s) thereof for use in preventing and/or controlling a pathogen in or on the human or animal body may comprise a signal peptide, preferably a signal peptide of an extracellular *Bacillus subtilis* protease, and optionally a $His_6$-tag.

The (bacterial) heme peroxidase or the functional fragment(s) thereof for use in preventing and/or controlling a pathogen in or on the human or animal body may be purified from bacterial expression culture supernatant or may at least be separated from the bacterial cell mass. In a preferred embodiment, the (bacterial) heme peroxidase or the functional fragment(s) thereof may be purified from bacterial expression culture supernatant. The skilled person is aware of means and methods to purify the (bacterial) heme peroxidase from the bacterial expression culture supernatant. Exemplary purification workflows are well known in the art and may involve the centrifugation of the bacterial expression culture at about 5,000 g to about 18,000 g for about 5 to about 45 minutes to separate the bacterial cell mass from the bacterial expression culture supernatant. The bacterial expression culture supernatant may optionally be sterile filtrated. The (bacterial) heme peroxidase may subsequently be purified from the sterile filtrated bacterial expression culture supernatant by one or more purification methods which may be selected from the group consisting of immobilized metal affinity chromatography (IMAC), ion-exchange chromatography, affinity-chromatography, size-exclusion chromatography, gel filtration chromatography. In one embodiment, the (bacterial) heme peroxidase may comprise a His$_6$-tag for purification via immobilized metal affinity chromatography. Furthermore, endotoxins may be removed from the (purified) (bacterial) heme peroxidase in order to avoid anaphylactic reactions after the (bacterial) heme peroxidase may be applied to the human or animal body. The purified (bacterial) heme peroxidase may be dialyzed against an appropriate diluent, such as standard phosphate buffered saline, concentrated and snap-frozen in liquid nitrogen. In some aspects, the purified (bacterial) heme peroxidase may be lyophilized using standard dry freezing protocols or formulated directly after purification/dialysis/-concentration.

The (bacterial) heme peroxidase or the functional fragment(s) thereof for use in preventing and/or controlling a pathogen in or on the human or animal body (and as defined in SEQ ID NO: 1, and/or SEQ ID NO: 18, and/or SEQ ID NO: 11, and/or SEQ ID NO: 25-27 or as being a functional fragment thereof) may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, or at least 300% increased peroxidase activity in the standard ABTS activity assay compared to bovine lactoperoxidase or LspPOX, whose "reference" peroxidase activity may be measured under identical conditions as is also evident from Example 12 and Figure 8B, Table 5. In one preferred embodiment, said heme peroxidase or (a) functional fragment(s) thereof has/have at least 10% increased peroxidase activity in the standard ABTS activity assay compared to bovine lactoperoxidase. In one preferred embodiment, the (bacterial) heme peroxidase or the functional fragment(s) thereof may have at least 30% increased peroxidase activity in the standard ABTS activity assay compared to bovine lactoperoxidase.

In another preferred embodiment, said heme peroxidase or (a) functional fragment(s) thereof has/have at least 100% increased peroxidase activity in the standard ABTS activity assay compared to LspPOX. In another preferred embodiment, said heme peroxidase or (a) functional fragment(s) thereof has/have at least 150% increased peroxidase activity in the standard ABTS activity assay compared to LspPOX. In another preferred embodiment, said heme peroxidase or (a) functional fragment(s) thereof has/have at least 200% increased peroxidase activity in the standard ABTS activity assay compared to LspPOX.

The (bacterial) heme peroxidase/functional fragment(s) thereof for use in preventing and/or controlling a pathogen in or on the human or animal body (and as defined in SEQ ID NO: 1, and/or SEQ ID NO: 18, and/or SEQ ID NO: 11, and/or SEQ ID NO: 25-27) may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, at least 300%, at least 310%, at least 320%, at least 330%, at least 340%, at least 350%, at least 360%, at least 370%, at least 380%, at least 390%, or at least 400% increased peroxidase activity in the thymol blue assay compared to bovine lactoperoxidase or LspPOX, whose "reference" peroxidase activity may be measured under identical conditions as is also evident from Example 13 and Figure 9B, Table 7.

In one preferred embodiment, said heme peroxidase or (a) functional fragment(s) thereof has/have at least 100% increased peroxidase activity in the thymol blue assay compared to bovine lactoperoxidase or LspPOX. In one preferred embodiment, said heme peroxidase or (a) functional fragment(s) thereof has/have at least 200% increased peroxidase activity in the thymol blue assay compared to bovine lactoperoxidase or LspPOX.

As is also evident from the appended figures, in particular Fig. 8B and Fig. 9B, HydPOX, HydPOXs and OkePOXs surprisingly exhibits an increased peroxidase activity compared to LpoPOX and LspPOX in two independent enzymatic activity assays. In the standard ABTS activity assay (Example 12, Table 5), HydPOX exhibits about 98% increased peroxidase activity, HydPOXs exhibits about 56% increased peroxidase activity, and OkePOXs exhibits about 131% increased peroxidase activity compared to LpoPOX and HydPOX exhibits about 184% increased peroxidase activity, HydPOXs exhibits about 125% increased peroxidase activity and OkePOXs exhibits about 232% increased peroxidase activity compared to LspPOX. In the thymol blue assay (halogenation assay; Example 13, Table 7), HydPOX exhibits about 299% increased peroxidase activity, HydPOXs exhibits about 233% increased peroxidase activity, and OkePOXs exhibits about 348% increased peroxidase activity compared to LpoPOX and HydPOX exhibits about 161% increased peroxidase activity, HydPOXs exhibits about 143% increased peroxidase activity and OkePOXs exhibits about 202% increased peroxidase activity compared to LspPOX. Since HydPOX, HydPOXs and OkePOXs thus exhibit increased peroxidase activity compared to LpoPOX (and/or LspPOX), this increased peroxidase activity is assumed to translate into an increased ability of HydPOX, HydPOXs and OkePOXs to prevent and/or control a pathogen, which thus makes HydPOX, HydPOXs and OkePOXs suitable biocontrol agents for medical use. In addition, it is envisioned that also the full-length fragment of OkePOX as defined in SEQ ID NO: 11 is able to achieve the above stated effects.

Pathogens in the context of a (bacterial) heme peroxidase or of a functional fragment thereof for medical use may *inter alia* comprise fungi or pathogenic bacteria.

Without being limiting, fungi may be selected from the group consisting of *Candida, Cladosporium, Aspergillus, Fusarium, Glomus, Alternaria, Penicillium* and *Cryptococcus.*

Without being limiting, pathogenic bacteria may be selected from the group consisting of *Actinomyces, Arachnia (Propionibacterium propionicus), Bacteroides, Bifidobacterium, Eubacterium, Fusobacterium, Lactobacillus, Leptotrichia, Peptococcus, Peptostreptococcus, Propionibacterium, Selenomonas, Treponema* and *Veillonella.*

In one embodiment, a composition comprising one or more bacterial heme peroxidase as defined in any one of SEQ ID NOs: 1, 18, 11, or 25-27,

a reducing agent, and

(i) hydrogen peroxide, and/or
(ii) a hydrogen-peroxide donor system,

in aqueous solution for use as a medicament is provided.

In a further embodiment a composition comprising one or more bacterial heme peroxidase as defined in any one of SEQ ID NOs: 1, 18, 11, or 25-27,

a reducing agent, and

(i) hydrogen peroxide, and/or
(ii) a hydrogen-peroxide donor system,

in aqueous solution for use in the treatment of an infection with a pathogen in or on a human or animal body is provided..

Thus, a (bacterial) heme peroxidase/functional fragment(s) thereof for medical use in preventing and/or controlling a pathogen in or on the human or animal body may be applied to said pathogen with a reducing agent; and/or (i) a hydrogen peroxide and/or (ii) a hydrogen-peroxide donor system in aqueous solution. In a preferred embodiment, a (bacterial) heme peroxidase/functional fragment(s) thereof may be applied to said pathogen with a reducing agent and (i) hydrogen peroxide and/or (ii) a hydrogen-peroxide donor system in aqueous solution. In an even more preferred embodiment, a (bacterial) heme peroxidase/functional fragment(s) thereof may be applied to said pathogen with a reducing agent and either (i) hydrogen peroxide or (ii) a hydrogen-peroxide donor system in aqueous solution. As is also evident from Example 8, a (bacterial) heme peroxidase of the present invention may be applied to said pathogen with a reducing agent such as iodide and hydrogen peroxide (i.e. its substrate) in aqueous solution. However, since its substrate (being hydrogen peroxide) is an unstable molecule, it may be particularly preferred for medical applications that a (bacterial) heme peroxidase/functional fragment(s) thereof of the present invention may be applied to said pathogen with a reducing agent and a hydrogen-peroxide donor system in aqueous solution.

Thus, a system comprising the (bacterial) heme peroxidase/functional fragment(s) thereof for medical use in preventing and/or controlling a pathogen in or on the human or animal body may be regarded as at least a two-component system. However, as described above, it may be preferred that the system comprising the (bacterial) heme peroxidase/functional fragment(s) thereof for medical use in preventing and/or controlling a pathogen in or on the human or animal body, may be a three-component system comprising the (bacterial) heme peroxidase/functional fragment(s) thereof of the present invention, a reducing agent and hydrogen peroxide or a hydrogen-peroxide donor system in aqueous solution.

An aqueous solution, i.e. a water-based solution, may be necessary for the (bacterial) heme peroxidase/functional fragment(s) thereof to exert its antimicrobial effect. However, it may not be necessary that a system comprising the (bacterial) heme peroxidase/functional fragment thereof together with a reducing agent and/or (i) hydrogen peroxide and/or (ii) a hydrogen-peroxide donor system may be formulated as an aqueous solution. In one embodiment, the addition of water to these components which may be formulated as a powder, paste, ointment etc may give the (bacterial) heme peroxidase or its functional fragment(s) its ability to exert its antimicrobial effect while simultaneously ensuring an extended shelf life (since no enzymatic reaction may occur prior to the addition of water and thus no reaction components may be consumed). In certain aspects, when a (bacterial) heme peroxidase of the present invention or a functional fragment thereof may be contained in a paste such as a toothpaste for example, contacting the toothpaste to saliva may be sufficient to provide an aqueous solution, i.e. to give the (bacterial) heme peroxidase or the functional fragment thereof its ability to exert its antimicrobial effect.

Reducing agents in this context may be agents that (can) reduce other agents. Suitable reducing agents may, *inter alia,* be selected from the group consisting of iodide (I⁻), bromide (Br) or thiocyanate (SCN⁻). As is also evident from the appended Examples, in particular Example 5 and 8, iodide (I⁻) may be used as reducing agent since it is able to reduce $H_2O_2$ to $H_2O$ and $O_2$.

Since hydrogen peroxide is an unstable molecule, it may be particularly preferred that a (bacterial) heme peroxidase or functional fragment(s) thereof for medical use in preventing and/or controlling a pathogen may be applied to a pathogen with a reducing agent and a hydrogen-peroxide donor system (instead of hydrogen peroxide itself) in aqueous solution which ensures the indirect hydrogen peroxide substrate supply via sugar oxidation. A suitable hydrogen-peroxide donor system may preferably comprise an oxidase and a corresponding sugar substrate which the oxidase is specific for. Exemplary preferred hydrogen-peroxide donor systems, without being limiting, may comprise, *inter alia,* glucose oxidase/glucose or galactose oxidase/galactose. As an alternative hydrogen-peroxide donor system that may not be based on an oxidase or a corresponding sugar substrate, sodium percarbonate or stabilized hydrogen peroxide may be used.

In one embodiment, a (bacterial) heme peroxidase or functional fragment(s) thereof for medical use may be co-formulated with at least one further agent. In other words, a (bacterial) heme peroxidase/a functional fragment thereof, a reducing agent and/or (i) hydrogen peroxide and/or (ii) a hydrogen-peroxide donor system in aqueous solution may be co-formulated with at least one further agent. Said at least one further agent may be selected from the group consisting of ionic compounds, sugars, inorganic compounds, organic compounds, non-ionic compounds, amino acids, peptides, lipids, and/or proteins.

The (bacterial) heme peroxidase/the functional fragment(s) thereof for use in preventing and/or controlling a pathogen in or on the human or animal body may also be co-formulated with abrasives or polishing materials, fluorid ion-providing agents, thickening agents, foaming agents, whitening agents, antibacterial proteins, neutralizing agents (bicarbonate), flavoring agents, sweeteners, preservatives and/or other basic ingredients.

In one embodiment, the (bacterial) heme peroxidase/functional fragment(s) thereof for use in preventing and/or controlling a pathogen in or on the human or animal body may be formulated in a liquid, lotion, ointment, spray, tonic, powder and/or a paste like a toothpaste. In one embodiment the (bacterial) heme peroxidase/functional fragment(s) thereof may be formulated as lozenge or chewing gum.

The (bacterial) heme peroxidase/functional fragment(s) thereof for use in preventing and/or controlling a pathogen in or on the human or animal body may be used at a rate of about 1 mg/L to about 100 mg/L, preferably wherein said (bacterial) heme peroxidase/functional fragment(s) thereof may be used at a rate of about 10 mg/L to about 50 mg/L.

The (bacterial) heme peroxidase/functional fragment(s) thereof for use in preventing and/or controlling a pathogen in or on the human or animal body may be used at a pH of from about 2 to about 10. In a preferred embodiment, the (bacterial) heme peroxidase may be used at a pH of from about 4 to about 6, in particular at a pH of about 5 as is also evident from Example 7 and Figure 6.

The (bacterial) heme peroxidase/functional fragment(s) thereof for use in preventing and/or controlling a pathogen in or on the human or animal body may be used at a temperature of from about 10 °C to about 60 °C. As is also evident from Example 6 and Figure 5, the (bacterial) heme peroxidase for medical use may be used up to about 60 °C without significant loss of enzyme activity which makes it suitable for medical applications at body temperature (about 37 °C) for example.

C. Methods comprising a (bacterial) heme peroxidase of the present invention for non-medical use

The present invention also relates to a non-therapeutic method for preventing and/or controlling the growth and/or the spreading of a pathogen, said method comprising contacting the pathogen with one or more bacterial heme peroxidase as defined in SEQ ID NO: 1 (HydPOX), SEQ ID NO: 18 or 26 (HydPOXs), SEQ ID NO: 11 (OkePOX), or SEQ ID NO: 25 or 27 (OkePOXs),

wherein said contacting of said pathogen with the bacterial heme peroxidase comprises the co-administration of said bacterial heme peroxidase with a reducing agent, and

(i) hydrogen peroxide and/or
(ii) a hydrogen-peroxide donor system;

in aqueous solution.

The method may comprise applying a sufficient amount of a (bacterial) heme peroxidase and/or of (a) functional fragment(s) thereof on said food or plants to reduce the number of cells of said pathogen. Thus, the present method may also be employed in the broadest sense for plant and/or crop protection and pathogen control in for instance agriculture, horticulture, vegetable growing, ornamental plant cultivation, fruit growing, bulb growing, the culture of potted plants, forestry etc., and as consumer product for indoor plants.

The (bacterial) heme peroxidase/functional fragment(s) thereof which may be employed in this method may be derived/obtained from *Hydrocoleum sp.* or *Okeania sp.* cyanobacterial origin. In a preferred embodiment, the (bacterial) heme peroxidase which may be employed in this method may be a heme peroxidase of *Hydrocoleum sp.* or *Okeania sp.* as defined in SEQ ID NO: 1, and/or SEQ ID NO: 18, and/or SEQ ID NO: 11, and/or SEQ ID NO: 25-27 (see above).

One exemplary functional fragment of SEQ ID NO: 1 that may also be employed in in this context is defined in SEQ ID NO: 18. SEQ ID NO: 18 corresponds to SEQ ID NO: 1 but is missing amino acids 1 to 116 of SEQ ID NO: 1. Therefore, the functional fragment which is defined in SEQ ID NO: 18 represents the amino acid sequence from position 117 to position 659 of SEQ ID NO: 1. As is evident by comparison from SEQ ID NO: 1 and SEQ ID NO: 18, SEQ ID NO: 18 shares 543 consecutive amino acids with SEQ ID NO: 1. Therefore, the amino acid sequence of the functional fragment as defined in SEQ ID NO: 18 may be about 82% identical to SEQ ID NO: 1.

In certain aspects, it may be necessary that the functional fragment as defined in SEQ ID NO: 18 may be preceded by a methionine immediately at the N-terminus of the functional fragment.

One exemplary functional fragment of SEQ ID NO: 11 is provided in SEQ ID NO: 25. SEQ ID NO: 25 corresponds to SEQ ID NO: 11 but is missing amino acids 1 to 116 of SEQ ID NO: 11. Therefore, the functional fragment which is defined in SEQ ID NO: 25 represents the amino acid sequence from position 117 to position 659 of SEQ ID NO: 11. As is evident by comparison from SEQ ID NO: 11 and SEQ ID NO: 25, SEQ ID NO: 25 shares 543 consecutive amino acids with SEQ ID NO: 11. Therefore, the amino acid sequence of the functional fragment as defined in SEQ ID NO: 25 may be about 82% identical to SEQ ID NO: 11.

In certain aspects, it may be necessary that the functional fragment as defined in SEQ ID NO: 25 may be preceded by a methionine immediately at the N-terminus of the functional fragment.

SEQ ID NO: 11 discloses a peroxidase from *Okeania hirsuta* (wildtype amino acid sequence of the corresponding bacterial heme peroxidase is defined in SEQ ID NO: 11; see above and a fragment thereof as defined in SEQ ID NO: 25 or 27). These two exemplary (bacterial) heme peroxidases which may also be employed in this method may share a 90.4% (bacterial peroxidase from *Okeania sp. SIO2C9*) and 91.8% (bacterial peroxidase from *Okeania hirsuta)* amino acid sequence homology with HydPOX as defined in SEQ ID NO: 1.

In one embodiment, the nucleotide sequence of a (bacterial) heme peroxidase/functional fragment(s) thereof of this method may be codon-optimized for recombinant protein expression in bacteria or mammalian cells, preferably wherein the nucleotide sequence of said (bacterial) heme peroxidase/functional fragment(s) thereof may be codon-optimized for recombinant protein expression in bacteria, more preferably wherein the nucleotide sequence of said (bacterial) heme peroxidase/functional fragment(s) thereof may be codon-optimized for recombinant protein expression in *Bacillus,* most preferably wherein the nucleotide sequence of said (bacterial) heme peroxidase/functional fragment(s) thereof may be codon-optimized for recombinant protein expression in *Bacillus subtilis.*

Therefore, while the wildtype nucleotide sequence of the preferred (bacterial) heme peroxidase that corresponds to SEQ ID NO: 1 is defined and illustrated in SEQ ID NO: 8 above, various codons may be replaced by synonymous codons (i.e., codons that encode for the same amino acid but may be more frequently used in a given host such as *Bacillus subtilis)* in the codon-optimized nucleotide sequence as defined and illustrated in SEQ ID NO: 9 (see above). Additionally, the nucleic acid encoding the preferred peroxidases as defined in SEQ ID NO: 1, and/or SEQ ID NO: 18, and/or SEQ ID NO: 11, and/or SEQ ID NO: 25-27 can be codon optimized for recombinant expression, e.g. in *Bacillus subtilis.* Exemplary codon optimized nucleic acid sequences are provided in SEQ ID NOs: 2, 9, 19, 21 and 24.

Therefore, codon-optimization of the (bacterial) heme peroxidase/functional fragment(s) thereof which may be employed in the present method may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase with synonymous codons that lead to increased levels of RNA-transcription in *Bacillus,* preferably wherein the codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase/functional fragment(s) thereof with synonymous codons that lead to increased levels of RNA-transcription in *Bacillus subtilis.* A person skilled in the art is aware of means and methods to perform such a codon-optimization.

In accordance with the present invention, the (bacterial) heme peroxidase/functional fragment(s) thereof which may be employed in this method may be recombinantly or stably expressed by bacteria or mammalian cells. It may be preferred that the (bacterial) heme peroxidase/functional fragment(s) thereof may be recombinantly expressed by bacteria, preferably by *Bacillus,* more preferably by *Bacillus subtilis.* Recombinant protein production of the (bacterial) heme peroxidase/functional fragment(s) thereof may involve the secretion of the (bacterial) heme peroxidase/functional fragment(s) thereof into the bacterial expression culture supernatant, periplasmic or cytoplasmic protein expression, wherein the secretion of the (bacterial) heme peroxidase/functional fragment(s) thereof into the bacterial expression culture supernatant may be preferred.

In one embodiment, the (bacterial) heme peroxidase/functional fragment(s) thereof which may be employed in the present method may comprise a N- and/or C-terminally linked signal peptide, purification tag and/or a protease cleavage site. Exemplary non-limiting signal peptides which may be used may be derived/obtained and selected from the group consisting of a signal peptide of the extracellular *Bacillus subtilis* protease nprE, a signal peptide of spA, phoA, ribose binding protein, pelB, ompA, ompT, dsbA, torA, torT, tolT, or signal peptides from the TAT secretion pathway in bacteria. Non-limiting (epitope) tags or purification tags which may be used may be selected from the group consisting of $His_6$-tag, glutathione S-transferase (GST), maltose binding protein (MBP), calmodulin binding peptide (CBP), intein-chitin binding domain (intein-CBD) tag, streptavidin, (Twin) Strep-tag (I/II), flag-tag, HA-tag, c-myc tag, V5-tag, T7-tag, NE-tag, HaloTag, SUMO-tag. (Epitope) tags or purification tags may be detected with detection reagents such as detectable monoclonal or polyclonal antibodies/antibody-conjugates in applications such as Western blotting for example. The (bacterial) heme peroxidase/functional fragment(s) thereof which may be employed in this method may further be linked to detectable reporter tags such as β-galactosidase (β-gal), alkaline phosphatase (AP), chloramphenicol acetyl transferase (CAT), and horseradish peroxidase (HRP) or fluorescent reporter proteins such as (e)GFP, (e)CFP, (e)BFP, (e)YFP, (e) RFP, mCherry, mRuby or mOrange. Non-limiting protease cleavage sites that may be used comprise cleavage sites of proteases selected from the group consisting of TEV-protease, enteropeptidase, thrombin, factor Xa, rhinovirus 3C protease, carboxypeptidase A, carboxypeptidase B, DAPase. "N- and/or C-terminally linked" in the context of a (bacterial) heme peroxidase/functional fragment(s) thereof of this method may be understood to mean that a signal peptide, purification tag and/or protease cleavage site may be genetically fused in-frame with the 5' and/or 3' end of the coding sequence of the (bacterial) heme peroxidase/ functional fragment(s) thereof. In instances where a signal peptide, purification tag, protease cleavage site, and/or fluorescent reporter protein which already encode an initial methionine may be fused to the 5' end of the (bacterial) heme peroxidase/functional fragment(s) thereof the initial methionine of the (bacterial) heme peroxidase/functional fragment(s) thereof may be removed.

In an alternative embodiment, the (bacterial) heme peroxidase of the present method or the functional fragment(s) thereof may not comprise a N- and/or C-terminally linked signal peptide, purification tag and/or a protease cleavage site.

In a preferred embodiment, the (bacterial) heme peroxidase of the present method or the functional fragment(s) thereof may comprise a signal peptide, preferably a signal peptide of an extracellular *Bacillus subtilis* protease, and a $His_6$-tag.

The (bacterial) heme peroxidase of the present method or the functional fragment(s) thereof may be purified from bacterial expression culture supernatant or may at least be separated from the bacterial cell mass. The skilled person is aware of means and methods to purify the (bacterial) heme peroxidase of the present method or the functional fragment(s) thereof from the bacterial expression culture supernatant. Exemplary purification workflows are well known in the art and may involve the centrifugation of the bacterial expression culture at about 5,000 g to about 18,000 g for about 5 to about 45 minutes to separate the bacterial cell mass from the bacterial expression culture supernatant. The bacterial expression culture supernatant may optionally be sterile filtrated. The (bacterial) heme peroxidase/functional fragment(s) thereof may subsequently be purified from the sterile filtrated bacterial expression culture supernatant by one or more purification methods which may be selected from the group consisting of immobilized metal affinity chromatography (IMAC), ion-exchange chromatography, affinity-chromatography, size-exclusion chromatography, gel filtration chromatography. In one embodiment, the (bacterial) heme peroxidase/functional fragment(s) thereof may comprise a $His_6$-tag for purification via immobilized metal affinity chromatography. The purified (bacterial) heme peroxidase/functional fragment(s) thereof may be dialyzed against an appropriate diluent, such as standard phosphate buffered saline, concentrated and snap-frozen in liquid nitrogen. In some aspects, the purified (bacterial) heme peroxidase/functional fragment(s) thereof may be lyophilized using standard dry freezing protocols.

The (bacterial) heme peroxidase of the present method (and as defined in SEQ ID NO: 1, and/or SEQ ID NO: 18, and/or SEQ ID NO: 11, and/or SEQ ID NO: 25-27) or the functional fragment(s) thereof may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, or at least 300% increased peroxidase activity in the standard ABTS activity assay compared to bovine lactoperoxidase or LspPOX, whose "reference" peroxidase activity may be measured under identical conditions as is also evident from Example 12 and Figure 8B, Table 5. In one preferred embodiment, said heme peroxidase or (a) functional fragment(s) thereof has/have at least 10% increased peroxidase activity in the standard ABTS activity assay compared to bovine lactoperoxidase. In one preferred embodiment, the (bacterial) heme peroxidase or the functional fragment(s) thereof may have at least 30% increased peroxidase activity in the standard ABTS activity assay compared to bovine lactoperoxidase.

In another preferred embodiment, said heme peroxidase or (a) functional fragment(s) thereof has/have at least 100% increased peroxidase activity in the standard ABTS activity assay compared to LspPOX. In another preferred embodiment, said heme peroxidase or (a) functional fragment(s) thereof has/have at least 150% increased peroxidase activity in the standard ABTS activity assay compared to LspPOX. In another preferred embodiment, said heme peroxidase or (a) functional fragment(s) thereof has/have at least 200% increased peroxidase activity in the standard ABTS activity assay compared to LspPOX.

The (bacterial) heme peroxidase of the present method (and as defined in SEQ ID NO: 1, and/or SEQ ID NO: 18, and/or SEQ ID NO: 11, and/or SEQ ID NO: 25-27) or the functional fragment(s) thereof may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, at least 300%, at least 310%, at least 320%, at least 330%, at least 340%, at least 350%, at least 360%, at least 370%, at least 380%, at least 390%, or at least 400% increased peroxidase activity in the thymol blue assay compared to bovine lactoperoxidase or LspPOX, whose "reference" peroxidase activity may be measured under identical conditions as is also evident from Example 13 and Figure 9B, Table 7.

In one preferred embodiment, said heme peroxidase or (a) functional fragment(s) thereof has/have at least 100% increased peroxidase activity in the thymol blue assay compared to bovine lactoperoxidase or LspPOX. In one preferred embodiment, said heme peroxidase or (a) functional fragment(s) thereof has/have at least 200% increased peroxidase activity in the thymol blue assay compared to bovine lactoperoxidase or LspPOX.

As is also evident from the appended figures, in particular Fig. 8B and Fig. 9B, HydPOX, HydPOXs and OkePOXs surprisingly exhibits an increased peroxidase activity compared to LpoPOX and LspPOX in two independent enzymatic activity assays. In the standard ABTS activity assay (Example 12, Table 5), HydPOX exhibits about 98% increased peroxidase activity, HydPOXs exhibits about 56% increased peroxidase activity, and OkePOXs exhibits about 131% increased peroxidase activity compared to LpoPOX and HydPOX exhibits about 184% increased peroxidase activity, HydPOXs exhibits about 125% increased peroxidase activity and OkePOXs exhibits about 232% increased peroxidase activity compared to LspPOX. In the thymol blue assay (halogenation assay; Example 13, Table 7), HydPOX exhibits about 299% increased peroxidase activity, HydPOXs exhibits about 233% increased peroxidase activity, and OkePOXs exhibits about 348% increased peroxidase activity compared to LpoPOX and HydPOX exhibits about 161% increased peroxidase activity, HydPOXs exhibits about 143% increased peroxidase activity and OkePOXs exhibits about 202% increased peroxidase activity compared to LspPOX. Since HydPOX, HydPOXs and OkePOXs thus exhibit increased peroxidase activity compared to LpoPOX (and/or LspPOX), this increased peroxidase activity is assumed to translate into an increased ability of HydPOX, HydPOXs and OkePOXs to prevent and/or control a pathogen, which thus makes HydPOX, HydPOXs and OkePOXs suitable biocontrol agents for non-medical use. In addition, it is envisioned that also the full-length fragment of OkePOX as defined in SEQ ID NO: 11 is able to achieve the above stated effects.

Pathogens which may be prevented and/or controlled by the present method may *inter alia* be fungi or pathogenic bacteria as is also evident from Example 8.

Fungi may preferably be selected from moulds and yeasts. Such fungi without being limiting, may *inter alia* be selected from the group consisting of *Botryotinia* spp ("grey moulds"), such as for instance *B. fuckeliana* (anamorphic *Botrytis cinerea*), *Didymella* spp, such as for instance *D. bryonia* (= M*ycospherella* in *Cucurbitaceae*), *D. lycopersici* (= cancer in tomato), *Puccunia* spp ("rusts"), such as for instance *P. horiana* (= Japanese rust), *Sphaerotheca* spp ("true mildew"), such as for instance *S. fuliginea* (mildew in cucumber) and *S. pannose* (mildew in rose), *Erysiphe* spp, *Oidium* spp and *Leveillula Taurica* (also true mildew types), *Fusarium* spp ("foot rot and/or wilt disease"), *Phytophtora* spp ("foot and/or root disease), such as *Phytophthora infestans, Pythium* spp ("foot disease"), *Plasmopara, Peronospora,* and *Sclerospora* spp (the downy mildew types), *Rhizoctonia, Verticillium* and *Sclerotinia* spp (causes of spot), *Rhizopus* and *Penicillium* spp (causes of (storage) rot) and *Venturia* spp (causes of scab). Fungi may additionally be selected from the group consisting of: *Colletotrichum gloeosporioides, Penicillium expansum, Penicillium digitatum, Penicillium italicum, Geotrichum citri-aurantii, Zymoseptoria tritici, Phytophthora infestans* and *Puccinia triticina.*

Without being limiting, pathogenic bacteria may *inter alia* be selected from the group consisting of *Erwinia amylovora, Erwinia chrysanthemi, Pseudomonas syringae, Xanthomonas campestris, Curtobactrium flaccumfaciens, Clavibacter michiganensis, Agrobacterium tumefaciens, Xanthomonas campestris p.v. phaseoli, Pseudomonas syringae pv. lachrymans, Pseudomonas syringae pv. tomato, Streptomyces scabies, Xanthomonas campestris pv. campestris* and *Xanthomonas capestris pv. Vesicatoria.*

Food in the context of the present method for non-medical use may *inter alia* comprise edible and non-edible produce as produced by plants or animals. Edible produce in this context may be selected from the group consisting of leaves, stems, twigs, roots, trunks, limbs, shoots, fruits (including nuts) and processed food products including but not limited to dairy products like cheese or fermented milk products including yoghurts, or meat products like sausages or processed meat like hams etc. Non-edible produce in this context may be selected from the group consisting of horticulture products such as flowers, leaves, whole plants.

In one embodiment, a non-therapeutic method for preventing and/or controlling the growth and/or the spreading of a pathogen, said method comprising contacting the pathogen with one or more bacterial heme peroxidase as defined in SEQ ID NO: 1 (HydPOX), SEQ ID NO: 18 or 26 (HydPOXs), SEQ ID NO: 11 (OkePOX), or SEQ ID NO: 25 or 27 (OkePOXs),

wherein said contacting of said pathogen with the bacterial heme peroxidase comprises the co-administration of said bacterial heme peroxidase with a reducing agent, and

(i) hydrogen peroxide and/or
(ii) a hydrogen-peroxide donor system;

in aqueous solution is provided.

Furthermore, in one embodiment a non-therapeutic use of a composition comprising one or more bacterial heme peroxidase as defined in any one of SEQ ID NOs: 1, 18, 11, or 25-27 as a pesticide, wherein the composition further comprises a reducing agent and

(i) hydrogen peroxide and/or
(ii) a hydrogen-peroxide donor system

in aqueous solution is provided.

In this context, a (bacterial) heme peroxidase of the present method may be applied to food or plants with a reducing agent; and (i) a hydrogen peroxide and/or (ii) a hydrogen-peroxide donor system in aqueous solution. a (bacterial) heme peroxidase/functional fragment(s) thereof of the present method may be applied to food or plants with a reducing agent and (i) hydrogen peroxide and/or (ii) a hydrogen-peroxide donor system in aqueous solution. In an even more preferred embodiment, a (bacterial) heme peroxidase of the present method or functional fragment(s) thereof may be applied to food or plants with a reducing agent and either (i) hydrogen peroxide or (ii) a hydrogen-peroxide donor system in aqueous solution. As is also evident from Example 8, a (bacterial) heme peroxidase of the present invention may be applied together with a reducing agent such as iodide and hydrogen peroxide (i.e. its substrate) in aqueous solution. However, since its substrate (being hydrogen peroxide) is an unstable molecule, it may be preferred that a (bacterial) heme peroxidase of the present method or functional fragment(s) thereof may be applied together with a reducing agent and a hydrogen-peroxide donor system in aqueous solution. In some embodiments, the above explanations apply mutatis mutandis for the application of a (bacterial) heme peroxidase/functional fragment(s) thereof on nonbiological surfaces.

Thus, a system comprising the (bacterial) heme peroxidase/functional fragment(s) thereof which may be employed in a method for preventing and/or controlling a pathogen on food or plants, may be regarded as at least a two-component system. However, as described above, it may be preferred that the system comprising the (bacterial) heme peroxidase/functional fragment(s) thereof which may be employed in a method for preventing and/or controlling the growth and/or the spreading of a pathogen, may be a three-component system comprising the (bacterial) heme peroxidase of the present invention and/or functional fragment(s) thereof, a reducing agent and hydrogen peroxide or a hydrogen-peroxide donor system in aqueous solution.

An aqueous solution, i.e. a water-based solution, may be necessary for the (bacterial) heme peroxidase/functional fragment(s) thereof to exert its/their antimicrobial effect. However, it may not be necessary that a system comprising the (bacterial) heme peroxidase/functional fragment(s) thereof together with a reducing agent and/or (i) hydrogen peroxide and/or (ii) a hydrogen-peroxide donor system may be formulated as an aqueous solution. In one embodiment, the addition of water to these components which may be formulated as a powder, paste, ointment etc may give the (bacterial) heme peroxidase/functional fragment(s) thereof its/their ability to exert its/their antimicrobial effect while simultaneously ensuring an extended shelf life (since no enzymatic reaction may occur prior to the addition of water and thus no reaction components may be consumed).

Reducing agents in the context of this invention may be agents that (can) reduce other agents. In other words, a reducing agent is a chemical species that may "donate" (an) electron(s) to an electron recipient (which is called an oxidizing agent). Suitable reducing agents in the context of this invention may be selected from the group consisting of iodide ($I^-$), bromide ($Br^-$) or thiocyanate ($SCN^-$). As is also evident from the appended Examples, in particular Example 5 and 8, iodide ($I^-$) may preferably be used as reducing agent. Without being limiting, a corresponding salt which may be used as reducing agent may *inter alia* be kaliumiodide (KI) for example.

Since hydrogen peroxide is an unstable molecule, it may be preferred that a (bacterial) heme peroxidase of the present invention or functional fragment(s) thereof may be applied to food or plants with a reducing agent and a hydrogen-peroxide donor system (instead of hydrogen peroxide itself) in aqueous solution which ensures the indirect hydrogen peroxide substrate supply via sugar oxidation. A suitable hydrogen-peroxide donor system may preferably comprise an oxidase and a corresponding sugar substrate which the oxidase is specific for. Exemplary preferred hydrogen-peroxide donor systems, without being limiting, may comprise, *inter alia,* glucose oxidase/glucose or galactose oxidase/galactose. As an alternative hydrogen-peroxide donor system that may not be based on an oxidase or a corresponding sugar substrate, sodium percarbonate or stabilized hydrogen peroxide may be used.

In one embodiment, a (bacterial) heme peroxidase of the present method or (a) functional fragment(s) thereof may be co-formulated with at least one further agent. In other words, a (bacterial) heme peroxidase/(a) functional fragment(s) thereof, a reducing agent and/or (i) hydrogen peroxide and/or (ii) a hydrogen-peroxide donor system in aqueous solution may preferably be co-formulated with at least one further agent. The at least one further agent may be selected from the group consisting of oils, spreading agents, emulsifiers, ionic compounds, sugars, inorganic compounds, organic compounds, non-ionic compounds, amino acids, peptides, lipids, and/or proteins.

In one embodiment the at least one further agent may be an agriculturally acceptable carrier such as oil or a spreading agent which ensure a good distribution of the formulated (bacterial) heme peroxidase/functional fragment(s) thereof on plants, plant parts and food/crop. The term "agriculturally acceptable carrier" in this context refers to carriers which are known and accepted in the art for the formulation of compositions for agricultural or horticultural use. The oil may be selected from the group consisting of mineral oils, vegetable oils, animal oils or may be a mixture of one or more oils from one or more of these groups. Examples of vegetable oils may be peanut oil, sesame oil, rape-seed oil, linseed oil, castor oil, soybean oil, corn germ oil, cotton-seed oil. A suitable animal oil may be fish oil. A suitable mineral oil may be paraffin or kerosine-type oils. Spreading agents may be ethoxylated alcohols and phosphatidyl lipids. Furthermore, it may also be envisaged that one or more adhesives may be added.

In accordance with the invention, the (bacterial) heme peroxidase of the present method or (a) functional fragment(s) thereof may be formulated in a powder, liquid, spray, tonic, paste, lotion and/or an ointment. In certain instances where the (bacterial) heme peroxidase/functional fragment(s) thereof may be formulated in a powder, said powder may have to be reconstituted with a suitable diluent, such as for example water which also allows the (bacterial) heme peroxidase/functional fragment(s) thereof to exert its/their antimicrobial effect. After reconstitution, the (bacterial) heme peroxidase of the present method or functional fragment(s) thereof may be applied to food, crops or plants by means of spraying, sprinkling, atomizing, overhead spraying, watering, immersing, and/or drip irrigation.

The (bacterial) heme peroxidase/ functional fragment(s) thereof of the present method may be used at a rate of about 1 mg/L to about 100 mg/L, preferably wherein said (bacterial) heme peroxidase/functional fragment(s) thereof may be used at a rate of about 10 mg/L to about 50 mg/L.

The (bacterial) heme peroxidase of the present method or the functional fragment(s) thereof may be used at a pH of from about 2 to about 10. In a preferred embodiment, the (bacterial) heme peroxidase may be used at a pH of from about 4 to about 6, in particular at a pH of about 5 as is also evident from Example 7 and Figure 6.

The (bacterial) heme peroxidase of the present method or the functional fragment(s) thereof may be used at a temperature of from about 10 °C to about 60 °C. As is also evident from Example 6 and Figure 5, the (bacterial) heme peroxidase of the present method may be used up to about 60 °C without significant loss of enzyme activity which makes it suitable for non-medical applications in agriculture for example.

E. Compositions comprising a (bacterial) heme peroxidase of the present invention for non-medical use

The present invention also relates to a non-therapeutic use of a composition comprising one or more bacterial heme peroxidase as defined in any one of SEQ ID NOs: 1, 18, 11, or 25-27 as a pesticide, wherein the composition further comprises a reducing agent and

  (i) hydrogen peroxide and/or
  (ii) a hydrogen-peroxide donor system

in aqueous solution. The pathogen may be on food or plants. Thus, such compositions for non-medical use of the present invention may be employed for plant and/or crop protection and pathogen control in for instance agriculture, horticulture, vegetable growing, ornamental plant cultivation, fruit growing, bulb growing, the culture of potted plants, forestry etc., and as consumer product for indoor plants. The present invention thus also provides for biocontrol agent for plants comprising the (bacterial) heme peroxidase/functional fragment(s) thereof as provided herein. The herein described (bacterial) heme peroxidase/functional fragment(s) thereof is/are characterized by their particularly favorable enzymatic activity, as can be inter alia measured by enzymatic tests known in the art.

The (bacterial) heme peroxidase as comprised in such compositions for non-medical use and/or (the) functional fragment(s) thereof may be derived/obtained from *Hydrocoleum sp.* or *Okeania sp.* cyanobacterial origin. The (bacterial) heme peroxidase in such compositions for non-medical use may be a heme peroxidase of *Hydrocoleum sp.* or *Okeania sp.* as defined in SEQ ID NO: 1, and/or SEQ ID NO: 18, and/or SEQ ID NO: 11, and/or SEQ ID NO: 25-27 (see above).

One exemplary functional fragment of SEQ ID NO: 1 that may also be employed in in this context is defined in SEQ ID NO: 18. SEQ ID NO: 18 corresponds to SEQ ID NO: 1 but is missing amino acids 1 to 116 of SEQ ID NO: 1. Therefore, the functional fragment which is defined in SEQ ID NO: 18 represents the amino acid sequence from position 117 to position 659 of SEQ ID NO: 1. As is evident by comparison from SEQ ID NO: 1 and SEQ ID NO: 18, SEQ ID NO: 18 shares 543 consecutive amino acids with SEQ ID NO: 1. Therefore, the amino acid sequence of the functional fragment as defined in SEQ ID NO: 18 is about 82% identical to SEQ ID NO: 1.

In certain aspects, it may be necessary that the functional fragment as defined in SEQ ID NO: 18 may be preceded by a methionine immediately at the N-terminus of the functional fragment. One exemplary functional fragment of SEQ ID NO: 11 is provided in SEQ ID NO: 25. SEQ ID NO: 25 corresponds to SEQ ID NO: 11 but is missing amino acids 1 to 116 of SEQ ID NO: 11. Therefore, the functional fragment which is defined in SEQ ID NO: 25 represents the amino acid sequence from position 117 to position 659 of SEQ ID NO: 11. As is evident by comparison from SEQ ID NO: 11 and SEQ ID NO: 25, SEQ ID NO: 25 shares 543 consecutive amino acids with SEQ ID NO: 11. Therefore, the amino acid sequence of the functional fragment as defined in SEQ ID NO: 25 may be about 82% identical to SEQ ID NO: 11.

In certain aspects, it may be necessary that the functional fragment as defined in SEQ ID NO: 25 may be preceded by a methionine immediately at the N-terminus of the functional fragment.

SEQ ID NO: 11 discloses a peroxidase from *Okeania hirsuta* (wildtype amino acid sequence of the corresponding bacterial heme peroxidase is defined in SEQ ID NO: 11; see above and a fragment thereof as defined in SEQ ID NO: 25 or 27) as well as (a) corresponding functional fragment(s) thereof. These two exemplary (bacterial) heme peroxidases which may also be employed in such compositions for non-medical use may share a 90.4% (bacterial peroxidase from *Okeania sp. SIO2C9*) and 91.8% (bacterial peroxidase from *Okeania hirsuta*) amino acid sequence homology with HydPOX as defined in SEQ ID NO: 1.

In one embodiment, the nucleotide sequence of a (bacterial) heme peroxidase/functional fragment(s) thereof as comprised in such compositions for non-medical use may be codon-optimized for recombinant protein expression in bacteria or mammalian cells, preferably wherein the nucleotide sequence of said (bacterial) heme peroxidase/functional fragment(s) thereof may be codon-optimized for recombinant protein expression in bacteria, more preferably wherein the nucleotide sequence of said (bacterial) heme peroxidase/functional fragment(s) thereof may be codon-optimized for recombinant protein expression in *Bacillus,* most preferably wherein the nucleotide sequence of said (bacterial) heme peroxidase/ functional fragment(s) thereof may be codon-optimized for recombinant protein expression in *Bacillus subtilis.*

Therefore, while the wildtype nucleotide sequence of the preferred (bacterial) heme peroxidase that corresponds to SEQ ID NO: 1 is defined and illustrated in SEQ ID NO: 8 above, various codons may be replaced by synonymous codons (i.e., codons that encode for the same amino acid but may be more frequently used in a given host such as *Bacillus subtilis)* in the codon-optimized nucleotide sequence as defined and illustrated in SEQ ID NO: 9 (see above). Additionally, the nucleic acid encoding the preferred peroxidases as defined in SEQ ID NO: 1, and/or SEQ ID NO: 18, and/or SEQ ID NO: 11, and/or SEQ ID NO: 25-27 can be codon optimized for recombinant expression, e.g. in *Bacillus subtilis.* Exemplary codon optimized nucleic acid sequences are provided in SEQ ID NOs: 2, 9, 19, 21 and 24.

Therefore, codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase/functional fragment(s) thereof with synonymous codons that lead to increased levels of RNA-transcription in *Bacillus,* preferably wherein the codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase/ functional fragment(s) thereof with synonymous codons that lead to increased levels of RNA-transcription in *Bacillus subtilis.* A person skilled in the art is aware of means and methods to perform such a codon-optimization.

The (bacterial) heme peroxidase/functional fragment(s) thereof as comprised in such compositions for non-medical use may be recombinantly or stably expressed by bacteria or mammalian cells. It may be preferred that the (bacterial) heme peroxidase/functional fragment(s) thereof in such compositions for non-medical use may be recombinantly expressed by bacteria, preferably by *Bacillus,* more preferably by *Bacillus subtilis.* Recombinant protein production of the (bacterial) heme peroxidase/functional fragment(s) thereof may involve the secretion of the (bacterial) heme peroxidase/functional fragment(s) thereof into the bacterial expression culture supernatant, periplasmic or cytoplasmic protein expression, wherein the secretion of the (bacterial) heme peroxidase/functional fragment(s) thereof into the bacterial expression culture supernatant may be preferred.

In one embodiment, the (bacterial) heme peroxidase as comprised in such compositions for non-medical use and/or (the) functional fragment(s) thereof may comprise a N- and/or C-terminally linked signal peptide, purification tag and/or a protease cleavage site. Exemplary non-limiting signal peptides which may be used may be derived and selected from the group consisting of a signal peptide of the extracellular *Bacillus subtilis* protease nrpE, a signal peptide of spA, phoA, ribose binding protein, pelB, ompA, ompT, dsbA, torA, torT, tolT, or signal peptides from the TAT secretion pathway in bacteria. Non-limiting (epitope) tags or purification tags which may be used may be selected from the group consisting of His$_6$-tag, glutathione S-transferase (GST), maltose binding protein (MBP), calmodulin binding peptide (CBP), intein-chitin binding domain (intein-CBD) tag, streptavidin, (Twin) Strep-tag (I/II), flag-tag, HA-tag, c-myc tag, V5-tag, T7-tag, NE-tag, HaloTag, SUMO-tag. (Epitope) tags or purification tags may be detected with detection reagents such as detectable monoclonal or polyclonal antibodies/antibody-conjugates in applications such as Western blotting for example. The (bacterial) heme peroxidase as comprised in such compositions for non-medical use and/or (the) functional fragment(s) thereof may further be linked to detectable reporter tags such as β-galactosidase (β-gal), alkaline phosphatase (AP), chloramphenicol acetyl transferase (CAT), and horseradish peroxidase (HRP) or fluorescent reporter proteins such as (e) GFP, (e)CFP, (e)BFP, (e)YFP, (e)RFP, mCherry, mRuby or mOrange. Non-limiting protease cleavage sites that may be used may comprise cleavage sites of proteases selected from the group consisting of TEV-protease, enteropeptidase, thrombin, factor Xa, rhinovirus 3C protease, carboxypeptidase A, carboxypeptidase B, DAPase.

"N- and/or C-terminally linked" in the context of a (bacterial) heme peroxidase as comprised in such compositions for non-medical use and/or of (a) functional fragment(s) thereof may be understood to mean that a signal peptide, purification tag and/or protease cleavage site may be genetically fused in-frame with the 5' and/or 3' end of the coding sequence of the (bacterial) heme peroxidase/functional fragment thereof. In instances where a signal peptide, purification tag, protease cleavage site, and/or fluorescent reporter protein which already encode an initial methionine may be fused to the 5' end of the (bacterial) heme peroxidase/functional fragment thereof the initial methionine of the (bacterial) heme peroxidase/functional fragment thereof may be removed.

In an alternative embodiment, the (bacterial) heme peroxidase as comprised in compositions for non-medical use and/or (the) functional fragment(s) thereof may not comprise an N- and/or C-terminally linked signal peptide, purification tag and/or a protease cleavage site.

In a preferred embodiment, the (bacterial) heme peroxidase as comprised in the compositions for non-medical use and/or (the) functional fragment(s) thereof may comprise a signal peptide, preferably a signal peptide of an extracellular *Bacillus subtilis* protease, and a His$_6$-tag.

The (bacterial) heme peroxidase as comprised in such compositions for non-medical use and/or (the) functional fragment(s) thereof may be purified from bacterial expression culture supernatant or may at least be separated from the bacterial cell mass. The skilled person is aware of means and methods to purify the (bacterial) heme peroxidase/functional fragment(s) thereof from the bacterial expression culture supernatant. Exemplary purification workflows are well known in the art and may involve the centrifugation of the bacterial expression culture at about 5,000 g to about 18,000 g for about 5 to about 45 minutes to separate the bacterial cell mass from the bacterial expression culture supernatant. The bacterial expression culture supernatant may optionally be sterile filtrated. The (bacterial) heme peroxidase/functional fragment(s) thereof as comprised in such compositions for non-medical use may subsequently be purified from the sterile filtrated bacterial expression culture supernatant by one or more purification methods which may be selected from the group consisting of immobilized metal affinity chromatography (IMAC), ion-exchange chromatography, affinity-chromatography, size-exclusion chromatography, gel filtration chromatography. In one embodiment, the (bacterial) heme peroxidase/(the) functional fragment(s) thereof may comprise a His$_6$-tag for purification via immobilized metal affinity chromatography. The purified (bacterial) heme peroxidase as comprised in such compositions for non-medical use and/or (the) purified functional fragment(s) thereof may be dialyzed against an appropriate diluent, such as standard phosphate buffered saline, concentrated and snap-frozen in liquid nitrogen. In some aspects, the purified (bacterial) heme peroxidase as comprised in such compositions for non-medical use and/or the purified functional fragment(s) thereof may be lyophilized using standard dry freezing protocols.

The (bacterial) heme peroxidase as comprised in the compositions for non-medical use (and as defined in SEQ ID NO: 1, and/or SEQ ID NO: 18, and/or SEQ ID NO: 11, and/or SEQ ID NO: 25-27) and/or the functional fragment(s) thereof may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, or at least 300% increased peroxidase activity in the standard ABTS activity assay compared to bovine lactoperoxidase or LspPOX, whose "reference" peroxidase activity may be measured under identical conditions as is also evident from Example 12 and Figure 8B, Table 5. In one preferred embodiment, said heme peroxidase or (a) functional fragment(s) thereof has/have at least 10% increased peroxidase activity in the standard ABTS activity assay compared to bovine lactoperoxidase. In one preferred embodiment, the (bacterial) heme peroxidase and/or the functional fragment(s) thereof may have at least 30% increased peroxidase activity in the standard ABTS activity assay compared to bovine lactoperoxidase.

In another preferred embodiment, said heme peroxidase or (a) functional fragment(s) thereof has/have at least 100% increased peroxidase activity in the standard ABTS activity assay compared to LspPOX. In another preferred embodiment, said heme peroxidase or (a) functional fragment(s) thereof has/have at least 150% increased peroxidase activity in the standard ABTS activity assay compared to LspPOX. In another preferred embodiment, said heme peroxidase or (a) functional fragment(s) thereof has/have at least 200% increased peroxidase activity in the standard ABTS activity assay compared to LspPOX.

The (bacterial) heme peroxidase as comprised in the compositions for non-medical use (and as defined in SEQ ID NO: 1, and/or SEQ ID NO: 18, and/or SEQ ID NO: 11, and/or SEQ ID NO: 25-27) and/or the functional fragment(s) thereof may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, at least 300%, at least 310%, at least 320%, at least 330%, at least 340%, at least 350%, at least 360%, at least 370%, at least 380%, at least 390%, or at least 400% increased peroxidase activity in the thymol blue assay compared to bovine lactoperoxidase or LspPOX, whose "reference" peroxidase activity may be measured under identical conditions as is also evident from Example 13 and Figure 9B, Table 7.

In one preferred embodiment, said heme peroxidase or (a) functional fragment(s) thereof has/have at least 100% increased peroxidase activity in the thymol blue assay compared to bovine lactoperoxidase or LspPOX. In one preferred embodiment, said heme peroxidase or (a) functional fragment(s) thereof has/have at least 200% increased peroxidase activity in the thymol blue assay compared to bovine lactoperoxidase or LspPOX.

As is also evident from the appended figures, in particular Fig. 8B and Fig. 9B, HydPOX, HydPOXs and OkePOXs surprisingly exhibits an increased peroxidase activity compared to LpoPOX and LspPOX in two independent enzymatic activity assays. In the standard ABTS activity assay (Example 12, Table 5), HydPOX exhibits about 98% increased peroxidase activity, HydPOXs exhibits about 56% increased peroxidase activity, and OkePOXs exhibits about 131% increased peroxidase activity compared to LpoPOX and HydPOX exhibits about 184% increased peroxidase activity, HydPOXs exhibits about 125% increased peroxidase activity and OkePOXs exhibits about 232% increased peroxidase activity compared to LspPOX. In the thymol blue assay (halogenation assay; Example 13, Table 7), HydPOX exhibits about 299% increased peroxidase activity, HydPOXs exhibits about 233% increased peroxidase activity, and OkePOXs exhibits about 348% increased peroxidase activity compared to LpoPOX and HydPOX exhibits about 161% increased peroxidase activity, HydPOXs exhibits about 143% increased peroxidase activity and OkePOXs exhibits about 202% increased peroxidase activity compared to LspPOX. Since HydPOX, HydPOXs and OkePOXs thus exhibit increased peroxidase activity compared to LpoPOX (and/or LspPOX), this increased peroxidase activity is assumed to translate into an increased ability of HydPOX, HydPOXs and OkePOXs to prevent and/or control a pathogen, which thus makes HydPOX, HydPOXs and OkePOXs suitable biocontrol agents for non-medical use. In addition, it is envisioned that also the full-length fragment of OkePOX as defined in SEQ ID NO: 11 is able to achieve the above stated effects.

Pathogens in the context of the compositions for non-medical use may *inter alia* be fungi or pathogenic bacteria as is also evident from Example 8.

Fungi may preferably be selected from moulds and yeasts. Such fungi without being limiting *may inter alia* be selected from the group consisting of *Botryotinia* spp ("grey moulds"), such as for instance B. *fuckeliana* (anamorphic *Botrytis cinerea*), *Didymella* spp, such as for instance *D. bryonia* (= *Mycospherella* in *Cucurbitaceae*), *D. lycopersici* (= cancer in tomato), *Puccunia* spp ("rusts"), such as for instance *P. horiana* (= Japanese rust), *Sphaerotheca* spp ("true mildew"), such as for instance *S. fuliginea* (mildew in cucumber) and *S. pannose* (mildew in rose), *Erysiphe* spp, *Oidium* spp and *Leveillula Taurica* (also true mildew types), *Fusarium* spp ("foot rot and/or wilt disease"), *Phytophtora* spp ("foot and/or root disease), such as *Phytophthora infestans, Pythium* spp ("foot disease"), *Plasmopara, Peronospora,* and *Sclerospora* spp (the downy mildew types), *Rhizoctonia, Verticillium* and *Sclerotinia* spp (causes of spot), *Rhizopus* and *Penicillium* spp (causes of (storage) rot) and *Venturia* spp (causes of scab). Fungi may additionally be selected from the group consisting of: *Colletotrichum gloeosporioides, Penicillium expansum, Penicillium digitatum, Penicillium italicum, Geotrichum citri-aurantii, Zymoseptoria tritici, Phytophthora infestans* and *Puccinia triticina.*

Without being limiting, pathogenic bacteria may *inter alia* be selected from the group consisting of *Erwinia amylovora, Erwinia chrysanthemi, Pseudomonas syringae, Xanthomonas campestris, Curtobactrium flaccumfaciens, Clavibacter michiganensis, Agrobacterium tumefaciens, Xanthomonas campestris p.v. phaseoli, Pseudomonas syringae pv. lachrymans, Pseudomonas syringae pv. tomato, Streptomyces scabies, Xanthomonas campestris pv. campestris* and *Xanthomonas capestris pv. Vesicatoria.*

Food in the context of the compositions for non-medical use may *inter alia* comprise edible and non-edible produce as produced by plants or animals. Edible produce in this context may be selected from the group consisting of leaves, stems, twigs, roots, trunks, limbs, shoots, fruits (including nuts) and processed food products including but not limited to dairy products like cheese or fermented milk products including yoghurts, or meat products like sausages or processed meat like hams etc. Non-edible produce in this context may be selected from the group consisting of horticulture products such as flowers, leaves, whole plants.

In one embodiment, a non-therapeutic use of a composition comprising one or more bacterial heme peroxidase as defined in any one of SEQ ID NOs: 1, 18, 11, or 25-27 as a pesticide, wherein the composition further comprises a reducing agent and

(i) hydrogen peroxide and/or
(ii) a hydrogen-peroxide donor system

in aqueous solution is provided.

Thus, a (bacterial) heme peroxidase and/or (a) functional fragment(s) thereof of the present invention comprised in a composition for preventing and/or controlling a pathogen on food or plants may be applied with a reducing agent; and (i) a hydrogen peroxide and/or (ii) a hydrogen-peroxide donor system in aqueous solution. In a preferred embodiment, a (bacterial) heme peroxidase/functional fragment(s) thereof of the present composition for preventing and/or controlling a pathogen on food or plants may be applied with a reducing agent and (i) hydrogen peroxide and/or (ii) a hydrogen-peroxide donor system in aqueous solution. It an even more preferred embodiment, a (bacterial) heme peroxidase/functional fragment(s) thereof of the present composition for preventing and/or controlling a pathogen on food or plants may be applied with a reducing agent and either (i) hydrogen peroxide or (ii) a hydrogen-peroxide donor system in aqueous solution. As is also evident from Example 8, a (bacterial) heme peroxidase of the present invention may be applied with a reducing agent such as iodide and hydrogen peroxide (i.e. its substrate) in aqueous solution. However, since its substrate (being hydrogen peroxide) is an unstable molecule, it may be preferred that a (bacterial) heme peroxidase of the present composition and/or (a) functional fragment(s) thereof may be applied with a reducing agent and a hydrogen-peroxide donor system in aqueous solution.

Thus, a system comprising the (bacterial) heme peroxidase/(the) functional fragment(s) thereof which may be employed in a composition for preventing and/or controlling a pathogen on food or plants, may be regarded as at least a two-component system. However, as described above, it may be preferred that the system comprising the (bacterial) heme peroxidase/functional fragment(s) thereof which may be employed in a method for preventing and/or controlling the growth and/or the spreading of a pathogen, may be a three-component system comprising the (bacterial) heme peroxidase/functional fragment(s) thereof of the present invention, a reducing agent, hydrogen peroxide or a hydrogen-peroxide donor system in aqueous solution.

An aqueous solution, i.e. a water-based solution, may be necessary for the (bacterial) heme peroxidase/functional fragment(s) thereof to exert its antimicrobial effect. However, it may not be necessary that a system comprising the (bacterial) heme peroxidase/functional fragment(s) thereof together with a reducing agent and/or (i) hydrogen peroxide and/or (ii) a hydrogen-peroxide donor system may be formulated as an aqueous solution. In one embodiment, the addition of water to these components which may be formulated as a powder, paste, ointment etc may give the (bacterial) heme peroxidase/the functional fragment(s) thereof its/their ability to exert its/their antimicrobial effect while simultaneously ensuring an extended shelf life (since no enzymatic reaction may occur prior to the addition of water and thus no reaction components may be consumed).

Reducing agents in the context of this invention may be agents that (can) reduce other agents. In other words, a reducing agent is a chemical species that may "donate" (an) electron(s) to an electron recipient (which is called an oxidizing agent). Suitable reducing agents in the context of this invention may be selected from the group consisting of iodide (I⁻), bromide (Br⁻) or thiocyanate (SCN⁻). As is also evident from the appended Examples, in particular Example 5 and 8, iodide (I-) may preferably be used as reducing agent. Without being limiting, a corresponding salt which may be used as reducing agent may *inter alia* be kaliumiodide (KI) for example.

Since hydrogen peroxide is an unstable molecule, it may be preferred that a (bacterial) heme peroxidase of the present composition and/or (a) functional fragment(s) thereof may be applied with a reducing agent and a hydrogen-peroxide donor system (instead of hydrogen peroxide itself) in aqueous solution which ensures the indirect hydrogen peroxide substrate supply via sugar oxidation. A suitable hydrogen-peroxide donor system may preferabl comprises an oxidase and a corresponding sugar substrate which the oxidase is specific for. Exemplary preferred hydrogen-peroxide donor systems, without being limiting, may comprise, *inter alia,* glucose oxidase/glucose or galactose oxidase/galactose. As an alternative hydrogen-peroxide donor system that may not be based on an oxidase or a corresponding sugar substrate, sodium percarbonate or stabilized hydrogen peroxide may be used.

In one embodiment, a (bacterial) heme peroxidase of the present composition and/or (a) functional fragment(s) thereof may be co-formulated with at least one further agent. In other words, a (bacterial) heme peroxidase (and/or (a) functional fragment(s) thereof), a reducing agent and/or (i) hydrogen peroxide and/or (ii) a hydrogen-peroxide donor system in aqueous solution may be co-formulated with at least one further agent. Said at least one further agent may be selected from the group consisting of oils, spreading agents, emulsifiers, ionic compounds, sugars, inorganic compounds, organic compounds, non-ionic compounds, amino acids, peptides, lipids, and/or proteins.

In one embodiment the at least one further agent may be an agriculturally acceptable carrier such as oil or a spreading agent which may ensure a good distribution of the formulated (bacterial) heme peroxidase/functional fragment(s) thereof on plants, plant parts and food/crop. The term "agriculturally acceptable carrier" in this context may refer to carriers which are known and accepted in the art for the formulation of compositions for agricultural or horticultural use. The oil may be selected from the group consisting of mineral oils, vegetable oils, animal oils or is a mixture of one or more oils from one or more of these groups. Oils which may be employed may inherently have a greater or lesser degree of antimicrobial effect. Examples of vegetable oils may be peanut oil, sesame oil, rape-seed oil, linseed oil, castor oil, soybean oil, corn germ oil, cotton-seed oil. A suitable animal oil may be fish oil. A suitable mineral oil may be paraffin or kerosine-type oils. Spreading agents may be agents that may be non-ionogenic surface tension-reducing substances like ethoxylated alcohols and phosphatidyl lipids. Furthermore, it may also be envisaged that one or more adhesives may be added. Adhesives ensure for instance that the constituents of the composition may not rinsed off the plant by rain or other conditions. Adhesives may, *inter alia,* be selected from the group consisting of starch, gums such as xanthan gum, gum Arabic and carboxymethyl celluloses (CMCs).

The (bacterial) heme peroxidase as comprised in such compositions for non-medical use and/or the functional fragment(s) thereof may be formulated in a powder, liquid, spray, tonic, paste, lotion and/or an ointment. The compositions for non-medical use may be a ready-to use product. In certain instances where the (bacterial) heme peroxidase/functional fragment(s) thereof may be formulated in a powder, said powder may have to be reconstituted with a suitable diluent, such as for example water which also allows the (bacterial) heme peroxidase/ functional fragment(s) thereof to exert its/their antimicrobial effect. Therefore, the compositions for non-medical use may also be a product that may be diluted with a suitable diluent, such as a water-based diluent or water, prior to use.

For commercial purposes it may be preferred that a formulation may be selected wherein the activity of the (bacterial) heme peroxidase/functional fragment(s) thereof may be delayed as long as possible in order to increase shelf-life of the product which may be achieved by adding the right amount of water/water-based diluent immediately prior to use of the formulation. The "right amount of water/water-based diluent" may be defined as the amount of water needed to adjust the concentrations of all the components of the formulation in order for the (bacterial) heme peroxidase/functional fragment(s) thereof to exert its/their optimal antimicrobial effect. However, if less or more than the right amount of water is added, the person skilled in the art knows that the (bacterial) heme peroxidase/functional fragment(s) thereof may not exert its/their optimal antimicrobial effect.

After reconstitution, the (bacterial) heme peroxidase/functional fragment(s) thereof as comprised in compositions for non-medical use may be applied to food or plants by means of spraying, sprinkling, atomizing, overhead spraying, watering, immersing and/or drip irrigation.

The (bacterial) heme peroxidase/ functional fragment(s) thereof as comprised in such compositions for non-medical use may be used at a rate of about 1 mg/L to about 100 mg/L, preferably wherein said (bacterial) heme peroxidase/functional fragment(s) thereof may be used at a rate of about 10 mg/L to about 50 mg/L.

The (bacterial) heme peroxidase/functional fragment(s) thereof as comprised in such compositions for non-medical use may be used at a pH of from about 2 to about 10. In a preferred embodiment, the (bacterial) heme peroxidase/functional fragment(s) thereof may be used at a pH of from about 4 to about 6, in particular at a pH of about 5 as is also evident from Example 7 and Figure 6.

The (bacterial) heme peroxidase/functional fragment(s) thereof as comprised in such compositions for non-medical use may be used at a temperature of from about 10 °C to about 60 °C. As is also evident from Example 6 and Figure 5, the (bacterial) heme peroxidase may be used up to about 60 °C without significant loss of enzymatic activity which makes it suitable for applications in agriculture for example.

F. Compositions comprising a (bacterial) heme peroxidase of the present invention for medical use

The present invention also relates to a composition comprising one or more bacterial heme peroxidase as defined in any one of SEQ ID NOs: 1, 18, 11, or 25-27,

a reducing agent, and

(i) hydrogen peroxide, and/or
(ii) a hydrogen-peroxide donor system,

in aqueous solution for use as a medicament.

The present invention also relates to a composition comprising one or more bacterial heme peroxidase as defined in any one of SEQ ID NOs: 1, 18, 11, or 25-27,

a reducing agent, and

(i) hydrogen peroxide, and/or
(ii) a hydrogen-peroxide donor system,

in aqueous solution for use in the treatment of an infection with a pathogen in or on a human or animal body. In particular the pathogen may be located on mucosae, skin, in particular epidermal skin like scalp or facial skin, and/or teeth. In other words, compositions comprising a (bacterial) heme peroxidase of the present invention may also be employed for medical use/in a medical pathogen control setting. The compositions may be in form of toothpastes and tonics that comprise the herein described peroxidase. The herein described (bacterial) heme peroxidase is characterized by their particularly favorable enzymatic activity, as can be inter alia measured by enzymatic tests known in the art.

The (bacterial) heme peroxidase as comprised in such compositions for medical use may be derived/obtained from *Hydrocoleum sp.* or *Okeania sp.* cyanobacterial origin. The (bacterial) heme peroxidase as comprised in such compositions for medical use may be a heme peroxidase of *Hydrocoleum sp.* or *Okeania sp.* as defined in SEQ ID NO: 1, and/or SEQ ID NO: 18, and/or SEQ ID NO: 11, and/or SEQ ID NO: 25-27 (see above).

One exemplary functional fragment of SEQ ID NO: 1 that may also be employed in this context is defined in SEQ ID NO: 18. SEQ ID NO: 18 corresponds to SEQ ID NO: 1 but is missing amino acids 1 to 116 of SEQ ID NO: 1. Therefore, the functional fragment which is defined in SEQ ID NO: 18 represents the amino acid sequence from position 117 to position 659 of SEQ ID NO: 1. As is evident by comparison from SEQ ID NO: 1 and SEQ ID NO: 18, SEQ ID NO: 18 shares 543 consecutive amino acids with SEQ ID NO: 1. Therefore, the amino acid sequence of the functional fragment as defined in SEQ ID NO: 18 is about 82% identical to SEQ ID NO: 1.

In certain aspects, it may be necessary that the functional fragment as defined in SEQ ID NO: 18 may be preceded by a methionine immediately at the N-terminus of the functional fragment.

One exemplary functional fragment of SEQ ID NO: 11 is provided in SEQ ID NO: 25. SEQ ID NO: 25 corresponds to SEQ ID NO: 11 but is missing amino acids 1 to 116 of SEQ ID NO: 11. Therefore, the functional fragment which is defined in SEQ ID NO: 25 represents the amino acid sequence from position 117 to position 659 of SEQ ID NO: 11. As is evident by comparison from SEQ ID NO: 11 and SEQ ID NO: 25, SEQ ID NO: 25 shares 543 consecutive amino acids with SEQ ID NO: 11. Therefore, the amino acid sequence of the functional fragment as defined in SEQ ID NO: 25 may be about 82% identical to SEQ ID NO: 11.

In certain aspects, it may be necessary that the functional fragment as defined in SEQ ID NO: 25 may be preceded by a methionine immediately at the N-terminus of the functional fragment.

SEQ ID NO: 11 discloses a peroxidase from *Okeania hirsuta* (wildtype amino acid sequence of the corresponding bacterial heme peroxidase is defined in SEQ ID NO: 11 above and a fragment thereof as defined in SEQ ID NO: 25 or 27). These two exemplary (bacterial) heme peroxidases which may also be employed in such compositions for medical use may share a 90.4% (bacterial peroxidase from *Okeania sp. SIO2C9*) and 91.8% (bacterial peroxidase from *Okeania hirsuta*) amino acid sequence homology with HydPOX as defined in SEQ ID NO: 1.

In one embodiment, the nucleotide sequence of a (bacterial) heme peroxidase/functional fragment(s) thereof as comprised in compositions for medical use may be codon-optimized for recombinant protein expression in bacteria or mammalian cells, preferably wherein the nucleotide sequence of said (bacterial) heme peroxidase/functional fragment(s) thereof may be codon-optimized for recombinant protein expression in bacteria, more preferably wherein the nucleotide sequence of said (bacterial) heme peroxidase/functional fragment(s) thereof may be codon-optimized for recombinant protein expression **in** *Bacillus,* most preferably wherein the nucleotide sequence of said (bacterial) heme peroxidase/functional fragment(s) thereof may be codon-optimized for recombinant protein expression in *Bacillus subtilis.*

Therefore, while the wildtype nucleotide sequence of the preferred (bacterial) heme peroxidase that corresponds to SEQ ID NO: 1 is defined and illustrated in SEQ ID NO: 8 above, various codons may be replaced by synonymous codons (i.e., codons that encode for the same amino acid but may be more frequently used in a given host such as *Bacillus subtilis)* in the codon-optimized nucleotide sequence as defined and illustrated in SEQ ID NO: 9 (see above). Additionally, the nucleic acid encoding the preferred peroxidases as defined in SEQ ID NO: 1, and/or SEQ ID NO: 18, and/or SEQ ID NO: 11, and/or SEQ ID NO: 25-27 can be codon optimized for recombinant expression, e.g. in *Bacillus subtilis.* Exemplary codon optimized nucleic acid sequences are provided in SEQ ID NOs: 2, 9, 19, 21 and 24.

Therefore, codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase/functional fragment(s) thereof with synonymous codons that lead to increased levels of RNA-transcription in *Bacillus,* preferably wherein the codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase/ functional fragment(s) thereof with synonymous codons that lead to increased levels of RNA-transcription in *Bacillus subtilis*. A person skilled in the art is aware of means and methods to perform such a codon-optimization.

The (bacterial) heme peroxidase and/or the functional fragment(s) thereof as comprised in the compositions for medical use may be recombinantly or stably expressed by bacteria or mammalian cells. It may be preferred that the (bacterial) heme peroxidase/functional fragment(s) thereof as comprised in compositions for medical use may be recombinantly expressed by bacteria, preferably by *Bacillus,* more preferably by *Bacillus subtilis.* Recombinant protein production of the (bacterial) heme peroxidase/functional fragment(s) thereof may involve the secretion of the (bacterial) heme peroxidase/functional fragment(s) thereof into the bacterial expression culture supernatant, periplasmic or cytoplasmic protein expression, wherein the secretion of the (bacterial) heme peroxidase/functional fragment(s) thereof into the bacterial expression culture supernatant may be preferred.

In one embodiment, the (bacterial) heme peroxidase/functional fragment(s) thereof as comprised in compositions for medical use may comprise a N- and/or C-terminally linked signal peptide, purification tag and/or a protease cleavage site. Exemplary non-limiting signal peptides which may be used may be derived and selected from the group consisting of a signal peptide of the extracellular *Bacillus subtilis* protease nprE, a signal peptide of spA, phoA, ribose binding protein, pelB, ompA, ompT, dsbA, torA, torT, tolT, or signal peptides from the TAT secretion pathway in bacteria. Non-limiting (epitope) tags or purification tags which may be used may be selected from the group consisting of His$_6$-tag, glutathione S-transferase (GST), maltose binding protein (MBP), calmodulin binding peptide (CBP), intein-chitin binding domain (intein-CBD) tag, streptavidin, (Twin) Strep-tag (I/II), flag-tag, HA-tag, c-myc tag, V5-tag, T7-tag, NE-tag, HaloTag, SUMO-tag. (Epitope) tags or purification tags may be detected with detection reagents such as detectable monoclonal or polyclonal antibodies/antibody-conjugates in applications such as Western blotting for example. The (bacterial) heme peroxidase/functional fragment(s) thereof as comprised in compositions for medical use may further be linked to detectable reporter tags like β-galactosidase (β-gal), alkaline phosphatase (AP), chloramphenicol acetyl transferase (CAT), and horseradish peroxidase (HRP) or fluorescent reporter proteins like (e)GFP, (e)CFP, (e)BFP, (e)YFP, (e)RFP, mCherry, mRuby or mOrange. Non-limiting protease cleavage sites that may be used comprise cleavage sites of proteases selected from the group consisting of TEV-protease, enteropeptidase, thrombin, factor Xa, rhinovirus 3C protease, carboxypeptidase A, carboxypeptidase B, DAPase.

"N- and/or C-terminally linked" in the context of a (bacterial) heme peroxidase/functional fragment(s) thereof as comprised in compositions for medical use may be understood to mean that a signal peptide, purification tag and/or protease cleavage site may be genetically fused in-frame with the 5' and/or 3' end of the coding sequence of the (bacterial) heme peroxidase/ functional fragment thereof. In instances where a signal peptide, purification tag, protease cleavage site, and/or fluorescent reporter protein which already encode an initial methionine may be fused to the 5' end of the (bacterial) heme peroxidase/functional fragment thereof, the initial methionine of the (bacterial) heme peroxidase/functional fragment thereof may be removed.

In an alternative embodiment, the (bacterial) heme peroxidase/functional fragment(s) thereof as comprised in the compositions for medical use may not comprise a N- and/or C-terminally linked signal peptide, purification tag and/or a protease cleavage site.

In another embodiment, the (bacterial) heme peroxidase/functional fragment(s) thereof as comprised in the compositions for medical use may only comprise a signal peptide, preferably a signal peptide of an extracellular *Bacillus subtilis* protease and optionally a His$_6$-tag.

The (bacterial) heme peroxidase and/or the functional fragment(s) thereof as comprised in the compositions for medical use may be purified from bacterial expression culture supernatant or may at least be separated from the bacterial cell mass. In a preferred embodiment, the (bacterial) heme peroxidase/functional fragment(s) thereof may be purified from bacterial expression culture supernatant. The skilled person is aware of means and methods to purify the (bacterial) heme peroxidase/functional fragment(s) thereof from the bacterial expression culture supernatant. Exemplary purification workflows are well known in the art and may involve the centrifugation of the bacterial expression culture at about 5,000 g to about 18,000 g for about 5 to about 45 minutes to separate the bacterial cell mass from the bacterial expression culture supernatant. The bacterial expression culture supernatant may optionally be sterile filtrated. The (bacterial) heme peroxidase/functional fragment(s) thereof may subsequently be purified from the sterile filtrated bacterial expression culture supernatant by one or more purification methods which may be selected from the group consisting of immobilized metal affinity chromatography (IMAC), ion-exchange chromatography, affinity-chromatography, size-exclusion chromatography, gel filtration chromatography. In one embodiment, the (bacterial) heme peroxidase/functional fragment(s) thereof may comprise a His$_6$-tag for purification via immobilized metal affinity chromatography. Furthermore, endotoxins may be removed from the (bacterial) heme peroxidase/functional fragment(s) thereof in order to avoid anaphylactic reactions after the composition comprising the (bacterial) heme peroxidase/functional fragment(s) thereof may be applied to the human or animal body. The purified (bacterial) heme peroxidase/functional fragment(s) thereof may be dialyzed against an appropriate diluent, such as standard phosphate buffered saline, concentrated and snap-frozen in liquid nitrogen. In some aspects, the purified (bacterial) heme peroxidase/ functional fragment(s) thereof may be lyophilized using standard dry freezing protocols or formulated directly after purification/dialysis/concentration.

The (bacterial) heme peroxidase as comprised in the compositions for medical use (and as defined in SEQ ID NO: 1, and/or SEQ ID NO: 18, and/or SEQ ID NO: 11, and/or SEQ ID NO: 25-27) and/or the functional fragment(s) thereof (which may also be comprised in said compositions for medical use) may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, or at least 300% increased peroxidase activity in the standard ABTS activity assay compared to bovine lactoperoxidase or LspPOX, whose "reference" peroxidase activity may be measured under identical conditions as is also evident from Example 12 and Figure 8B, Table 5.

The ABTS assay has been widely used (it has for example also been used in Auer, J Biol Chem, 288, 2013). ABTS (2,2'-Azinobis [3-ethylbenzothiazoline-6-sulfonic acid]-diammonium salt) is an artificial water-soluble peroxidase substrate that yields an oxidized product upon reaction with peroxidase in aqueous solution and has two major absorbance peaks, 410 nm and 650 nm. The reaction in presence of $H_2O_2$ can be easily measured on microplate reader. From absorbance the amount of product is calculated and subsequently active units are determined and compared between different peroxidases.

In one preferred embodiment, said heme peroxidase or (a) functional fragment(s) thereof has/have at least 10% increased peroxidase activity in the standard ABTS activity assay compared to bovine lactoperoxidase. In one preferred embodiment, the (bacterial) heme peroxidase/ functional fragment(s) thereof may have at least 30% increased peroxidase activity in the standard ABTS activity assay compared to bovine lactoperoxidase.

In another preferred embodiment, said heme peroxidase or (a) functional fragment(s) thereof has/have at least 100% increased peroxidase activity in the standard ABTS activity assay compared to LspPOX. In another preferred embodiment, said heme peroxidase or (a) functional fragment(s) thereof has/have at least 150% increased peroxidase activity in the standard ABTS activity assay compared to LspPOX. In another preferred embodiment, said heme peroxidase or (a) functional fragment(s) thereof has/have at least 200% increased peroxidase activity in the standard ABTS activity assay compared to LspPOX.

One alternative assay which may also be used to determine the peroxidase activity of a (bacterial) heme peroxidase and/or of a functional fragment thereof is the Thymol blue assay (Verhaeghe, Anal Biochem, 379, 2008). This assay is based on the reactivity of thymolsulfonphthalein (thymol blue [TB]) toward oxidized halogen species. A peroxidase is able to catalyze the halogenation of the thymolsulfonphthalein which produces stable molecules with distinct spectral properties. A reaction between peroxidase and substrate thymol blue in presence of iodide (reducing agent) and $H_2O_2$ in aqueous solution gives an absorbance peak at 620 nM ($\varepsilon_{620}$ = 40.3 mM$^{-1}$cm$^{-1}$). The reaction can be measured on a microplate reader. From the absorbance the amount of product is calculated and subsequently active units are determined and compared between different peroxidases.

The (bacterial) heme peroxidase as comprised in the compositions for medical use (and as defined in SEQ ID NO: 1, and/or SEQ ID NO: 18, and/or SEQ ID NO: 11, and/or SEQ ID NO: 25-27) and/or the functional fragment(s) thereof (which may also be comprised in said compositions for medical use) may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, at least 300%, at least 310%, at least 320%, at least 330%, at least 340%, at least 350%, at least 360%, at least 370%, at least 380%, at least 390%, or at least 400% increased peroxidase activity in the thymol blue assay compared to bovine lactoperoxidase or LspPOX, whose "reference" peroxidase activity may be measured under identical conditions as is also evident from Example 13 and Figure 9B, Table 7.

In one preferred embodiment, said heme peroxidase or (a) functional fragment(s) thereof has/have at least 100% increased peroxidase activity in the thymol blue assay compared to bovine lactoperoxidase or LspPOX. In one preferred embodiment, said heme peroxidase or (a) functional fragment(s) thereof has/have at least 200% increased peroxidase activity in the thymol blue assay compared to bovine lactoperoxidase or LspPOX.

As is also evident from the appended figures, in particular Fig. 8B and Fig. 9B, HydPOX, HydPOXs and OkePOXs surprisingly exhibits an increased peroxidase activity compared to LpoPOX and LspPOX in two independent enzymatic activity assays. In the standard ABTS activity assay (Example 12, Table 5), HydPOX exhibits about 98% increased peroxidase activity, HydPOXs exhibits about 56% increased peroxidase activity, and OkePOXs exhibits about 131% increased peroxidase activity compared to LpoPOX and HydPOX exhibits about 184% increased peroxidase activity, HydPOXs exhibits about 125% increased peroxidase activity and OkePOXs exhibits about 232% increased peroxidase activity compared to LspPOX. In the thymol blue assay (halogenation assay; Example 13, Table 7), HydPOX exhibits about 299% increased peroxidase activity, HydPOXs exhibits about 233% increased peroxidase activity, and OkePOXs exhibits about 348% increased peroxidase activity compared to LpoPOX and HydPOX exhibits about 161% increased peroxidase activity, HydPOXs exhibits about 143% increased peroxidase activity and OkePOXs exhibits about 202% increased peroxidase activity compared to LspPOX. Since HydPOX, HydPOXs and OkePOXs thus exhibit increased peroxidase activity compared to LpoPOX (and/or LspPOX), this increased peroxidase activity is assumed to translate into an increased ability of HydPOX, HydPOXs and OkePOXs to prevent and/or control a pathogen, which thus makes HydPOX, HydPOXs and OkePOXs suitable biocontrol agents for medical use. In addition, it is envisioned that also the full-length fragment of OkePOX as defined in SEQ ID NO: 11 is able to achieve the above stated effects.

Pathogens in the context of the compositions for medical use may *inter alia* comprise fungi or pathogenic bacteria.

Without being limiting, fungi may, *inter alia,* be selected from the group consisting of *Candida, Cladosporium, Aspergillus, Fusarium, Glomus, Alternaria, Penicillium* and *Cryptococcus.*

Without being limiting, pathogenic bacteria may be selected from the group consisting of *Actinomyces, Arachnia (Propionibacterium propionicus), Bacteroides, Bifidobacterium, Eubacterium, Fusobacterium, Lactobacillus, Leptotrichia, Peptococcus, Peptostreptococcus, Propionibacterium, Selenomonas, Treponema* and *Veillonella.*

In one embodiment, a composition comprising one or more bacterial heme peroxidase as defined in any one of SEQ ID NOs: 1, 18, 11, or 25-27,

a reducing agent, and

(i) hydrogen peroxide, and/or
(ii) a hydrogen-peroxide donor system,

in aqueous solution for use as a medicament.

In a further embodiment a composition comprising one or more bacterial heme peroxidase as defined in any one of SEQ ID NOs: 1, 18, 11, or 25-27,

a reducing agent, and

(i) hydrogen peroxide, and/or
(ii) a hydrogen-peroxide donor system,

in aqueous solution for use in the treatment of an infection with a pathogen in or on a human or animal body is provided.

Thus, a (bacterial) heme peroxidase and/or (a) functional fragment(s) thereof of the present composition may be applied with a reducing agent; and/or (i) a hydrogen peroxide and/or (ii) a hydrogen-peroxide donor system in aqueous solution. In a preferred embodiment, a (bacterial) heme peroxidase/functional fragment(s) thereof of the present composition may be applied with a reducing agent and (i) hydrogen peroxide and/or (ii) a hydrogen-peroxide donor system in aqueous solution. In an even more preferred embodiment, a (bacterial) heme peroxidase/ functional fragment(s) thereof of the present composition may be applied with a reducing agent and either (i) hydrogen peroxide or (ii) a hydrogen-peroxide donor system in aqueous solution. As is also evident from Example 8, a (bacterial) heme peroxidase of the present invention may be applied with a reducing agent such as iodide and hydrogen peroxide (i.e. its substrate) in aqueous solution. However, since its substrate (being hydrogen peroxide) is an unstable molecule, it may be preferred that a (bacterial) heme peroxidase/functional fragment(s) thereof of the present composition may be applied with a reducing agent and a hydrogen-peroxide donor system in aqueous solution.

Thus, a system comprising the (bacterial) heme peroxidase and/or the functional fragment(s) thereof which may be employed in the present composition, may be regarded as at least a two-component system. However, as described above, it may be preferred that the system comprising the (bacterial) heme peroxidase and/or the functional fragment(s) thereof as comprised in the present composition, is a three-component system comprising the (bacterial) heme peroxidase/functional fragment(s) thereof of the present invention, a reducing agent and hydrogen peroxide or a hydrogen-peroxide donor system in aqueous solution.

An aqueous solution, i.e. a water-based solution, may be necessary for the (bacterial) heme peroxidase/functional fragment(s) thereof to exert its/their antimicrobial effect of preventing and/or controlling (the growth and/or the spreading) of a pathogen. However, it may not be necessary that a system or a composition comprising the (bacterial) heme peroxidase/ functional fragment(s) thereof together with a reducing agent and/or (i) hydrogen peroxide and/or (ii) a hydrogen-peroxide donor system may be formulated as an aqueous solution. In one embodiment, the addition of water to these components which may be formulated as a powder, paste, ointment etc may give the (bacterial) heme peroxidase/functional fragment(s) thereof its/their ability to exert its/their antimicrobial effect while simultaneously ensuring an extended shelf life (since no enzymatic reaction occurs prior to the addition of water and thus no reaction components are being consumed). In certain aspects, when a (bacterial) heme peroxidase and/or (a) functional fragment(s) thereof of the present invention may be contained in a paste such as a toothpaste for example, contacting the toothpaste to saliva may be sufficient to provide an aqueous solution, i.e. to give the (bacterial) heme peroxidase/functional fragment(s) thereof its/their ability to exert its/their antimicrobial effect.

Reducing agents in the context of this invention may be agents that reduce other agents. In other words, a reducing agent is a chemical species that may "donate" (an) electron(s) to an electron recipient (which is called an oxidizing agent). Suitable reducing agents in the context of this invention may be selected from the group consisting of iodide ($I^-$), bromide ($Br^-$) or thiocyanate ($SCN^-$). As is also evident from the appended Examples, in particular Example 5 and 8, iodide ($I^-$) may preferably be used as reducing agent. Without being limiting, a corresponding salt which may be used as reducing agent may *inter alia* be kaliumiodide (KI) for example.

Since hydrogen peroxide is an unstable molecule, it may be preferred that a (bacterial) heme peroxidase/functional fragment(s) thereof of the present composition may be applied with a reducing agent and a hydrogen-peroxide donor system (instead of hydrogen peroxide itself) in aqueous solution which may ensure the indirect hydrogen peroxide substrate supply via sugar oxidation. A suitable hydrogen-peroxide donor system may preferably comprise an oxidase and a corresponding sugar substrate which the oxidase is specific for. Exemplary preferred hydrogen-peroxide donor systems, without being limiting, may, *inter alia,* comprise glucose oxidase/glucose or galactose oxidase/galactose. As an alternative hydrogen-peroxide donor system that may not be based on an oxidase or a corresponding sugar substrate, sodium percarbonate or stabilized hydrogen peroxide may be used.

Further hydrogen peroxide producing proteins/enzymes that may form part of an hydrogen-peroxide donor system and that may be used in combination with a (bacterial) heme peroxidase and/or (a) functional fragment(s) thereof in the present compositions for medical use may comprise urate oxidase, choline oxidase, D-amino acid oxidase, D-glutamate oxidase, glycine oxidase, glycolate oxidase, L-sorbose oxidase, alcohol oxidase, or amine oxidase, carbohydrases, such as $\alpha$-amylase, glucoamylase or amylglucosidase, cellulase, dextranase, invertase, or $\alpha$- or $\beta$-glucosidase, hydrolases and proteases. Preferably used are dextranase, lactoferrin, lysozyme, amyloglucosidase, and/or mutanase.

In one embodiment, a (bacterial) heme peroxidase/functional fragment(s) thereof of the present composition may be co-formulated with at least one further agent. In other words, a (bacterial) heme peroxidase (and/or (a) functional fragment(s) thereof), a reducing agent and/or (i) hydrogen peroxide and/or (ii) a hydrogen-peroxide donor system in aqueous solution may be co-formulated with at least one further agent. Said at least one further agent may be selected from the group consisting of ionic compounds, sugars, inorganic compounds, organic compounds, non-ionic compounds, amino acids, peptides, lipids, and/or proteins.

The (bacterial) heme peroxidase/functional fragment(s) thereof as comprised in the present compositions for medical use may also be co-formulated with abrasives or polishing materials, fluoride ion-providing agents, thickening agents, foaming agents, whitening agents, antibacterial proteins, neutralizing agents (bicarbonate), flavoring agents, sweeteners, preservatives and/or other basic ingredients.

Suitable examples of polishing materials may comprise but may not be limited to water-insoluble sodium metaphosphate, potassium metaphosphate, tricalcium phosphate, dehydrated calcium phosphate, anhydrous dicalcium phosphate, calcium pyrophosphate, magnesium orthophosphate, trimagnesium phosphate, aluminum oxide, aluminum oxide hydrate, calcium carbonate, aluminum silicate, zirconium silicate, silica, bentonite and mixtures thereof.

Suitable fluoride ion-providing agents may comprise but may not be limited to inorganic fluoride salts, such as soluble alkali metal and alkaline earth metal salts, for example sodium fluoride, potassium fluoride, barium fluoride or calcium fluoride, and ammonium fluoride, or a copper fluoride, zinc fluoride, sodium fluorosilicate, ammonium fluorosilicate, sodium fluorozirconate, sodium monofluorphosphate, aluminum mono- or di-fluorophosphate and fluorinated sodium calcium pyrophosphate, alkali metal and tin fluoride, such as sodium and stannous fluorides, sodium monofluorophosphate, organic fluorides, such as aminfluoride and mixtures thereof.

Suitable thickening agents may comprise but may not be limited to synthetic hectorite (trademark LAPONITE), Irish moss, gum tragacanth, starch, polyvinyl pyrrolidone, hydroxyethyl propyl cellulose, hydroxybutyl methyl cellulose, hydroxypropyl methyl cellulose, hydroxyethyl cellulose, sodium carboxymethyl cellulose and colloidal silica.

Suitable flavoring agents may comprise but may not be limited to flavoring oils, e.g. oil of spearmint, peppermint, wintergreen, sassafras, clove, sage, eucalyptus, marjoram, cinnamon, lemon, and orange, and methyl salicylate.

Suitable sweeteners may comprise but may not be limited to sucrose, lactose, maltose, sorbitol, xylitol, sodium cyclamate, perillartine, aspartyl phenyl alanine methyl ester (APM), saccharine and the like.

Other basic ingredients may comprise phosphates, such as trimetaphosphates and di-ammoniumphosphates, enzymes, anti-tartar agents such as pyrophosphates, phosphonates and/or other antiplaque ingredients, such as triclosan, chlorhexidine, bromochlorophene and sanquinarine, antibacterial proteins, such as lantibiotics (preferably nisin), agents for sensitive teeth, such as specific alkali metal salts like strontium salts and/or potassium nitrate or citrate, wound healing agents, such as allantoin, chlorophyll, tocopherol and herbal extracts, activity enhancing agents or boosters, and specific ingredients as urea, xylitol, silicones, quarternary ammonium compounds and mixtures thereof.

In one embodiment, the compositions for medical use may comprise zinc ions.

The compositions for medical use may further comprise colostrum. Colostrum may typically consist of a mixture of lacteal secretions and constituents of blood serum, notably immunoglobulins and other proteins, that accumulate in the (bovine) mammary gland during the prepartum dry period and may be harvested immediately preceding or following parturition.

In certain desirable forms, the (bacterial) heme peroxidase/functional fragment(s) thereof as comprised in the compositions for medical use may be formulated in a liquid, lotion, ointment, spray, tonic, powder and/or a paste like a toothpaste. In one embodiment the (bacterial) heme peroxidase/functional fragment(s) thereof as comprised in the compositions for medical use may be formulated as lozenge or chewing gum.

The (bacterial) heme peroxidase/functional fragment(s) thereof as comprised in the compositions for medical use may be used at a rate of about 1 mg/L to about 100 mg/L, preferably wherein said (bacterial) heme peroxidase/functional fragment(s) thereof may be used at a rate of about 10 mg/L to about 50 mg/L.

The (bacterial) heme peroxidase/functional fragment(s) thereof as comprised in the compositions for medical use may be used at a pH of from about 2 to about 10. In a preferred embodiment, the (bacterial) heme peroxidase/functional fragment(s) thereof may be used at a pH of from about 4 to about 6, in particular at a pH of about 5 as is also evident from Example 7 and Figure 6.

The (bacterial) heme peroxidase/functional fragment(s) thereof as comprised in the compositions for medical use may be used at a temperature of from about 10 °C to about 60 °C. As is also evident from Example 6 and Figure 5, the (bacterial) heme peroxidase may be used up to about 60 °C without significant loss of enzyme activity which makes it suitable for medical applications at body temperature (about 37 °C) for example.

The compositions comprising a (bacterial) heme peroxidase/functional fragment(s) thereof for medical use may be a ready-to-use product or a product that may be diluted with a suitable diluent, like water or water-based diluents prior to use.

G. Use(s) of a (bacterial) heme peroxidase of the present invention

The present invention also relates to a non-therapeutic use of a composition comprising one or more bacterial heme peroxidase as defined in any one of SEQ ID NOs: 1, 18, 11, or 25-27 as a pesticide, wherein the composition further comprises a reducing agent and

    (i) hydrogen peroxide and/or
    (ii) a hydrogen-peroxide donor system

in aqueous solution.

Thus, such uses may on the one hand comprise the use of a (bacterial) heme peroxidase of the present invention and/or the use of (a) functional fragment(s) thereof for the preparation of (a) composition(s) which may be employed in the broadest sense for plant and/or crop protection and pathogen control in for instance agriculture, horticulture, vegetable growing, ornamental plant cultivation, fruit growing, bulb growing, the culture of potted plants, forestry etc., and as consumer product for indoor plants.

On the other hand, such uses may comprise the use of a (bacterial) heme peroxidase of the present invention and/or the use of (a) functional fragment(s) thereof for the preparation of (a) composition(s), which may be employed for preventing and/or controlling a pathogen in or on the human or animal body, in particular a pathogen that may be located on mucosae, skin, in particular epidermal skin like scalp or facial skin and/or teeth.

The (bacterial) heme peroxidase in the context of such uses may be derived/obtained from *Hydrocoleum sp.* or *Okeania sp.* as defined in SEQ ID NO: 1, and/or SEQ ID NO: 18, and/or SEQ ID NO: 11, and/or SEQ ID NO: 25-27 (see above).

One exemplary functional fragment of SEQ ID NO: 1 that may also be employed in in this context is defined in SEQ ID NO: 18. SEQ ID NO: 18 corresponds to SEQ ID NO: 1 but is missing amino acids 1 to 116 of SEQ ID NO: 1. Therefore, the functional fragment which is defined in SEQ ID NO: 18 represents the amino acid sequence from position 117 to position 659 of SEQ ID NO: 1. As is evident by comparison from SEQ ID NO: 1 and SEQ ID NO: 18, SEQ ID NO: 18 shares 543 consecutive amino acids with SEQ ID NO: 1. Therefore, the amino acid sequence of the functional fragment as defined in SEQ ID NO: 18 is about 82% identical to SEQ ID NO: 1. In certain aspects, it may be necessary that the functional fragment as defined in SEQ ID NO: 18 may be preceded by a methionine immediately at the N-terminus of the functional fragment.

One exemplary functional fragment of SEQ ID NO: 11 is provided in SEQ ID NO: 25. SEQ ID NO: 25 corresponds to SEQ ID NO: 11 but is missing amino acids 1 to 116 of SEQ ID NO: 11. Therefore, the functional fragment which is defined in SEQ ID NO: 25 represents the amino acid sequence from position 117 to position 659 of SEQ ID NO: 11. As is evident by comparison from SEQ ID NO: 11 and SEQ ID NO: 25, SEQ ID NO: 25 shares 543 consecutive amino acids with SEQ ID NO: 11. Therefore, the amino acid sequence of the functional fragment as defined in SEQ ID NO: 25 may be about 82% identical to SEQ ID NO: 11.

In certain aspects, it may be necessary that the functional fragment as defined in SEQ ID NO: 25 may be preceded by a methionine immediately at the N-terminus of the functional fragment.

SEQ ID NO: 11 discloses a peroxidase from *Okeania hirsuta* (wildtype amino acid sequence of the corresponding bacterial heme peroxidase is defined in SEQ ID NO: 11 above and a fragment thereof as defined in SEQ ID NO: 25 or 27). These two exemplary (bacterial) heme peroxidases share a 90.4% (bacterial peroxidase from *Okeania sp. SIO2C9*) and 91.8% (bacterial peroxidase from *Okeania hirsuta)* amino acid sequence homology with HydPOX as defined in SEQ ID NO: 1.

In one embodiment, the nucleotide sequence of a (bacterial) heme peroxidase/functional fragment(s) thereof which may be used for the preparation of the compositions of the present invention may be codon-optimized for recombinant protein expression in bacteria or mammalian cells, preferably wherein the nucleotide sequence of said (bacterial) heme peroxidase/functional fragment(s) thereof may be codon-optimized for recombinant protein expression **in** bacteria, more preferably wherein the nucleotide sequence of said (bacterial) heme peroxidase/functional fragment(s) thereof may be codon-optimized for recombinant protein expression in *Bacillus,* most preferably wherein the nucleotide sequence of said (bacterial) heme peroxidase/functional fragment(s) thereof may be codon-optimized for recombinant protein expression in *Bacillus subtilis.*

Therefore, while the wildtype nucleotide sequence of the preferred (bacterial) heme peroxidase that corresponds to SEQ ID NO: 1 is defined and illustrated in SEQ ID NO: 8 above, various codons may be replaced by synonymous codons (i.e., codons that encode for the same amino acid but may be more frequently used in a given host such as *Bacillus subtilis)* in the codon-optimized nucleotide sequence as defined and illustrated in SEQ ID NO: 9 (see above). Additionally, the nucleic acid encoding the preferred peroxidases as defined in SEQ ID NO: 1, and/or SEQ ID NO: 18, and/or SEQ ID NO: 11, and/or SEQ ID NO: 25-27 can be codon optimized for recombinant expression, e.g. in *Bacillus subtilis.* Exemplary codon optimized nucleic acid sequences are provided in SEQ ID NOs: 2, 9, 19, 21 and 24.

Therefore, codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase/functional fragment(s) thereof with synonymous codons that lead to increased levels of RNA-transcription in *Bacillus,* preferably wherein the codon-optimization may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of a (bacterial) heme peroxidase/ functional fragment(s) thereof with synonymous codons that lead to increased levels of RNA-transcription in *Bacillus subtilis.* A person skilled in the art is aware of means and methods to perform such a codon-optimization.

The (bacterial) heme peroxidase/functional fragment(s) thereof which may be used for the preparation of the compositions of the present invention may be recombinantly or stably expressed by bacteria or mammalian cells. It may be preferred that the (bacterial) heme peroxidase/functional fragment(s) thereof which may be used for the preparation of the compositions of the present invention may be recombinantly expressed by bacteria, preferably by *Bacillus*, more preferably by *Bacillus subtilis.* Recombinant protein production of the (bacterial) heme peroxidase/functional fragment(s) thereof may involve the secretion of the (bacterial) heme peroxidase/functional fragment(s) thereof into the bacterial expression culture supernatant, periplasmic or cytoplasmic protein expression, wherein the secretion of the (bacterial) heme peroxidase/functional fragment(s) thereof into the bacterial expression culture supernatant may be preferred.

In one embodiment, the (bacterial) heme peroxidase/functional fragment(s) thereof which may be used for the preparation of the compositions of the present invention may comprise a N-and/or C-terminally linked signal peptide, purification tag and/or a protease cleavage site. Exemplary non-limiting signal peptides which may be used may be derived and selected from the group consisting of a signal peptide of the extracellular *Bacillus subtilis* protease nrpE, a signal peptide of spA, phoA, ribose binding protein, pelB, ompA, ompT, dsbA, torA, torT, tolT, or signal peptides from the TAT secretion pathway in bacteria. Non-limiting (epitope) tags or purification tags which may be used may be selected from the group consisting of His$_6$-tag, glutathione S-transferase (GST), maltose binding protein (MBP), calmodulin binding peptide (CBP), intein-chitin binding domain (intein-CBD) tag, streptavidin, (Twin) Strep-tag (I/II), flag-tag, HA-tag, c-myc tag, V5-tag, T7-tag, NE-tag, HaloTag, SUMO-tag. (Epitope) tags or purification tags may be detected with detection reagents such as detectable monoclonal or polyclonal antibodies/antibody-conjugates in applications such as Western blotting for example. The (bacterial) heme peroxidase/functional fragment(s) thereof which may be used for the preparation of the compositions of the present invention may further be linked to detectable reporter tags like β-galactosidase (β-gal), alkaline phosphatase (AP), chloramphenicol acetyl transferase (CAT), and horseradish peroxidase (HRP) or fluorescent reporter proteins like (e)GFP, (e)CFP, (e)BFP, (e)YFP, (e)RFP, mCherry, mRuby or mOrange. Non-limiting protease cleavage sites that may be used comprise cleavage sites of proteases selected from the group consisting of TEV-protease, enteropeptidase, thrombin, factor Xa, rhinovirus 3C protease, carboxypeptidase A, carboxypeptidase B, DAPase.

"N- and/or C-terminally linked" in the context of a (bacterial) heme peroxidase/functional fragment(s) thereof which may be used for the preparation of the compositions of the present invention may be understood to mean that a signal peptide, purification tag and/or protease cleavage site may be genetically fused in-frame with the 5' and/or 3' end of the coding sequence of the (bacterial) heme peroxidase/functional fragment thereof. In instances where a signal peptide, purification tag, protease cleavage site, and/or fluorescent reporter protein which already encode an initial methionine may be fused to the 5' end of the (bacterial) heme peroxidase/functional fragment thereof, the initial methionine of the (bacterial) heme peroxidase/functional fragment thereof may be removed.

In an alternative embodiment, the (bacterial) heme peroxidase/functional fragment(s) thereof which may be used for the preparation of the compositions of the present invention may not comprise a N- and/or C-terminally linked signal peptide, purification tag and/or a protease cleavage site.

In another embodiment, the (bacterial) heme peroxidase/functional fragment(s) thereof which may be used for the preparation of the compositions of the present invention may comprise a signal peptide, preferably a signal peptide of an extracellular *Bacillus subtilis* protease and optionally a purification tag, like a $His_6$-tag.

The (bacterial) heme peroxidase and/or functional fragment(s) thereof which may be used for the preparation of the compositions of the present invention may be purified from bacterial expression culture supernatant or may at least be separated from the bacterial cell mass. In a preferred embodiment, the (bacterial) heme peroxidase/functional fragment(s) thereof may be purified from bacterial expression culture supernatant. The skilled person is aware of means and methods to purify the (bacterial) heme peroxidase/functional fragment(s) thereof from the bacterial expression culture supernatant. Exemplary purification workflows are well known in the art and may involve the centrifugation of the bacterial expression culture at about 5,000 g to about 18,000 g for about 5 to about 45 minutes to separate the bacterial cell mass from the bacterial expression culture supernatant. The bacterial expression culture supernatant may optionally be sterile filtrated. The (bacterial) heme peroxidase/functional fragment(s) thereof may subsequently be purified from the sterile filtrated bacterial expression culture supernatant by one or more purification methods which may be selected from the group consisting of immobilized metal affinity chromatography (IMAC), ion-exchange chromatography, affinity-chromatography, size-exclusion chromatography, gel filtration chromatography. In one embodiment, the (bacterial) heme peroxidase/functional fragment(s) thereof may comprise a $His_6$-tag for purification via immobilized metal affinity chromatography. Furthermore, in an optional embodiment, endotoxins may be removed from the (bacterial) heme peroxidase/ functional fragment(s) thereof in order to avoid anaphylactic reactions in case a composition of the present invention comprising the (bacterial) heme peroxidase/functional fragment(s) thereof may be applied to the human or animal body. The purified (bacterial) heme peroxidase/ functional fragment(s) thereof may be dialyzed against an appropriate diluent, such as standard phosphate buffered saline, concentrated and snap-frozen in liquid nitrogen. In some aspects, the purified (bacterial) heme peroxidase/functional fragment(s) thereof may be lyophilized using standard dry freezing protocols or formulated directly after purification/dialysis/concentration.

The (bacterial) heme peroxidase which may be used for the preparation of the compositions of the present invention (and as defined in SEQ ID NO: 1, and/or SEQ ID NO: 18, and/or SEQ ID NO: 11, and/or SEQ ID NO: 25-27) and/or (the) functional fragment(s) thereof may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, or at least 300% increased peroxidase activity in the standard ABTS activity assay compared to bovine lactoperoxidase or LspPOX, whose "reference" peroxidase activity may be measured under identical conditions as is also evident from Example 12 and Figure 8B, Table 5. In one preferred embodiment, said heme peroxidase or (a) functional fragment(s) thereof has/have at least 10% increased peroxidase activity in the standard ABTS activity assay compared to bovine lactoperoxidase. In one preferred embodiment, the (bacterial) heme peroxidase and/or (the) functional fragment(s) thereof may have at least 30% increased peroxidase activity in the standard ABTS activity assay compared to bovine lactoperoxidase.

In another preferred embodiment, said heme peroxidase or (a) functional fragment(s) thereof has/have at least 100% increased peroxidase activity in the standard ABTS activity assay compared to LspPOX. In another preferred embodiment, said heme peroxidase or (a) functional fragment(s) thereof has/have at least 150% increased peroxidase activity in the standard ABTS activity assay compared to LspPOX. In another preferred embodiment, said heme peroxidase or (a) functional fragment(s) thereof has/have at least 200% increased peroxidase activity in the standard ABTS activity assay compared to LspPOX.

The (bacterial) heme peroxidase which may be used for the preparation of the compositions of the present invention (and as defined in SEQ ID NO: 1, and/or SEQ ID NO: 18, and/or SEQ ID NO: 11, and/or SEQ ID NO: 25-27) and/or (the) functional fragment(s) thereof may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, at least 300%, at least 310%, at least 320%, at least 330%, at least 340%, at least 350%, at least 360%, at least 370%, at least 380%, at least 390%, or at least 400% increased peroxidase activity in the thymol blue assay compared to bovine lactoperoxidase or LspPOX, whose "reference" peroxidase activity may be measured under identical conditions as is also evident from Example 13 and Figure 9B, Table 7.

In one preferred embodiment, said heme peroxidase or (a) functional fragment(s) thereof has/have at least 100% increased peroxidase activity in the thymol blue assay compared to bovine lactoperoxidase or LspPOX. In one preferred embodiment, said heme peroxidase or (a) functional fragment(s) thereof has/have at least 200% increased peroxidase activity in the thymol blue assay compared to bovine lactoperoxidase or LspPOX.

As is also evident from the appended figures, in particular Fig. 8B and Fig. 9B, HydPOX, HydPOXs and OkePOXs surprisingly exhibits an increased peroxidase activity compared to LpoPOX and LspPOX in two independent enzymatic activity assays. In the standard ABTS activity assay (Example 12, Table 5), HydPOX exhibits about 98% increased peroxidase activity, HydPOXs exhibits about 56% increased peroxidase activity, and OkePOXs exhibits about 131% increased peroxidase activity compared to LpoPOX and HydPOX exhibits about 184% increased peroxidase activity, HydPOXs exhibits about 125% increased peroxidase activity and OkePOXs exhibits about 232% increased peroxidase activity compared to LspPOX. In the thymol blue assay (halogenation assay; Example 13, Table 7), HydPOX exhibits about 299% increased peroxidase activity, HydPOXs exhibits about 233% increased peroxidase activity, and OkePOXs exhibits about 348% increased peroxidase activity compared to LpoPOX and HydPOX exhibits about 161% increased peroxidase activity, HydPOXs exhibits about 143% increased peroxidase activity and OkePOXs exhibits about 202% increased peroxidase activity compared to LspPOX. Since HydPOX, HydPOXs and OkePOXs thus exhibit increased peroxidase activity compared to LpoPOX (and/or LspPOX), this increased peroxidase activity is assumed to translate into an increased ability of HydPOX, HydPOXs and OkePOXs to prevent and/or control a pathogen, which thus makes HydPOX, HydPOXs and OkePOXs suitable biocontrol agents for medical and non-medical uses. In addition, it is envisioned that also the full-length fragment of OkePOX as defined in SEQ ID NO: 11 is able to achieve the above stated effects.

The (bacterial) heme peroxidase/functional fragment(s) thereof which may be used for the preparation of the compositions of the present invention may prevent and/or control a pathogen, i.e. it may reduce the number of cells of said pathogen. In other words, the (bacterial) heme peroxidase/functional fragment(s) thereof which may be used for the preparation of the compositions of the present invention may prevent the onset of a pathogen infection or the containment/control of an already existing pathogen infection.

Pathogens in the context of the uses of the (bacterial) heme peroxidase/functional fragment(s) thereof of the present invention for the preparation of non-medical compositions may *inter alia* comprise fungi or pathogenic bacteria.

Fungi may preferably be selected from moulds and yeasts. Such fungi without being limiting may *inter alia* be selected from the group consisting of *Botryotinia* spp ("grey moulds"), such as for instance B. *fuckeliana* (anamorphic *Botrytis cinerea*), *Didymella* spp, such as for instance *D. bryonia* (= *Mycospherella* in *Cucurbitaceae*), *D. lycopersici* (= cancer in tomato), *Puccunia* spp ("rusts"), such as for instance *P. horiana* (= Japanese rust), *Sphaerotheca* spp ("true mildew"), such as for instance *S. fuliginea* (mildew in cucumber) and *S. pannose* (mildew in rose), *Erysiphe* spp, *Oidium* spp and *Leveillula Taurica* (also true mildew types), *Fusarium* spp ("foot rot and/or wilt disease"), *Phytophtora* spp ("foot and/or root disease), such as *Phytophthora infestans, Pythium* spp ("foot disease"), *Plasmopara, Peronospora,* and *Sclerospora* spp (the downy mildew types), *Rhizoctonia, Verticillium* and *Sclerotinia* spp (causes of spot), *Rhizopus* and *Penicillium* spp (causes of (storage) rot) and *Venturia* spp (causes of scab). Fungi may additionally be selected from the group consisting of: *Colletotrichum gloeosporioides, Penicillium expansum, Penicillium digitatum, Penicillium italicum, Geotrichum citri-aurantii, Zymoseptoria tritici, Phytophthora infestans* and *Puccinia triticina.*

Without being limiting, pathogenic bacteria may, *inter alia,* be selected from the group consisting of *Erwinia amylovora, Erwinia chrysanthemi, Pseudomonas syringae, Xanthomonas campestris, Curtobactrium flaccumfaciens, Clavibacter michiganensis, Agrobacterium tumefaciens, Xanthomonas campestris p.v. phaseoli, Pseudomonas syringae pv. lachrymans, Pseudomonas syringae pv. tomato, Streptomyces scabies, Xanthomonas campestris pv. campestris* and *Xanthomonas capestris pv. Vesicatoria.*

Alternatively, pathogens in the context of the uses of the (bacterial) heme peroxidase of the present invention for the preparation of medical compositions may *inter alia* comprise fungi or pathogenic bacteria. Said fungi or pathogenic bacteria may be human and/or animal pathogens.

Without being limiting, fungi may, *inter alia,* be selected from the group consisting of *Candida, Cladosporium, Aspergillus, Fusarium, Glomus, Alternaria, Penicillium* and *Cryptococcus.*

Without being limiting, pathogenic bacteria may, *inter alia,* be selected from the group consisting of *Actinomyces,*

*Arachnia* (*Propionibacterium propionicus*), *Bacteroides, Bifidobacterium, Eubacterium, Fusobacterium, Lactobacillus, Leptotrichia, Peptococcus, Peptostreptococcus, Propionibacterium, Selenomonas, Treponema* and *Veillonella*.

Provided herein is a non-therapeutic use of a composition comprising one or more bacterial heme peroxidase as defined in any one of SEQ ID NOs: 1, 18, 11, or 25-27 as a pesticide, wherein the composition further comprises a reducing agent and

(i) hydrogen peroxide and/or
(ii) a hydrogen-peroxide donor system

in aqueous solution.

Thus, a (bacterial) heme peroxidase/functional fragment(s) thereof which may be used for the preparation of the compositions of the present invention may be applied with a reducing agent; and/or (i) a hydrogen peroxide and/or (ii) a hydrogen-peroxide donor system in aqueous solution. In a preferred embodiment, a (bacterial) heme peroxidase and/or functional fragment(s) thereof which may be used for the preparation of the compositions of the present invention may be applied with a reducing agent and (i) hydrogen peroxide and/or (ii) a hydrogen-peroxide donor system in aqueous solution. It an even more preferred embodiment, a (bacterial) heme peroxidase/functional fragment(s) thereof which may be used for the preparation of the compositions of the present invention may be applied with a reducing agent and either (i) hydrogen peroxide or (ii) a hydrogen-peroxide donor system in aqueous solution. As is also evident from Example 8, a (bacterial) heme peroxidase of the present invention may be applied with a reducing agent such as iodide and hydrogen peroxide (i.e. its substrate) in aqueous solution. However, since its substrate (being hydrogen peroxide) is an unstable molecule, it may be preferred that a (bacterial) heme peroxidase/functional fragment(s) thereof which may be used for the preparation of the compositions of the present invention may be applied with a reducing agent and a hydrogen-peroxide donor system in aqueous solution.

Thus, a system comprising the (bacterial) heme peroxidase/functional fragment(s) thereof which may be used for the preparation of the compositions of the present invention, may be regarded as at least a two-component system. However, as described above, it may be preferred that the system comprising the (bacterial) heme peroxidase/functional fragment(s) thereof which may be used for the preparation of the compositions of the present invention, may be a three-component system comprising the (bacterial) heme peroxidase/functional fragment(s) thereof of the present invention, a reducing agent and hydrogen peroxide or a hydrogen-peroxide donor system in aqueous solution.

An aqueous solution, i.e. a water-based solution, may be necessary for the (bacterial) heme peroxidase/functional fragment(s) thereof to exert its/their antimicrobial effect. However, it may not be necessary that a system comprising the (bacterial) heme peroxidase/functional fragment(s) thereof together with a reducing agent and/or (i) hydrogen peroxide and/or (ii) a hydrogen-peroxide donor system may be formulated as an aqueous solution. In one embodiment, the addition of water to these components which may be formulated as a powder, paste, ointment etc may give the (bacterial) heme peroxidase/functional fragment(s) thereof its/their ability to exert its/their antimicrobial effect while simultaneously ensuring an extended shelf life (since no enzymatic reaction may occur prior to the addition of water and thus no reaction components may be consumed). In certain aspects, when a (bacterial) heme peroxidase/functional fragment(s) thereof of the present invention may be contained in a paste such as a toothpaste for example, contacting the toothpaste to saliva may be sufficient to provide an aqueous solution, i.e. to give the (bacterial) heme peroxidase/functional fragment(s) thereof its/their ability to exert its/their antimicrobial effect.

Reducing agents in the context of this invention may be agents that (can) reduce other agents. In other words, a reducing agent is a chemical species that may "donate" (an) electron(s) to an electron recipient (which is called an oxidizing agent). Suitable reducing agents in the context of this invention may be selected from the group consisting of iodide (I⁻), bromide (Br⁻) or thiocyanate (SCN⁻). As is also evident from the appended Examples, in particular Example 5 and 8, iodide (I-) may preferably be used as reducing agent. Without being limiting, a corresponding salt which may be used as reducing agent may *inter alia* be kaliumiodide (KI) for example.

Since hydrogen peroxide is an unstable molecule, it may be preferred that a (bacterial) heme peroxidase/functional fragment(s) thereof of the present invention may be applied with a reducing agent and a hydrogen-peroxide donor system (instead of hydrogen peroxide itself) in aqueous solution which may ensure the indirect hydrogen peroxide substrate supply via sugar oxidation. A suitable hydrogen-peroxide donor system may comprise an oxidase and a corresponding sugar substrate which the oxidase is specific for. Exemplary preferred hydrogen-peroxide donor systems, without being limiting, may comprise, *inter alia,* glucose oxidase/glucose or galactose oxidase/galactose. As an alternative hydrogen-peroxide donor system that may not be based on an oxidase or a corresponding sugar substrate, sodium percarbonate or stabilized hydrogen peroxide may be used.

In one embodiment, a (bacterial) heme peroxidase/functional fragment(s) thereof which may be used for the preparation of the compositions of the present invention may be co-formulated with at least one further agent. In other words, a (bacterial) heme peroxidase (and/or (a) functional fragment(s) thereof), a reducing agent and/or (i) hydrogen peroxide and/or (ii) a hydrogen-peroxide donor system in aqueous solution may be co-formulated with at least one further agent. The at least one further agent may be selected from the group consisting of oils, spreading agents, emulsifiers, ionic compounds, sugars, inorganic compounds, organic compounds, non-ionic compounds, amino acids, peptides, lipids, and/or proteins.

The (bacterial) heme peroxidase/functional fragment(s) thereof which may be used for the preparation of the compositions of the present invention may be used at a rate of about 1 mg/L to about 100 mg/L, preferably wherein said (bacterial) heme peroxidase/functional fragment(s) thereof may be used at a rate of about 10 mg/L to about 50 mg/L.

The (bacterial) heme peroxidase/functional fragment(s) thereof which may be used for the preparation of the compositions of the present invention may be used at a pH of from about 2 to about 10. In a preferred embodiment, the (bacterial) heme peroxidase may be used at a pH of from about 4 to about 6 or at a pH of about 5 as is also evident from Example 7 and Figure 6.

The (bacterial) heme peroxidase/functional fragment(s) thereof which may be used for the preparation of the compositions of the present invention may be used at a temperature of from about 10 °C to about 60 °C. As is also evident from Example 6 and Figure 5, the (bacterial) heme peroxidase for medical use may be used up to about 60 °C without significant loss of enzyme activity.

1. <u>Methods for producing a (bacterial) heme peroxidase of the present invention</u>

The present invention also relates to a method for producing one or more bacterial heme peroxidase as defined in any one of SEQ ID NOs: 18, 25 or 27 in an engineered Bacillus subtilis strain, preferably wherein said engineered Bacillus subtilis strain has reduced activity of one or more extracellular Bacillus subtilis protease(s).. An engineered *Bacillus subtilis* strain may lack or may at least have reduced activity regarding one or more extracellular protease(s) which may be endogenously expressed by a *Bacillus subtilis* wildtype bacterium.

An engineered *Bacillus subtilis* strain in the context of the present methods for producing a (bacterial) heme peroxidase/functional fragment(s) thereof of the invention may be any bacterial subspecies/strain that belongs to the species *Bacillus subtilis* whose genetic information/constitution may have been transiently or stably modified compared to its wildtype genetic information/constitution through *inter alia* the addition, deletion or modification of genetic information. A person skilled in the art is aware of means and methods to perform such genetic modifications. Genetic information may be added for example by transforming bacteria with DNA which may encode for an external (i.e. a non-endogenously contained/transcribed/expressed) gene of interest, such as linear (like for example cDNA or PCR product) or circular DNA like for example plasmid DNA, episomal DNA or minicircle DNA. Genetic information may also be added for example by transforming bacteria with RNA that may encode for an external gene of interest, such as for example mRNA or circRNA. In some instances, genetic information encoding an external gene of interest may also be added by phages or virus infection of bacteria. In certain aspects, genetic information encoding an external gene of interest may be stably maintained in the bacterial cells or integrated into the endogenous bacterial DNA by DNA editing via, for example, CRISPR/Cas9, TALEN or zinc finger nucleases. Endogenously contained/transcribed/expressed genetic information may be deleted or modified for example by genetic knock-out, knock-down, (transient) silencing, or mutation of the respective information on the DNA, RNA or protein level. These effects may, *inter alia,* be achieved by genome editing via, for example, CRISPR/Cas9, TALEN or zinc finger nucleases which may cause (a) frameshift mutation(s) and (a) premature stop codon(s) in the coding region of an endogenously contained/transcribed/expressed gene of interest (in the case of a knock-out) or which may introduce a genetic mutation (i.e. a DNA/RNA modification) into the coding region of an endogenously contained/transcribed/expressed gene of interest. Genetic information may also be deleted or modified for example via transcriptional repression/silencing, via dCas9 for example, the use of siRNA(s), shRNAs, small molecules or the use of mutagenizing agents such as chemicals, radiation and the like. In certain aspects, the genetic information/constitution of an engineered *Bacillus subtilis* strain which may be used to produce a (bacterial) heme peroxidase of the present invention may be modified through the deletion or modification of one or more *Bacillus subtilis* genes encoding for extracellular proteases like NprE, AprE, Epr, Bpr, Mpr, NprB, Vpr, and WprA. The deletion or modification of these exemplary genes may confer a high level of structural integrity to proteins that may be recombinantly expressed by these engineered *Bacillus subtilis* strains. In other words, proteins being expressed by such engineered *Bacillus subtilis* strains may not be degraded and therefore may remain in their native conformation which also may lead to increased protein expression yields.

In order to verify that a *Bacillus subtilis* strain is an engineered *Bacillus subtilis* strain carrying desired modifications, genetic markers, such as antibiotic resistance markers against commonly used antibiotics such as erythromycin, lincomycin, ampicillin, kanamycin, chloramphenicol, neomycin, puromycin and the like, PCR genotyping, FACS-based phenotyping, functional readouts or a combination thereof may be used.

In a preferred embodiment, a *Bacillus subtilis* strain for producing a (bacterial) heme peroxidase of the present invention and/or (a) functional fragment(s) thereof may have reduced activity of one or more extracellular *Bacillus subtilis* protease(s).

Reduced activity in this context means that the one or more extracellular *Bacillus subtilis* protease(s) (each) may exhibit(s) less or no activity at all in an engineered *Bacillus subtilis* strain compared to their wildtype counterparts as a consequence of their modification or deletion as described above. Therefore, reduced activity of one or more extracellular *Bacillus subtilis* protease(s) may result from the stable knock-out, transient downregulation/repression and/or transient inhibition of said *Bacillus subtilis* protease(s) on the DNA, RNA, and/or protein level. Transient inhibition may for example also be achieved via small molecule inhibitors or the addition of chelating agents such as EDTA to the *Bacillus subtilis* bacteria.

As already indicated above, the one or more extracellular *Bacillus subtilis* protease(s) in this context may be selected from the group consisting of NprE, AprE, Epr, Bpr, Mpr, NprB, Vpr, and WprA.

The (bacterial) heme peroxidase which may be produced by this method may be derived/obtained from *Hydrocoleum sp.* or *Okeania sp.* cyanobacterial origin. The (bacterial) heme peroxidase which may be produced by this method may be a heme peroxidase as defined in any one of SEQ ID NOs: 18, 25 or 27.

One exemplary functional fragment of SEQ ID NO: 1 that may also be employed in this context is defined in SEQ ID NO: 18. SEQ ID NO: 18 corresponds to SEQ ID NO: 1 but is missing amino acids 1 to 116 of SEQ ID NO: 1. Therefore, the functional fragment which is defined in SEQ ID NO: 18 represents the amino acid sequence from position 117 to position 659 of SEQ ID NO: 1. As is evident by comparison from SEQ ID NO: 1 and SEQ ID NO: 18, SEQ ID NO: 18 shares 543 consecutive amino acids with SEQ ID NO: 1. Therefore, the amino acid sequence of the functional fragment as defined in SEQ ID NO: 18 is about 82% identical to SEQ ID NO: 1.

In certain aspects, it may be necessary that the functional fragment as defined in SEQ ID NO: 18 may be preceded by a methionine immediately at the N-terminus of the functional fragment.

One exemplary functional fragment of SEQ ID NO: 11 is provided in SEQ ID NO: 25. SEQ ID NO: 25 corresponds to SEQ ID NO: 11 but is missing amino acids 1 to 116 of SEQ ID NO: 11. Therefore, the functional fragment which is defined in SEQ ID NO: 25 represents the amino acid sequence from position 117 to position 659 of SEQ ID NO: 11. As is evident by comparison from SEQ ID NO: 11 and SEQ ID NO: 25, SEQ ID NO: 25 shares 543 consecutive amino acids with SEQ ID NO: 11. Therefore, the amino acid sequence of the functional fragment as defined in SEQ ID NO: 25 may be about 82% identical to SEQ ID NO: 11.

In certain aspects, it may be necessary that the functional fragment as defined in SEQ ID NO: 25 may be preceded by a methionine immediately at the N-terminus of the functional fragment.

In one embodiment, the nucleotide sequence of a (bacterial) heme peroxidase/functional fragment(s) thereof which may be produced by this method may be codon-optimized for recombinant protein expression in *Bacillus subtilis.*

Additionally, the nucleic acid encoding the preferred peroxidases as defined in SEQ ID NO: SEQ ID NO: 18, and/or SEQ ID NO: 25 or 27 can be codon optimized for recombinant expression, e.g. in *Bacillus subtilis.* Exemplary codon optimized nucleic acid sequences are provided in SEQ ID NOs: 2, 9, 19, 21 and 24.

Therefore, codon-optimization of the (bacterial) heme peroxidase/functional fragment(s) thereof which may be produced by the present method may comprise the replacement of at least 20%, at least 30%, at least 40%, at least 50%, at least 60%, at least 70%, at least 75%, at least 80%, at least 85%, at least 90%, at least 91%, at least 92%, at least 93%, at least 94%, at least 95%, at least 96%, at least 97%, at least 98%, at least 99% or 100% of endogenous (wildtype) codons of the (bacterial) heme peroxidase/functional fragment(s) thereof with synonymous codons that lead to increased levels of RNA-transcription in *Bacillus subtilis.* A person skilled in the art is aware of means and methods to perform such a codon-optimization.

In one embodiment, the (bacterial) heme peroxidase/functional fragment(s) thereof which may be produced by the present method may comprise a N- and/or C-terminally linked signal peptide, purification tag and/or a protease cleavage site. Exemplary non-limiting signal peptides which may be used may be derived and selected from the group consisting of a signal peptide of the extracellular *Bacillus subtilis* protease nprE, a signal peptide of spA, phoA, ribose binding protein, pelB, ompA, ompT, dsbA, torA, torT, tolT, or signal peptides from the TAT secretion pathway in bacteria. Non-limiting (epitope) tags or purification tags which may be used may be selected from the group consisting of His$_6$-tag, glutathione S-transferase (GST), maltose binding protein (MBP), calmodulin binding peptide (CBP), intein-chitin binding domain (intein-CBD) tag, streptavidin, (Twin) Strep-tag (I/II), flag-tag, HA-tag, c-myc tag, V5-tag, T7-tag, NE-tag, HaloTag, SUMO-tag. (Epitope) tags or purification tags may be detected with detection reagents such as detectable monoclonal or polyclonal antibodies/antibody-conjugates in applications such as Western blotting for example. The (bacterial) heme peroxidase/functional fragment(s) thereof which may be produced by this method may further be linked to detectable reporter tags such as β-galactosidase (β-gal), alkaline phosphatase (AP), chloramphenicol acetyl transferase (CAT), and horseradish peroxidase (HRP) or fluorescent reporter proteins such as (e)GFP, (e)CFP, (e)BFP, (e)YFP, (e)RFP, mCherry, mRuby or mOrange. Non-limiting protease cleavage sites that may be used comprise cleavage sites of proteases selected from the group consisting of TEV-protease, enteropeptidase, thrombin, factor Xa, rhinovirus 3C protease, carboxypeptidase A, carboxypeptidase B, DAPase.

"N- and/or C-terminally linked" in the context of a (bacterial) heme peroxidase/functional fragment(s) thereof which may be produced by this method may be understood to mean that a signal peptide, purification tag and/or protease cleavage site may be genetically fused in-frame with the 5' and/or 3' end of the coding sequence of the (bacterial) heme peroxidase/(a) functional fragment thereof. In instances where a signal peptide, purification tag, protease cleavage site, and/or fluorescent reporter protein which already encode an initial methionine may be fused to the 5' end of the (bacterial) heme peroxidase/functional fragment thereof, the initial methionine of the (bacterial) heme peroxidase/functional fragment thereof may be removed.

In one embodiment, the (bacterial) heme peroxidase/functional fragment(s) thereof which may be produced by the present method may comprise a signal peptide, preferably a signal peptide of an extracellular *Bacillus subtilis* protease, and optionally a purification tag, like a His$_6$-tag.

The (bacterial) heme peroxidase which may be produced by the present method (and as defined in any one of SEQ ID NOs: 18, 25 or 27) may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, or at least 300% increased peroxidase activity in the standard ABTS activity assay compared to bovine lactoperoxidase or LspPOX, whose "reference" peroxidase activity may be measured under identical conditions as is also evident from Example 12 and Figure 8B, Table 5. In one preferred embodiment, said heme peroxidase or (a) functional fragment(s) thereof has/have at least 10% increased peroxidase activity in the standard ABTS activity assay compared to bovine lactoperoxidase. In one preferred embodiment, the (bacterial) heme peroxidase/ functional fragment(s) thereof may have at least 30% increased peroxidase activity in the standard ABTS activity assay compared to bovine lactoperoxidase.

In another preferred embodiment, said heme peroxidase or (a) functional fragment(s) thereof has/have at least 100% increased peroxidase activity in the standard ABTS activity assay compared to LspPOX. In another preferred embodiment, said heme peroxidase or (a) functional fragment(s) thereof has/have at least 150% increased peroxidase activity in the standard ABTS activity assay compared to LspPOX. In another preferred embodiment, said heme peroxidase or (a) functional fragment(s) thereof has/have at least 200% increased peroxidase activity in the standard ABTS activity assay compared to LspPOX.

The (bacterial) heme peroxidase which may be produced by the present method (and as defined in any one of SEQ ID NOs: 18, 25 or 27) may have at least 5%, at least 10%, at least 15%, at least 20%, at least 25%, at least 26%, at least 27%, at least 28%, at least 29%, at least 30%, at least 31%, at least 32%, at least 33%, at least 34%, at least 35%, at least 40%, at least 45%, at least 50%, at least 55%, at least 60%, at least 65%, at least 70%, at least 75%, at least 80%, at least 85, at least 90%, at least 95%, at least 100%, at least 110%, at least 120%, at least 130%, at least 140%, at least 150%, at least 160%, at least 170%, at least 180%, at least 190%, at least 200%, at least 210%, at least 220%, at least 230%, at least 240%, at least 250%, at least 260%, at least 270%, at least 280%, at least 290%, at least 300%, at least 310%, at least 320%, at least 330%, at least 340%, at least 350%, at least 360%, at least 370%, at least 380%, at least 390%, or at least 400% increased peroxidase activity in the thymol blue assay compared to bovine lactoperoxidase or LspPOX, whose "reference" peroxidase activity may be measured under identical conditions as is also evident from Example 13 and Figure 9B, Table 7.

In one preferred embodiment, said heme peroxidase or (a) functional fragment(s) thereof has/have at least 100% increased peroxidase activity in the thymol blue assay compared to bovine lactoperoxidase or LspPOX. In one preferred embodiment, said heme peroxidase or (a) functional fragment(s) thereof has/have at least 200% increased peroxidase activity in the thymol blue assay compared to bovine lactoperoxidase or LspPOX.

As is also evident from the appended figures, in particular Fig. 8B and Fig. 9B, HydPOX, HydPOXs and OkePOXs surprisingly exhibits an increased peroxidase activity compared to LpoPOX and LspPOX in two independent enzymatic activity assays. In the standard ABTS activity assay (Example 12, Table 5), HydPOX exhibits about 98% increased peroxidase activity, HydPOXs exhibits about 56% increased peroxidase activity, and OkePOXs exhibits about 131% increased peroxidase activity compared to LpoPOX and HydPOX exhibits about 184% increased peroxidase activity, HydPOXs exhibits about 125% increased peroxidase activity and OkePOXs exhibits about 232% increased peroxidase activity compared to LspPOX. In the thymol blue assay (halogenation assay; Example 13, Table 7), HydPOX exhibits about 299% increased peroxidase activity, HydPOXs exhibits about 233% increased peroxidase activity, and OkePOXs exhibits about 348% increased peroxidase activity compared to LpoPOX and HydPOX exhibits about 161% increased peroxidase activity, HydPOXs exhibits about 143% increased peroxidase activity and OkePOXs exhibits about 202% increased peroxidase activity compared to LspPOX. Since HydPOX, HydPOXs and OkePOXs thus exhibit increased peroxidase activity compared to LpoPOX (and/or LspPOX), this increased peroxidase activity is assumed to translate into an increased ability of HydPOX, HydPOXs and OkePOXs to prevent and/or control a pathogen, which thus makes HydPOX, HydPOXs and OkePOXs suitable biocontrol agents. In fact, the ability to prevent and/or control pathogens, i.e. kill pathogens, has been demonstrated for HydPOX, HydPOXs and OkePOXs (see Example 16). In addition, it is envisioned that also the full-length fragment of OkePOX as defined in SEQ ID NO: 11 is able to achieve the above stated effects.

The (bacterial) heme peroxidase of the present invention and/or functional fragment(s) thereof may be genetically encoded in a vector/plasmid. A vector may be suitable for expression in bacteria, preferably in *Bacillus subtilis.*

Vectors genetically encoding a (bacterial) heme peroxidase of the present invention and/or (a) functional fragment(s) thereof may generally comprise regulatory control sequences, (e.g., transcriptional or translational control sequences) required for expressing the (bacterial) heme peroxidase/(a) functional fragment(s) thereof. Suitable regulatory control sequences may include but may not be limited to replication origin, promoter, enhancer, repressor binding regions, transcription initiation sites, ribosome binding sites, translation initiation sites, or termination sites for transcription and translation.

In certain aspects, the vector may encode a (bacterial) heme peroxidase/(a) functional fragment(s) thereof of the present invention and/or one or more other proteins such as chaperones and/or heme biosynthesis pathway enzymes.

In one embodiment, the vector which may be used for producing a (bacterial) heme peroxidase of the present invention and/or (a) functional fragment(s) thereof may be a bifunctional vector. A bifunctional vector is a vector that may be used in combination with *Bacillus subtilis. A* suitable bifunctional vector of the present invention may be a plasmid which may be obtained from Bacillus Genetic Stock Center (BGSC) and has accession number ECE743.

The origin of replication (generally referred to as ori) may permit replication of the vector in *Bacillus subtilis.* The origin of replication also determines the copy number of a given vector in bacteria. The vector which may be used for producing a (bacterial) heme peroxidase of the present invention and/or (a) functional fragment(s) thereof may have a medium copy number in *Bacillus subtilis.*

The vector(s) which may be employed may comprise at least one selectable marker such as a gene encoding a protein necessary for the survival or growth of a host cell transformed with the vector. Only those bacterial cells into which a selectable marker (gene) has been introduced may survive and/or grow under selective conditions. Typical selection genes may encode protein(s) that (a) confer resistance to antibiotics or other toxins (e.g., ampicillin, erythromycin, lincomycin, kanamycin, neomycin, G418, methotrexate, etc.); (b) complement auxotrophic deficiencies; or (c) supply critical nutrients not available from complex media.

In certain instances in which a bifunctional vector may be used, it may encode for at least two selectable markers/antibiotic resistance marker genes conferring resistance to for example the antibiotics erythromycin, lincomycin and ampicillin. In some aspects, acquired resistance to erythromycin and/or lincomycin may be used for *Bacillus subtilis* clone selection.

In cases where a (bacterial) heme peroxidase/functional fragment(s) thereof comprise(s) a signal peptide, (purification) tag and/or a protease cleavage site, all of these elements may also be comprised in the vector at some point.

The vectors encompassed herein may be obtained using recombinant cloning methods and/or chemical synthesis. Recombinant cloning methods may include PCR, restriction endonuclease digestion and ligation and/or Gibson assembly (Gibson et al. 2009). Sequence data, that may be located in the public or proprietary databases, may be used to obtain a desired vector by any synthetic means. Additionally, using restriction/ligation and/or Gibson assembly techniques, appropriate sequences may be "excised" from various DNA sources and integrated in operative relationship with the exogenous sequences which may be expressed.

In some embodiments, the vector may comprise a regulatory element (also referred to as a regulatory (control) element herein). A regulatory element may include, for example, replication origin, promoters, TATA boxes, enhancers, ribosome binding sites, repressor binding regions, transcription initiation sites, transcription termination sites, non-native sequences (e.g. tags) and untranslated regions ("UTRs"). In some instances, the regulatory element may be a promoter. A promoter may be constitutive or inducible, but constitutive promoters may be preferred in the context of this invention.

In some preferred embodiments, a vector may encode a (bacterial) heme peroxidase of the present invention and/or (a) functional fragment(s) thereof. In some aspects a vector may encode a (bacterial) heme peroxidase of the present invention and/or (a) functional fragment(s) thereof together with a N- and/or C-terminally linked signal peptide, purification tag and/or a protease cleavage site. In some other aspects a vector may encode a (bacterial) heme peroxidase of the present invention and/or (a) functional fragment(s) thereof together with N- and/or C-terminally linked signal peptide, purification tag and/or a protease cleavage site; a selectable marker gene in combination with non-coding sequences, such as control elements, such as promoter elements or 5' and/or 3' UTRs, effective for expression of the (bacterial) heme peroxidase/(a) functional fragment(s) thereof in a suitable host such as *Bacillus subtilis.* In some embodiments, a vector encoding the above-described elements together with appropriate promoter and control sequences may be introduced into bacterial host cells, such as *Bacillus subtilis* host cells, to permit the cells to express the (bacterial) heme peroxidase/(a) functional fragment(s) thereof. In some embodiments, a vector encodes a (bacterial) heme peroxidase as defined in any one of SEQ ID NOs: 18, 25 or 27.

The introduction of the vector encoding a (bacterial) heme peroxidase/(a) functional fragment(s) thereof, which preferably comprises a signal peptide like a signal peptide of an extracellular *Bacillus subtilis* protease and a purification tag like a $His_6$-tag, into bacterial host cells, such as *Bacillus subtilis* host cells, may include, but is not limited to electroporation, transformation, transduction, high velocity bombardment with DNA-coated microprojectiles, infection with modified viral (e.g., phage) nucleic acids; chemically-mediated transformation, or competence. In some aspects, a vector encoding a (bacterial) heme peroxidase of the present invention and/or (a) functional fragment(s) thereof may be transcribed in vitro, and the resulting RNA may be introduced into the host cell(s).

Following introduction of a vector or polynucleotides encoding a (bacterial) heme peroxidase/(a) functional fragment(s) thereof, which preferably comprises a signal peptide and a purification tag, the bacterial host cell may be cultured in conventional nutrient media modified as appropriate for activating promoters (if necessary), selecting transformants, and/or amplifying expression of a (bacterial) heme peroxidase/(a) functional fragment(s) thereof. In certain aspects of the present invention, suitable nutrient media may be LB media or LB media supplemented with glucose. The culture conditions, such as temperature, and the like, may *inter alia* be those as exemplified in Example 2 of the present invention.

The production (i.e., the expression) of a (bacterial) heme peroxidase/functional fragment(s) thereof may be divided into two steps as is also evident from Example 2 of the present invention. In a first step, a seed culture comprising suitable seed medium and *Bacillus subtilis* cells transformed with a vector or polynucleotides encoding the (bacterial) heme peroxidase/functional fragment(s) thereof may be prepared and cultivated under constant shaking for at least about 0.1, for at least about 0.5, for at least about 1, for at least about 2, for at least about 3, for at least about 4, for at least about 5, for at least about 6, for at least about 7, for at least about 8, for at least about 9, for at least about 10, for at least about 15, for at least about 17 or 20 or more hours, wherein 17 hours may be preferred. Inoculation of a bacterial expression culture with at least about 1 vol%, with at least about 2 vol%, with at least about 3 vol%, with at least about 4 vol%, with at least about 5 vol%, with at least about 6 vol%, with at least about 7 vol%, with at least about 8 vol%, with at least about 9 vol%, with at least about 10 vol% of the seed culture may occur after the seed culture has reached an optical density (OD600) of at least about 0.1, of at least about 0.2, of at least about 0.3, of at least about 0.4, of at least about 0.5, of at least about 0.6, of at least about 0.7, of at least about 0.8, of at least about 0.9. of at least about 1.0, of at least about 1.1, of at least about 1.2, of at least about 1.3, of at least about 1.4, of about 1.5 or more, preferably wherein the OD600 is between about 1.0 and about 1.5. In a preferred embodiment, the seed culture has an OD600 of between about 1.0 and about 1.5 and the bacterial expression culture is inoculated with about 5 vol% of said seed culture. In a second step, a bacterial expression culture comprising suitable bacterial expression culture medium and seed culture may be cultivated for at least about 0.1 hours, for at least about 0.5 hours, for at least about 1 hour, for at least about 2 hours, for at least about 3 hours, for at least about 4 hours, for at least about 5 hours, for at least about 6 hours, for at least about 7 hours, for at least about 8 hours, for at least about 9 hours, for at least about 10 hours, for at least about 11 hours, for at least about 12 hours, for at least about 13 hours, for at least about 14 hours, for at least about 15 hours, for at least about 16 hours, for at least about 17 hours, for at least about 18 hours, for at least about 19 hours, for at least about 20 hours, for at least about 21 hours, for at least about 22 hours, for at least about 23 hours, for at least about 24 hours, for at least about 1 day, for at least about 36 hours, for at least about 2 days, for at least about 3 days, for at least about 4 days, for at least about 5 days, for at least about 6 days, for at least about 7 days, for at least about 1 week, for at least about 2 weeks, for at least about 3 weeks, for at least about 4 weeks, for about 5 weeks or more weeks, preferably for at least about 24 to about 36 hours. The (bacterial) heme peroxidase protein may subsequently be comprised in the bacterial expression culture supernatant.

In one embodiment, the seed culture and the bacterial expression culture may be incubated under constant shaking at about 100 to about 300 rpm and at about 10%, 20%, 30%, 40%, 50%, 60%, 70%, 80%, or 90% humidity, preferably at about 70% humidity. Furthermore, the incubation temperature may generally be within the range of from about 20°C to 40°C, or in the range of from about 28°C to 37°C. In a preferred embodiment, the incubation temperature for the seed culture may be 37°C and the incubation temperature for the bacterial expression culture may be 30°C.

The pH range in the aqueous cultures may be in the exemplary range from about 2.0 to about 8.0. For the seed culture, a pH range of from about 5.0 to about 8.0, preferably of from about 6.0 to about 7.0 is envisaged.

Suitable media (compositions) for the seed and bacterial expression culture may be standard culture media for *Bacillus subtilis* cultivation. Suitable media may include, in addition to nitrogen, suitable amounts of phosphorus, magnesium, calcium, potassium, sulfur, and sodium, in suitable soluble assimilable ionic and combined forms, and may also comprise certain trace elements such as copper, manganese, molybdenum, zinc, iron, boron, and iodine, and others, again in suitable soluble assimilable form. In certain aspects of the present invention, suitable nutrient media may be LB media or LB media supplemented with glucose and/or maltose.

In some instances, chemical agents may be added to the media (compositions), in particular to the bacterial expression culture media. In some instances, the chemical agent may aid the stability, heme content, and/or folding capability of the expressed (bacterial) heme peroxidase/functional fragment(s) thereof. A chemical agent may comprise a small molecule such as a metal. Examples of suitable metals for addition to media may include iron fluorides (iron difluoride, iron trifluoride), iron dichloride, iron trichloride, iron dibromide, iron tribromide, iron diiodide, iron triiodide, iron oxide, diiron trioxide, triiron tetraoxide, iron sulfide, iron persulfide, iron selenide, iron telluride, diiron nitride, iron pentacarbonyl, diiron nonacarbonyl triiron dodecacarbonyl, iron dichloride dihydrate, iron trifluoride trihydrate, iron dibromide hexahydrate, iron dichloride tetrahydrate, iron nitrate hexahydrate, iron trichloride hexahydrate, iron difluoride tetrahydrate, iron sulphate heptahydrate, iron trinitrate nonahydrate, diiron trisulfate nonahydrate, iron chromate, iron citrate, iron gluconate, magnesium iron hexahydride, iron lactate, iron phosphate, iron pentacarbonyl, ammonium iron sulfate, ammonium ferric citrate, ferric oxalate, and triiron diphosphate octahydrate. Iron sulphate heptahydrate may however be preferred.

Additional proteins such as thiol-disulfide oxidoreductases or chaperones may be beneficial to help fold the (bacterial) heme peroxidase/functional fragment(s) thereof into its native/active conformation. Thiol-disulfide oxidoreductases and protein disulfide isomerases may catalyze the formation of the correct disulfide bonds in the protein. Expression of the bdbDC operon in *Bacillus subtilis* has been shown to be beneficial for the production of a polypeptide with disulfide bonds. Chaperones may assist the secretory protein to fold by binding to exposed hydrophobic regions in the unfolded state and preventing unfavorable interactions; prolyl-peptidyl cis-trans isomerases may further assist in the formation of the proper conformation of the (bacterial) heme peroxidase/fragment peptide chain adjacent to proline residues. In some aspects, the *Bacillus subtilis* host cells may be transformed with a(n expression) vector encoding for at least one thiol-disulfide oxidoreductase or chaperone.

In accordance with the present invention, the (bacterial) heme peroxidase (protein) and/or the functional fragment protein(s) thereof which may be produced by the present method may be purified from bacterial expression culture supernatant or may at least be separated from the bacterial cell mass. The skilled person is aware of means and methods to purify the (bacterial) heme peroxidase protein and/or the functional fragment protein(s) thereof which may be produced by the present method from the bacterial expression culture supernatant. Exemplary purification workflows are well known in the art and may involve the centrifugation of the bacterial expression culture at about 5,000 g to about 18,000 g for about 5 to about 45 minutes to separate the bacterial cell mass from the bacterial expression culture supernatant. The bacterial expression culture supernatant may optionally be sterile filtrated. The (bacterial) heme peroxidase/functional fragment(s) thereof may subsequently be purified from the sterile filtrated bacterial expression culture supernatant by one or more purification methods which may be selected from the group consisting immobilized metal affinity chromatography (IMAC), ion-exchange chromatography, affinity-chromatography, size-exclusion chromatography, gel filtration chromatography. In one embodiment, the (bacterial) heme peroxidase/functional fragment(s) thereof may comprise a $His_6$-tag for purification via immobilized metal affinity chromatography. Optionally, endotoxins may be removed from the purified (bacterial) heme peroxidase/functional fragment(s) thereof in order to avoid anaphylactic reactions after the (bacterial) heme peroxidase and/or functional fragment(s) thereof may be applied to the human or animal body. Endotoxins may be removed by gel filtration chromatography or by using commercially available endotoxin removal kits such as high-capacity endotoxin removal spin columns. In order to determine endotoxin levels for human use (endotoxin limit: K 5 EU/kg) endotoxin-concentrations may *inter alia* be determined using the Limulus Amebocyte Lysate Test (LAL). The purified (bacterial) heme peroxidase/functional fragment(s) thereof may be dialyzed against an appropriate diluent, such as standard phosphate buffered saline, concentrated and snap-frozen in liquid nitrogen. In some aspects, the purified (bacterial) heme peroxidase/functional fragment(s) thereof may be lyophilized using standard dry freezing protocols.

The features described herein in context of any one of:

(i) The (bacterial) heme peroxidase and/or (the) functional fragment(s) thereof which may be employed for preventing and/or controlling the growth and/or the spreading of a pathogen,
(ii) (Bacterial) heme peroxidase of the present invention for non-medical use,
(iii) (Bacterial) heme peroxidase of the present invention for medical us,
(iv) Methods comprising a (bacterial) heme peroxidase of the present invention for non-medical use,
(v) Methods comprising a (bacterial) heme peroxidase of the present invention for medical use,
(vi) Compositions comprising a (bacterial) heme peroxidase of the present invention for non-medical use,
(vii) Compositions comprising a (bacterial) heme peroxidase of the present invention for medical use,
(viii) Use(s) of a (bacterial) heme peroxidase of the present invention
(ix) Kits comprising a (bacterial) heme peroxidase of the present invention,
(x) Methods for producing a (bacterial) heme peroxidase of the present invention can similarly be applied to any of the herein provided embodiments in any one of (i)-(x) as described herein.

Further embodiments are exemplified in the scientific part. The appended figures provide illustrations of the present invention. Whereas the experimental data in the examples and as illustrated in the appended figures are not considered to be limiting, the technical information comprised therein forms part of this invention. The invention thus also covers all further features shown in the figures individually, although they may not have been described in the previous or following description.

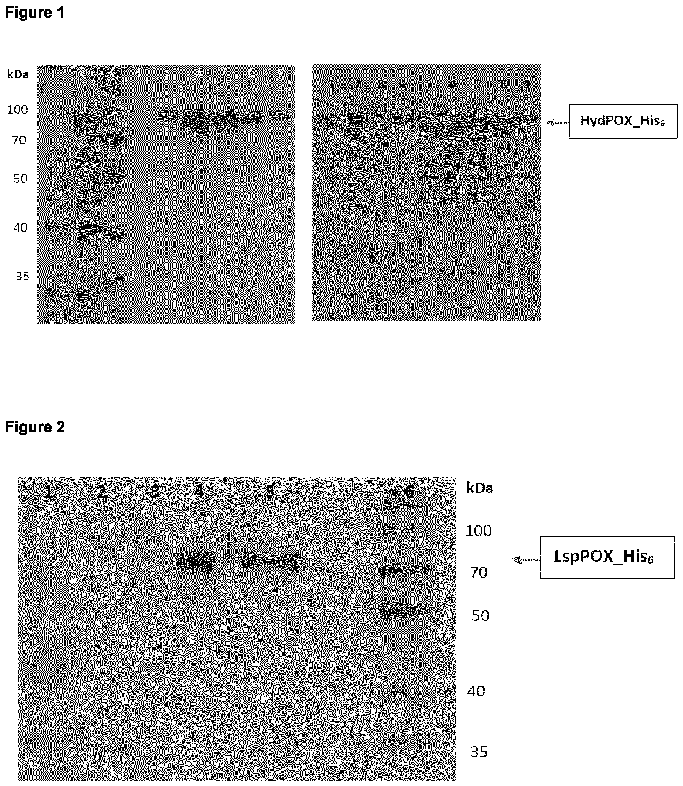

Figure 1: Stained SDS-PAGE and Western blot of HydPOX purification. Lane 1 shows flowthrough sample, lane 2 shows bacterial expression culture supernatant used for purification, lane 3 shows molecular weight marker and lanes 4-9 show elution fractions of HydPOX. For Western blot analysis, anti-His tag antibodies were used.

Figure 2: Stained SDS-PAGE of LspPOX purification. Lane 1 shows flowthrough sample, lane 2 and 3 show wash fraction, lanes 4 and 5 show elution fractions of LspPOX and lane 6 shows molecular weight marker.

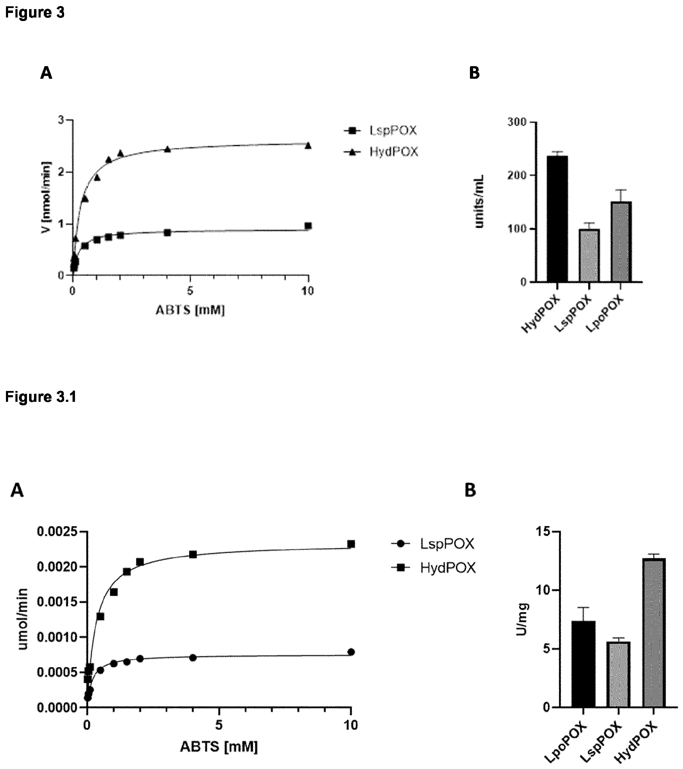

Figure 3: ABTS assay for determination and comparison of peroxidase activity. A. Michaelis-Menten plot and curve for HydPOX (ABBPP142) and LspPOX. B. Comparison of activity of HydPOX, LspPOX and LpoPOX in units per mL.

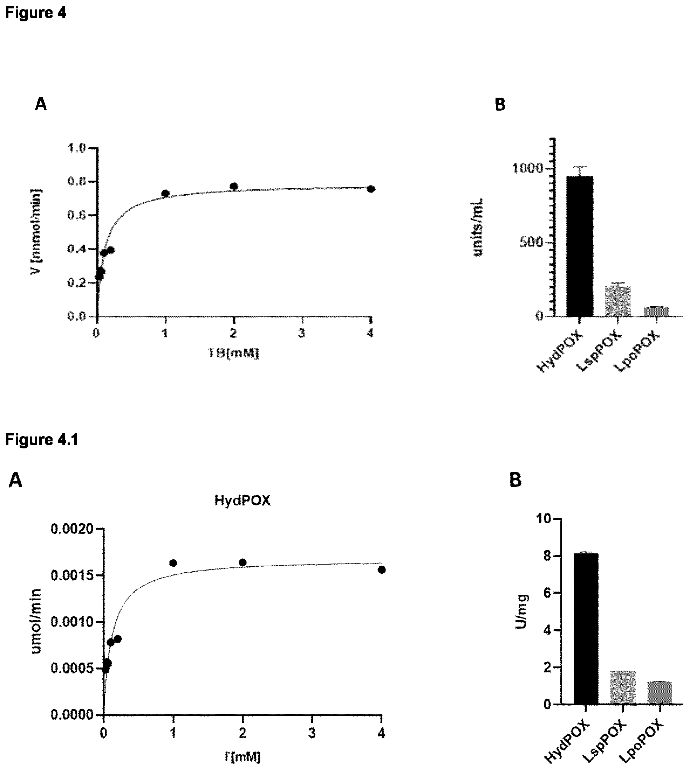

Figure 4: Thymole blue assay for determination and comparison of peroxidase activity. A. Michaelis-Menten plot and curve for HydPOX (ABBPP142). B. Comparison of activity of HydPOX, LspPOX and LpoPOX in units per mL.

Figure 5: HydPOX stability assay. Activity of HydPOX peroxidase relative to its activity at 25 °C after incubation at different temperatures is shown.

Figure 6: Activity assay of HydPOX at different pH conditions. Activity of HydPOX peroxidase at different pH conditions relative to its activity at pH 5 is illustrated.

**Figure 7: Stained SDS-PAGE of HydPOXs and OkePOXs purification.** Lane 1 shows molecular weight marker, lane 2 shows purified HydPOXs, lane 3 shows molecular weight marker, lane 4 shows purified OkePOXs and lane 5 shows molecular weight marker.

**Figure 8: ABTS assay for determination and comparison of peroxidase activity. A.** Michaelis-Menten plot and curves for HydPOX, HydPOXs, OkePOXs and LspPOX. **B.** Comparison of activity of HydPOX, HydPOXs, OkePOXs, LpoPOX and LspPOX in units per mg.

**Figure 9: Thymol blue assay for determination and comparison of peroxidase activity. A.** Michaelis-Menten plot and curves for HydPOX, HydPOXs, OkePOXs, LspPOX and LpoPOX. **B.** Comparison of activity of HydPOX, HydPOXs, OkePOXs, LpoPOX and LspPOX in units per mg.

**Figure 10: HydPOX, HydPOXs and OkePOXs stability assay.** Activity of HydPOX, HydPOXs and OkePOXs peroxidases relative to their activity at 25 °C after incubation at different temperatures is shown.

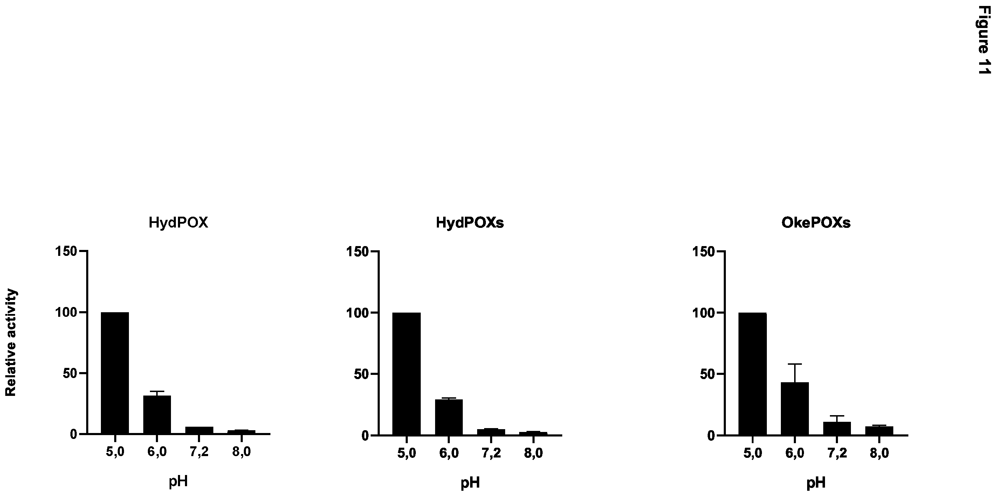

**Figure 11: Activity assay of HydPOX, HydPOXs and OkePOXs at different pH conditions.** Activity of HydPOX, HydPOXs and OkePOXs peroxidases at different pH conditions relative to their activity at pH 5 is illustrated.

Unless otherwise defined, all technical and scientific terms used herein have the same meaning as commonly understood by one of ordinary skill in the art to which this invention pertains. Although methods and materials similar or equivalent to those described herein can be used in the practice or testing of the present invention, suitable methods and materials are described below. In case of conflict, the present specification, including definitions, will control. In addition, the materials, methods, and examples are illustrative only and not intended to be limiting.

The methods and techniques of the present invention are generally performed according to conventional methods well known in the art and as described in various general and more specific references that are cited and discussed throughout the present specification unless otherwise indicated. See, e.g. Hankin and Peters, Snyder & Champness Molecular Genetics of Bacteria, 5th ed., Wiley (2020); Madigan et al., Brock Biology of Microorganisms, 15th ed., Pearson (2018); Helyer et al., Biological control in plant protection: a color handbook, 2nd ed., John Wiley & Sons (2010).

Furthermore, in the claims, the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope. As used herein, the term "about" can also indicate and encompass a value and a range above and below that value. In certain embodiments, the term "about" indicates the designated value $\pm$ 10%, $\pm$ 5%, or $\pm$ 1%. In certain embodiments, where applicable, the term "about" indicates the designated value(s) $\pm$ one standard deviation of that value(s).

As used herein "functional fragment" preferably relates to a fragment, e.g. partial wild type sequence of a (bacterial) heme peroxidase having comparable or, in some particular cases, even improved functional properties as the wild type sequence. In the sense of the present invention a "functional fragment" of a (bacterial) heme peroxidase preferably has the same enzymatic function as the full length (bacterial) heme peroxidase of its origin. In some embodiments, a functional fragment of a (bacterial) heme peroxidase can have improved enzymatic activity compared to the full length (bacterial) heme peroxidase of its origin. As used herein "fragment" is preferably a functional fragment of a (bacterial) heme peroxidase.

**Example 1. Construction of the expression vectors for production of cyanobacterial peroxidases LspPOX and HydPOX in *Bacillus subtilis***

Protein overexpression plasmids ("vectors") for heterologous expression of bacterial heme peroxidases in *Bacillus subtilis* (*B. subtilis*) were assembled in *Escherichia coli* (*E. coli*) using the bifunctional plasmid pABP_36 (ECE743 derivative). Plasmid/vector features for cloning in *E. coli* are the bla gene mediating resistance against ampicillin, an *E. coli* origin of replication, and a multiple cloning site. The pABP_36 heterologous expression system furthermore encodes a strong constitutive promoter. It furthermore contains a MLS resistance cassette (macrolide-lincosamide-streptogramin) for selection on erythromycin and lincomycin in B. *subtilis* and an origin of replication for B. *subtilis.* pABP_36 encodes for a signal peptide of an extracellular *Bacillus subtilis* protease, which enables efficient secretion of cyanobacterial heme peroxidases like HydPOX, LspPOX or cyanobacterial heme peroxidases from *Okeania* SIO2C9 and *Okeania hirsuta.*

A. Generation of HydPOX expression vectors

The amino acid sequence of the bacterial peroxidase from *Hydrocoleum sp.* CS-953, (NCBI accession number WP_094674510.1) (HydPOX), was used for generating a codon-optimized nucleotide sequence for gene expression in B. *subtilis.*

DNA was PCR-amplified from a gBlock (chemically synthesized DNA fragment) encoding the codon-optimized HydPOX nucleotide sequence including stop-codon (SEQ ID NO: 2). The HydPOX gene including stop-codon was amplified with primers ABP 4250 (SEQ ID NO: 5) and ABP 4251 (SEQ ID NO: 6) whereas primers ABP 3883 (SEQ ID NO: 3) and ABP 3884 (SEQ ID NO: 4) were used to amplify the pABP_36 vector backbone for subsequent Gibson assembly-based cloning. A poly-histidine tag (His$_6$-tag) was fused to the C-terminus of the protein for Western blot detection and purification using primer ABP 4251 (SEQ ID NO 6). The fragments were amplified using Phusion polymerase (Thermo Fisher) in a final reaction volume of 50 μl containing reaction buffer as provided by the manufacturer, 200 μM dNTPs, 0.5 μM of each primer, and approximately 10 ng of template DNA. The HydPOX amplification PCR was performed in 30 cycles using the following PCR cycling conditions: 98 °C 30s, 30 cycles of (98°C 30s, 68.5°C 25s, 72°C 25s), 72 °C 5 min. The backbone amplification PCR was performed in 30 cycles using the following PCR cycling conditions: 98 °C 30s, 30 cycles of (98°C 30s, 64°C 25s, 72°C 3min 30 s), 72 °C 5 min. PCR reaction products of each fragment were run on a 0.8 % agarose gel and amplicons of the correct size were extracted. The concentration of each fragment was measured using a NanoDrop instrument (absorbance at 260 nm). The fragments were assembled into a final expression construct in a 10 μl HIFI assembly reaction (NEBuilder HiFi DNA Assembly Master Mix). The reaction was set up on ice as follows: 5 μl of HiFi DNA Assembly Master Mix were added to the mix of DNA fragments (molar ratio vector: insert = 1:2). The reaction was filled to a final volume of 10 μl with nuclease free water. Samples were incubated in a thermocycler at 50°C for 60 minutes. Next, 1 μl of chilled assembled product was used for transformation of competent *E. coli DH10β* cells. Plasmid DNA was isolated from the obtained bacterial transformants/clones and correct assembly was confirmed by Sanger sequencing.

B. Generation of LspPOX expression vectors

The wildtype amino acid sequence of peroxidase LspPOX from *Lyngbya sp.* (strain PCC 8106), gene L8106_00300 (UniProt accession number A0YN25) (as defined in SEQ ID NO: 12 below), was used for generating a synthetic LspPOX-gBlock fragment (SEQ ID NO: 7) comprising (i) cloning overhangs (nucleotides 1-14 and nucleotides 1656-1661), start-codon (nucleotides 15-17) a codon-optimized LspPOX nucleotide sequence encoding for amino acids 117-661 of wildtype LspPOX protein (nucleotides 18-1652), and a stop-codon (nucleotides 1653-1655) for gene expression in *B. subtilis.* The amino acid sequence of the wild type LspPOX enzyme contains a propeptide region (amino acids 1-116) linked to the mature protein (amino acids 117-661). Considering that this propeptide region is not required for enzyme activity, the first 116 amino acids were excluded for protein expression (i.e. they were replaced by a start codon encoding a methionine) and only the mature protein sequence (amino acids 117-661) was used in the experiments.

DNA was PCR-amplified from the synthetic LspPOX-gBlock fragment (SEQ ID NO: 7) comprising the codon-optimized LspPOX nucleotide sequence (SEQ ID NO: 13 below). The LspPOX gene including stop-codon was amplified with primers ABP3213 (SEQ ID NO: 14) and ABP3215 (SEQ ID NO: 15). The reaction was performed as follows: 98 °C 30s, 30 cycles of (98°C 30s, 66 °C 25s, 72°C 1 min 15 s), 72 °C 5 min. PCR reaction product was run on a 0.8 % agarose gel and the amplicon of the correct size was extracted. His-tag was incorporated with reverse primer during PCR reaction. Subsequently Eco52I and PstI restriction enzymes were used to provide compatible restriction ends on LspPOX-His6 insert and on pABP_36 vector for ligation. The restriction reactions were performed in 50 μl as follows: 5 μl FD green buffer (Thermo Fisher Scientific), 2.5 μl of the selected enzyme (Eco52I, PstI, Thermo Fisher), and 1500 ng of LspPOX-His6 insert DNA or pABP_36 DNA were combined. After restriction digest, the synthetic fragment LspPOX and pABP_36 were ligated in a total volume of 15 μl containing 2.5 U T4 DNA ligase (Thermo Fisher) in the buffer provided by the manufacturer (vector: insert molar ratio used 1:3). The ligation mixture was incubated at 16°C overnight. Next, 1 μl of the ligation reaction was used for transformation of competent *E. coli DH10β* cells. Plasmid DNA was isolated from the obtained transformants/clones and correct assembly was confirmed by Sanger sequencing.

SEQ ID NO: 2: codon-optimized nucleotide sequence of HydPOX including stop codon for expression in B. *subtilis*

```
ATGGATGATAATTACGAAAACAATAATTCCATTCAGCAGGCGTTTGATTTTAGCGAGAATGAACAA
ACGCTTCTTTCCAATATTAATGGGCTTGGCGTTGCCCTTGATAACGATTTTTATGAAATTGAAGCG
ACAGAAGGCAGTCTGGATATTTTTGTCGAATTAACATTTAACCATAATGAGGGAAACCTTGATCTT
TTTCTTTTCGATTCGACAGGCAACGAAATTGCCTCATCTAACAGTCTCGATGACAATGAAATTATT
GACTTTACTGTAGACAAGGCCGGCACATATTATATTCAAGTGACGAGCGGGGATGGCACGTTTTC
GGGCAACACATATGATCTGTTCTGGGATGACGTGATCGCAGAAAATACATTTCGTACGATTAACG
GACTTAATAACAATTTGCAAAATCCCGAATTTGGATCAGCGACCGAGAAAGGTACCAGGTATACA
CAACTACTTAGACTTGGACCAGAAGCTTATCAGGATGAACTGAGCGAACCGCGCGGAGGTGGCT
TAACCACACCCCTGGAGTTGCCGTCTGCCCGAGAGGTGTCTAACGCTATCGCCGATCAGGGCGA
ACAATCCATCGCGAACGATTTTAAATTGTCAGATTGGTTCTGGCAATGGGGACAGTTTATTGATCA
CGACATCAGCCTCACAGAAGCGGATACCTCAGGTGATTCCTTTCCGATCCCAGTTCCGACAGGT
GACCCGGATTTCGATCCATTCGGTACTGGAACGCAGACAATCCCGTTGACTCGCTCAATTTTTGA
TCCTGCTACAGGTACAACAAACCCTCGTGAACAGATTAACGAGATAACGGCTTTCTTGGATGGTT
CCATGGTATACGGCAGCGACGAAGCAACAGCACTGAGCCTTAGAGCGAATGATGGCACTGGAAA
ATTGGCAACATCTATCGGCCCGGATGGGGAAATTCTGCTCCCGACAGACTCTGATGGGAATTTTT
TGGCAGGTGATATTAGAGTTAACGAACAACTAGGTTTAATCTCAGTACATACATTGTTTGTTCGGG
AACACAATAGACTGGCGCAAAAAACCGCGGACGTCTTAGATAACGGCAAAGGGCGAAAGGCCAA
CAAACTTAATGAACTGTTCGAAGAATCAGGCTTGAGCCGAGGAGATTTTATCTACGAATCAGCTA
GGCGTCTGGTTGGAGCGGAAATTCAAACAATCACATATAACGAATTTCTTCCTTTTCTTTTAGGGA
AAAATGTCCTCGATAAGTACACAGGGTACGACGAAACGGTCGATCCTGGCATATTCACAGAATTT
AGCACAGGCGTTTTTCGATTTGGGCATACGATGTTATCACCACAGCTGTTACAAGTGGAGGAAGA
TGGCTCGTATGAAGCAGTTGCTTTAAGAGATGCTTTTTTTCAGCCAGGCAAAATTATGGAAGATGG
GGTTGATTCACTCCTGAAAGGACTGGAGAGCCAACAGGCACAAGAAGTGGACAATCTTCTGATTG
ACGACGTTAGAAACTTCTTATTTGGGCGGCCAGGAGCGGGAGGGTTCGACTTAGCATCCTTGAAT
ATACAACGCGGGCGCGAGAATGGAGTTGCAGATATTAACACGTTTAGAAACGCCATCGGTCTTAG
CCCGTATACAGATTTCGATGAGCTTACCGGAGGAGATTCAGAATTGGCAGCGAAATTCGCTTCCG
TCTATGATTCGATTGATGATGTAGACTTGTGGATAGGAGGCCTTGCTGAACAGGATGTAAATGGC
GGTGTTGTGGGGGAAACAATCTCAGCCATTATTATCGAACAATTTAGCAATCTCCGCGACGGCGA
CCGTTTCTATTTCGAAATGATCAATACCTTAAAGAGTTAAAGGGAATTCTTGATAAAAACATTGAT
AAAGTTAGCCTCGCTAACATCATTGAAGATAACTCCGATGTGCAAATTGTGGGGTCCGCGTTCAC
AGTCAACAATCCGATTGTAGTGTAA
```

SEQ ID NO: 3: ABP 3883 primer sequence
CATCATCACCACCACCATTAACTGCAGGCATGCAAGCTTGGC

SEQ ID NO: 4: ABP 3884 primer sequence
CATATGTGCACCGGCCGCAG

SEQ ID NO: 5: ABP 4250 primer sequence
CTGCGGCCGGTGCACATATGGATGATAATTACGAAAACAATAATTCC

SEQ ID NO: 6: ABP 4251 primer sequence
CAGTTAATGGTGGTGGTGATGATGCACTACAATCGGATTGTTGACTGTGAA

SEQ ID NO: 14: ABP3213 primer sequence
AAACTGCGGCCGGTGCACAT

SEQ ID NO: 15: ABP3215 primer sequence
TTTTCTGCAGTTAATGGTGGTGGTGATGATGGACCAGGAACGCATTTGACTGGAT

As a host for heterologous protein production, an engineered *Bacillus subtilis* strain BGSC 1A1605 was used that lacked endogenous proteases NprE, AprE, Epr, Bpr, Mpr, NprB, Vpr, and WprA. LspPOX and HydPOX expression vectors were introduced via natural competence into the BGSC 1A1605 strain. BGSC 1A1605 strain was made competent by growing in LB medium. When the strain reached late exponential phase, 500 μl of culture was combined with 1 μg of

plasmid DNA. The transformation mixture was incubated 1h at 37°C before plating the total volume on LB plates supplemented with appropriate antibiotics. Transformants/clones appeared after 1-2 days of incubation at 37°C.

Transformation with expression vector for expression of the bacterial heme peroxidase HydPOX resulted in the transformed strains/clones ABBPP140, ABBPP141 and ABBPP142. The transformation with expression vector for expression of LspPOX resulted in the transformed strains/clones ABBPP45, ABBPP46, ABBPP47 and ABBPP48. The correct identity of the transformants were confirmed by colony PCR.

**Example 2. Recombinant expression of LspPOX and HydPOX by *Bacillus subtilis* transformants**

Transformed strains/clones ABBPP45-48 (LspPOX) and ABBPP140-142 (HydPOX) for recombinant expression of the respective peroxidases and untransformed engineered control *Bacillus subtilis* strain BGSC 1A1605 were preserved in 20% glycerol at -80°C. Transformed strains were cultivated in the presence of 1 $\mu$g/mL erythromycin and 25 $\mu$g/mL lincomycin throughout the course of the experiment(s). First, strains/clones were spread onto plates containing solid seed medium (LB agar) and bacterial colonies were grown for approximately 17h at 37°C. For further testing, 25 mL liquid seed cultures containing seed medium (LB medium) supplemented with the appropriate amounts of antibiotics were inoculated with a single bacterial clone in 250 mL Erlenmeyer flasks. The seed cultures were then incubated for 17 h at 37°C at 220 rpm before they were used to inoculate 25 ml of bacterial expression cultures at a ratio of 1:20 (5 vol%) in 250 mL Erlenmeyer flasks. As bacterial expression culture medium, LB supplemented with glucose was used (sterile glucose was added after autoclaving in the final concentration of 20 g/L). The bacterial expression cultures were incubated at 30°C for 24h at 220 rpm. After 24 hours of fermentation, cultures were sampled for analysis of peroxidase production and activity. To that end, samples were centrifuged for 20 min at 10,000 g and 4°C to separate the bacterial expression culture supernatant from the bacterial cell mass. The bacterial expression culture supernatants were subsequently filtered through 0.22 $\mu$m filter membrane and stored at -20°C for further analysis.

**Example 3. Purification of recombinant bacterial peroxidases LspPOX and HydPOX from bacterial expression culture supernatant**

His$_6$-tagged recombinant proteins LspPOX and HydPOX, expressed from *Bacillus subtilis* transformed strains/clones ABBPP48 and ABBPP142, prepared as described in Example 2, were purified from the bacterial expression culture supernatant using a Ni-NTA His-trap column. The His-trap column was operated by a peristaltic pump. Imidazole at low concentrations was used in the binding buffer (10 mM imidazole, pH 7.5) and the wash buffers (20 mM imidazole, pH 7.5) to minimize binding of host cell proteins to the column. Purification was performed in cold conditions (ice cold buffers and column kept on ice during purification). Proteins were eluted with elution buffer (350 mM imidazole (pH 7.5)). Salts were removed from elution fraction using desalting columns. Buffer was exchanged with 50 mM phosphate buffer pH 6.0. To separate and identify proteins, SDS-PAGE and western blot analysis of purified fractions was performed. Elution fractions were separated on 10 % SDS-PAGE gels. For visualization of proteins on gels Commasie Blue staining was used. For the Western blot analysis a BioRad Trans Blot system was used to transfer proteins from gel to membrane following the protocol of the manufacturer. For visualization of His-tagged proteins, polyclonal rabbit anti-His antibodies (Vendor: Thermo Scientific PA1-983B) were used. Figures 1 and 2 show that LspPOX and HydPOX could be expressed by *Bacillus subtilis* and that they could be subsequently purified from the bacterial expression culture supernatant by immobilized metal affinity chromatography.

**Example 4. Activity and enzyme kinetics of recombinantly expressed peroxidases and bovine lactoperoxidase (standard ABTS activity assay)**

For the determination of the peroxidase activity of (recombinant) peroxidases (produced in *B. subtilis*) a standard activity assay was performed using the artificial one-electron donor ABTS (2,2'-azino-bis (3-ethylbenzothiazoline-6-sulfonic acid)) and $H_2O_2$ in aqueous solution.

ABTS (2,2'-Azinobis [3-ethylbenzothiazoline-6-sulfonic acid]-diammonium salt) is a watersoluble peroxidase substrate that yields an oxidized product upon reaction with peroxidase and has two major absorbance peaks, 410 nm and 650 nm. The reaction in presence of $H_2O_2$ can be easily measured on microplate reader. From absorbance the amount of product is calculated and subsequently active units are determined and compared between different peroxidases (Auer, J Biol Chem 288, 2013).

The assays were performed in triplicates on a TECAN microtiter plate reader in a total of 200 $\mu$L containing 10 nM peroxidase, 2 mM ABTS (or varying concentrations thereof), 100 $\mu$L $H_2O_2$ 50 mM phosphate buffer pH 6.0. The oxidation reaction was read for 30 min at 25 °C. Rates of ABTS oxidation were calculated by following the absorbance increase at 414 nm ($\varepsilon_{414}$ = 36 mM$^{-1}$cm$^{-1}$). The concentration of the added $H_2O_2$ solution was 200 $\mu$M.

A. Kinetics measurements

For determination of enzymatic kinetic constants ABTS was used in a concentration range from 0.025 - 10 mM together with a 50 mM phosphate buffer pH 6.0.

Kinetic constants were calculated using a nonlinear regression fitting curve (Fig. 3A).

For HydPOX obtained kinetic parameters are as follows: $K_m$=0.307 mM, $V_{max}$= 0.043 nmol/s, $k_{cat}$ = 21 $s^{-1}$.

For LspPOX obtained kinetic parameters are as follows: $K_m$=0.237 mM, $V_{max}$= 0.0149 nmol/s, $k_{cat}$ = 7,45 $s^{-1}$.

The turnover number of an enzyme, or the $k_{cat}$, is the maximal number of molecules of substrate converted to product per enzyme per unit time when the enzyme is saturated. The higher $k_{cat}$ for HydPOX shows that this peroxidase turnover number is higher than that of LspPOX, showing better processivity of HydPOX.

B. Determination of peroxidase activity for peroxidase activity comparison of HydPOX, LpoPOX and LspPOX

The peroxidase activity of HydPOX (clone ABBPP142 or "BPP142") was subsequently compared to LspPOX (peroxidase from *Lyngbya sp.* PCC 8106) and LpoPOX (bovine lactoperoxidase; commercial protein was used that has an amino acid sequence as defined in SEQ ID NO: 16 which lacks the propeptide region; see below; for comparison, the full length LpoPOX amino acid sequence is defined in SEQ ID NO: 17 below). The assay was described as above. One unit of peroxidase activity was defined as the amount of peroxidase enzyme that oxidizes 1 nmol of substrate (ie ABTS)/min at the defined pH. Increased activity of HydPOX in comparison to LspPOX and LpoPOX was calculated from the difference in active units per mL of peroxidase solution (100 mg/L protein concentration dissolved in 50mM phosphate buffer pH 6.0). Results in Figure 3B show superior peroxidase activity of HydPOX in comparison to other peroxidases displayed as difference in active units of peroxidase per mL. The bacterial heme peroxidase HydPOX has approximately 36% increased peroxidase activity when compared to LpoPOX and 63% increased peroxidase activity compared to LspPOX (Figure 3B).

**Example 4.1: Activity and enzyme kinetics of recombinantly expressed peroxidases and bovine lactoperoxidase (standard ABTS activity assay)**

Similarly, to Example 4, the standard activity assay was performed under slightly optimized conditions. As evident from the results in Figure 3.1, the previously demonstrated effects have been confirmed.

For the determination of the peroxidase activity of (recombinant) peroxidases (produced in *B. subtilis*) a standard activity assay was performed using the artificial one-electron donor ABTS (2,2'-azino-bis (3-ethylbenzothiazoline-6-sulfonic acid)) and $H_2O_2$ in aqueous solution.

ABTS (2,2'-Azinobis [3-ethylbenzothiazoline-6-sulfonic acid]-diammonium salt) is a watersoluble peroxidase substrate that yields an oxidized product upon reaction with peroxidase and has two major absorbance peaks, 410 nm and 650 nm. The reaction in presence of $H_2O_2$ can be easily measured on microplate reader. From absorbance the amount of product is calculated and subsequently active units are determined and compared between different peroxidases (Auer, J Biol Chem 288, 2013).

The assays were performed in triplicates on a TECAN microtiter plate reader in a total of 200 $\mu$L containing 10 nM peroxidase, 2 mM ABTS (or varying concentrations thereof), 100 $\mu$M $H_2O_2$ 50 mM phosphate buffer pH 6.0. The oxidation reaction was read for 30 min at 25 °C. Rates of ABTS oxidation were calculated by following the absorbance increase at 414 nm ($\varepsilon$414 = 36.8 $mM^{-1}cm^{-1}$).

A. Kinetics measurements

For determination of enzymatic kinetic constants ABTS was used in a concentration range from 0.025 - 10 mM together with a 50 mM phosphate buffer pH 6.0.

Kinetic constants were calculated using an optimized nonlinear regression fitting curve (Fig. 3.1A).

For HydPOX obtained kinetic parameters are as follows: $K_m$=0.32 mM, $V_{max}$= 0.0023 $\mu$mol/min, $k_{cat}$ = 19.5 $s^{-1}$.

For LspPOX obtained kinetic parameters are as follows: $K_m$=0.18 mM, $V_{max}$= 0.00076 $\mu$mol/min, $k_{cat}$ = 6.3 $s^{-1}$.

The turnover number of an enzyme, or the $k_{cat}$, is the maximal number of molecules of substrate converted to product per enzyme per unit time when the enzyme is saturated. The higher $k_{cat}$ for HydPOX shows that this peroxidase turnover number is higher than that of LspPOX, showing better processivity of HydPOX.

B. Determination of peroxidase activity for peroxidase activity comparison of HydPOX, LpoPOX and LspPOX

The peroxidase activity of HydPOX (clone ABBPP142 or "BPP142") was subsequently compared to LspPOX (peroxidase from *Lyngbya sp.* PCC 8106) and LpoPOX (bovine lactoperoxidase; commercial protein was used that has an amino acid sequence as defined in SEQ ID NO: 16 which lacks the propeptide region; see below; for comparison, the full length LpoPOX amino acid sequence is defined in SEQ ID NO: 17 below). The assay was described as above. One unit of peroxidase activity was defined as the amount of peroxidase enzyme that oxidizes 1 µmol of substrate (ie ABTS)/min at the defined pH. Increased activity of HydPOX in comparison to LspPOX and LpoPOX was calculated from the difference in active units per mg of peroxidase. Results in Figure 3.1B show superior peroxidase activity of HydPOX in comparison to other peroxidases displayed as difference in active units of peroxidase per mg. The bacterial heme peroxidase HydPOX has approximately 72% increased peroxidase activity when compared to LpoPOX and 125% increased peroxidase activity compared to LspPOX (Figure 3.1B).

**ABTS peroxidase activity calculation:**

| Peroxidase enzyme | H2O2 [µM] | Buffer pH | ABTS [mM] | ΔA414/min | df | Active units/ mL | Active units/ mg |
|---|---|---|---|---|---|---|---|
| LpoPOX | | | | 0.1179 | 12.9 | 0.7 | 7.4 |
| LspPOX | 100 | 6 | 2 | 0.0701 | 16.6 | 0.6 | 5.6 |
| HydPOX | | | | 0.1898 | 13.8 | 1.3 | 12.7 |

$$U/mL = (\Delta A414/min*200*df) / (20*36.8*0.56)$$

| ABTS ext. coef. [mM-1] | 36.8 |
|---|---|
| Path length [cm-1] | 0.56 |
| Reaction volume | 200 uL |
| Volumen of enzyme | 20 uL |
| Dilution factor | df |
| Enzyme stock solution [mg/mL] | 0.1 |

$$U/mg \text{ protein (ABTS)} = U/ml \text{ (ABTS)} / mg/ml$$

**ABTS kinetics:**

| Peroxidase enzyme | $H_2O_2$ [µM] | Buffer pH | ABTS [mM] | ΔA414/min | ABTS* [mM/min] | Peroxidase [nM] | umol/ min |
|---|---|---|---|---|---|---|---|
| LspPOX | | | 0.025 | 0.0142 | 0.0007 | 10 | 0.0001 |
| | | | 0.05 | 0.0199 | 0.0010 | 10 | 0.0002 |
| | | | 0.1 | 0.0237 | 0.0012 | 10 | 0.0002 |
| | | | 0.5 | 0.0533 | 0.0026 | 10 | 0.0005 |
| | | | 1 | 0.0667 | 0.0032 | 10 | 0.0006 |
| | | | 1.5 | 0.0711 | 0.0035 | 10 | 0.0007 |
| | | | 2 | 0.0726 | 0.0035 | 10 | 0.0007 |
| | | | 4 | 0.0759 | 0.0037 | 10 | 0.0007 |
| | | | 10 | 0.0894 | 0.0043 | 10 | 0.0009 |
| | | | 0.025 | 0.0146 | 0.0007 | 10 | 0.0001 |
| | | | 0.5 | 0.0211 | 0.0010 | 10 | 0.0002 |

(continued)

| Peroxidase enzyme | H$_2$O$_2$ [μM] | Buffer pH | ABTS [mM] | ΔA414/min | ABTS* [mM/min] | Peroxidase [nM] | umol/ min |
|---|---|---|---|---|---|---|---|
| | | | 0.1 | 0.029 | 0.0014 | 10 | 0.0003 |
| | | | 0.5 | 0.0569 | 0.0028 | 10 | 0.0006 |
| | | | 1 | 0.0622 | 0.0030 | 10 | 0.0006 |
| | | | 1.5 | 0.0637 | 0.0031 | 10 | 0.0006 |
| | | | 2 | 0.06757 | 0.0033 | 10 | 0.0007 |
| | | | 4 | 0.0705 | 0.0034 | 10 | 0.0007 |
| | 100 | 6.0 | 10 | 0.0739 | 0.0036 | 10 | 0.0007 |
| | | | 0.025 | 0.0398 | 0.0019 | 10 | 0.0004 |
| | | | 0.05 | 0.0566 | 0.0027 | 10 | 0.0005 |
| | | | 0.1 | 0.0619 | 0.0030 | 10 | 0.0006 |
| | | | 0.5 | 0.1281 | 0.0062 | 10 | 0.0012 |
| | | | 1 | 0.1603 | 0.0078 | 10 | 0.0016 |
| | | | 1.5 | 0.1889 | 0.0092 | 10 | 0.0018 |
| | | | 2 | 0.1858 | 0.0090 | 10 | 0.0018 |
| | | | 4 | 0.2342 | 0.0114 | 10 | 0.0023 |
| | | | 10 | 0.2259 | 0.0110 | 10 | 0.0022 |
| | | | 0.025 | 0.0439 | 0.0021 | 10 | 0.0004 |
| | | | 0.5 | 0.0507 | 0.0025 | 10 | 0.0005 |
| HydPOX | | | 0.1 | 0.0573 | 0.0028 | 10 | 0.0006 |
| | | | 0.5 | 0.1388 | 0.0067 | 10 | 0.0013 |
| | | | 1 | 0.1785 | 0.0087 | 10 | 0.0017 |
| | | | 1.5 | 0.209 | 0.0101 | 10 | 0.0020 |
| | | | 2 | 0.1938 | 0.0094 | 10 | 0.0019 |
| | | | 4 | 0.214 | 0.0104 | 10 | 0.0021 |
| | | | 10 | 0.254 | 0.0123 | 10 | 0.0025 |

| | LspPOX | HydPOX |
|---|---|---|
| Vmax [umol/min] | 0.00076 | 0.0023 |
| Km [mM] | 0.18 | 0.32 |
| kcat [s-1] | 6.3 | 19.5 |

**Example 5. Thymol blue assay (Halogenation assay)**

Peroxidase activity towards iodide was determined using the Thymol blue assay read out on a TECAN microtiter plate reader.

The Thymol blue assay is based on the reactivity of thymolsulfonphthalein (thymol blue [TB]) toward oxidized halogen species. A peroxidase is able to catalyze the halogenation of the thymolsulfonphthalein which produces stable molecules with distinct spectral properties. A reaction between peroxidase and substrate thymole blue in presence of iodide and H$_2$O$_2$ in aqueous solution gives an absorbance peak at 620 nM ($\varepsilon_{620}$ = 40.3 mM$^{-1}$cm$^{-1}$). Assay is used to determine halogenation activity of peroxidases. The reaction can be easily measured on microplate reader. From absorbance the amount of product is calculated and subsequently active units are determined and compared between different peroxidases (Verhaeghe et al., Anal Biochem 379 2008).

The enzymatic reactions were performed at room temperature for 30 min in clear flat-bottomed microplate wells containing 200 $\mu$l 0.1 M phosphate buffer, pH 7.2, 100 $\mu$M thymol blue, 1 $\mu$g of recombinant bacterial peroxidase (or commercial LpoPOX as defined in SEQ ID NO: 16) $H_2O_2$ and a reducing agent such as I$^-$ (general assay setup).

A. Kinetics measurements

For determination of kinetic constants for HydPOX, varying concentrations of KI (0.03 - 4 mM) and 1 mM $H_2O_2$ were used in the general assay setup as described above. Kinetic constants were calculated using a nonlinear regression fitting curve (Figure 4A).

For HydPOX obtained kinetic parameters are as follows: $K_m$ = 0.153 mM, $V_{max}$ = 0.00128 nmol/s, $k_{cat}$ = 0.291 s$^{-1}$

B. Determination of peroxidase activity for peroxidase activity comparison of HydPOX, LpoPOX and LspPOX

For determination of peroxidase activity (active units), 1 mM KI and 1 mM $H_2O_2$ were used in the general assay setup as described above. One unit of peroxidase activity was defined as the amount of peroxidase enzyme that oxidizes 1 nmol of substrate/min at the defined pH. Superior peroxidase activity displayed as difference in active units of peroxidase per mL of HydPOX is shown when compared to LspPOX and LpoPOX (Figure 4B). The percentage change in activity of HydPOX represents the total increase in active units of HydPOX per mL of prepared solution compared to other peroxidases. In the thymol blue assay HydPOX exhibits an 83% increase peroxidase activity compared to LpoPOX and a 72% increased peroxidase activity compared to LspPOX (Figure 4B).

**Example 5.1: Thymol blue assay (Halogenation assay)**

Similarly, to Example 5, the thymol blue assay was performed under slightly optimized conditions. As evident from the results in Figure 4.1, the previously demonstrated effects have been confirmed.

Peroxidase activity towards iodide was determined using the Thymol blue assay read out on a TECAN microtiter plate reader.

The Thymol blue assay is based on the reactivity of thymolsulfonphthalein (thymol blue [TB]) toward oxidized halogen species. A peroxidase is able to catalyze the halogenation of the thymolsulfonphthalein which produces stable molecules with distinct spectral properties. A reaction between peroxidase and substrate thymol blue in presence of iodide and $H_2O_2$ in aqueous solution gives an absorbance peak at 620 nM ($\varepsilon_{620}$ = 40.3 mM$^{-1}$cm$^{-1}$). Assay is used to determine halogenation activity of peroxidases. The reaction can be easily measured on microplate reader. From absorbance the amount of product is calculated and subsequently active units are determined and compared between different peroxidases (Verhaeghe et al., Anal Biochem 379 2008).

The enzymatic reactions were performed at room temperature for 30 min in clear flat-bottomed microplate wells containing 200 $\mu$l 0.1 M phosphate buffer pH 7.2, 100 $\mu$M thymol blue, 1 $\mu$g/ml of recombinant bacterial peroxidase (or commercial LpoPOX as defined in SEQ ID NO: 16), $H_2O_2$ and a reducing agent such as I$^-$ (general assay setup).

A. Kinetics measurements

For determination of kinetic constants for HydPOX, varying concentrations of KI (0.03 - 4 mM) and 1 mM $H_2O_2$ were used in the general assay setup as described above. Kinetic constants were calculated using an optimized nonlinear regression fitting curve (Figure 4.1A).

For HydPOX obtained kinetic parameters are as follows: $K_m$ = 0.12 mM, $V_{max}$ = 0.00168 $\mu$mol/s, $k_{cat}$ = 10.1 s$^{-1}$

B. Determination of peroxidase activity for peroxidase activity comparison of HydPOX, LpoPOX and LspPOX

For determination of peroxidase activity (active units), 1 mM KI and 1 mM $H_2O_2$ were used in the general assay setup as described above. One unit of peroxidase activity was defined as the amount of peroxidase enzyme that oxidizes 1 $\mu$mol of substrate/min at the defined pH. Superior peroxidase activity displayed as difference in active units of peroxidase per mg of HydPOX is shown when compared to LspPOX and LpoPOX (Figure 4.1B). The percentage change in activity of HydPOX represents the total increase in active units of HydPOX per mg of prepared solution compared to other peroxidases. In the thymol blue assay HydPOX exhibits an 570% increase peroxidase activity compared to LpoPOX and a 358% increased peroxidase activity compared to LspPOX (Figure 4.1B).

**Thymole blue peroxidase activity calculation:**

| Peroxidase enzyme | H$_2$O$_2$ [mM] | Peroxidase [μg/mL] | KI [mM] | ΔA620 (1min) | Active units U/ml | Active units U/mg |
|---|---|---|---|---|---|---|
| LpoPOX | | | | 0.0134 | 0.12 | 1.2 |
| LspPOX | 1 | 1 | 1 | 0.0203 | 0.18 | 1.8 |
| HydPOX | | | | 0.0924 | 0.82 | 8.2 |

$$U/ml = (2*\Delta A620/min*200) / (2*40.3 \times 0.56)$$

| | |
|---|---|
| TB ext. coef. [mM-1] | 40.3 |
| Path length [cm-1] | 0.56 |
| Reaction volume | 200 uL |
| Volumen of enzyme | 2 uL |
| Enzyme stock solution [mg/mL] | 0.1 |
| [TB-I2] -product factor | 2 |

$$U/mg \text{ protein (TB)} = U/ml \text{ (TB)} / mg/ml$$

**TB kinetics:**

| Peroxidase enzyme | H$_2$O$_2$ [mM] | Peroxidase [μg/mL] | KI [mM] | ΔA620 (1min) | TB-I2 [mM/min] | TB-I2 [umol/min] |
|---|---|---|---|---|---|---|
| HydPOX | 1 mM | 1 [μg/mL] | 0.03 | 0.0243 | 0.0022 | 0.00043 |
| | | | 0.045 | 0.0275 | 0.0024 | 0.00049 |
| | | | 0.0625 | 0.0274 | 0.0024 | 0.00049 |
| | | | 0.1 | 0.0444 | 0.0039 | 0.00079 |
| | | | 0.2 | 0.0442 | 0.0039 | 0.00078 |
| | | | 1 | 0.0901 | 0.0080 | 0.00160 |
| | | | 2 | 0.0932 | 0.0083 | 0.00165 |
| | | | 4 | 0.0842 | 0.0075 | 0.00149 |
| | | | 0.03 | 0.0307 | 0.0027 | 0.00054 |
| | | | 0.045 | 0.0365 | 0.0032 | 0.00065 |
| | | | 0.0625 | 0.035 | 0.0031 | 0.00062 |
| | | | 0.1 | 0.0437 | 0.0039 | 0.00077 |
| | | | 0.2 | 0.0481 | 0.0043 | 0.00085 |
| | | | 1 | 0.0945 | 0.0084 | 0.00167 |
| | | | 2 | 0.0919 | 0.0081 | 0.00163 |
| | | | 4 | 0.0919 | 0.0081 | 0.00163 |

|  | HydPOX |
|---|---|
| Vmax [umol/min] | 0.00168 |
| Km [mM] | 0.12 |
| kcat [s-1] | 10.1 |

## Example 6. Temperature stability of HydPOX

For determination of the effect of temperature on HydPOX peroxidase activity, the protein was kept at the respective temperature (20-90 °C) for 5 min and was then slowly brought to room temperature for kinetic analysis. For determination of residual activity, the ABTS oxidizing assay was used. For the assay 10 nM peroxidase and 2 mM ABTS in 50 mM sodium acetate buffer at pH 5.0 was used. All measurements were performed in triplicates in a total volume of 200 $\mu$L using a TECAN microtiter plate reader.

As is evident from Figure 5, which shows residual activity of the enzyme at different temperatures relative to its activity at 25 °C, HydPOX peroxidase is stable until 60 °C.

## Example 7. Activity of HydPOX under different pH conditions

The peroxidase activity of HydPOX was measured under 4 different pH conditions using the ABTS assay. Therefore, the assay contained 10 nM peroxidase, 2 mM ABTS and a buffer with a specific pH (four different pHs were tested in total) as a substitute for sodium acetate buffer (at least where the pH 6.0, 7.2 and 8.0 were to be tested; for pH 5.0 the sodium acetate buffer pH 5.0 was used). The following buffers were used in the reaction: 100mM sodium acetate pH 5.0 and 100mM $KH_2PO_4/K_2HPO_4$ ("phosphate") buffers at pH 6.0; 7.2 and 8.0. All measurements were performed in triplicates on a TECAN microtiter plate reader in a total volume of 200 $\mu$L. As is evident from Figure 6, HydPOX has an optimal peroxidase activity at about pH 5. Above pH 5 the peroxidase activity of the enzyme gradually decreases with increasing pH.

## Example 8. Antimicrobial activity of HydPOX peroxidase in combination with iodide

In this example HydPOX was tested to prevent and/or control (the growth and/or the spreading of) a pathogen like a fungus or a bacterium. I.e., HydPOX as defined in SEQ ID NO: 1 was tested for its suitability as an antimicrobial biocontrol agent.

A. Addition of HydPOX to bacteria

Overnight cultures of *E. coli* bacteria were grown in LB media. Afterwards, serial dilutions of cells were prepared in 0.9 % NaCl solution from $10^{-1}$ to $10^{-6}$.

The following reaction mixtures ("mixtures") were prepared in 100 mM phosphate buffer pH 6.0 (aqueous solution) and incubated for 30 min at room temperature in order to generate intermediate reaction products (like for example ClO$^-$):

1. 100 mM phosphate buffer pH 6.0

2. 5.0 mM KI solution in 100 mM phosphate buffer pH 6.0

3. 5.0 mM $H_2O_2$ solution in 100 mM phosphate buffer pH 6.0

4. HydPOX 50 $\mu$g/mL in 100 mM phosphate buffer pH 6.0

5. 5.0 mM KI, 5.0 mM $H_2O_2$, HydPOX 50 $\mu$g/mL in 100 mM phosphate buffer pH 6.0

100 $\mu$L of each reaction mixture was subsequently added to 1 mL of diluted cells, gently mixed and incubated at room temperature for 30 min (Table 1).

**Table 1:** reaction mixtures ("mixtures") that were added to bacterial dilutions

| Mixtures | Final concentration after addition to cell dilutions |
|---|---|
| 1. | 10 mM phosphate buffer pH 6.0 |
| 2. | 500 $\mu$M I$^{-1}$ in 10 mM phosphate buffer pH 6.0 |
| 3. | 500 $\mu$M H$_2$O$_2$ in 10 mM phosphate buffer pH 6.0 |
| 4. | 5 $\mu$g/mL HydPOX in 10 mM phosphate buffer 6.0 |
| 5. | 500 $\mu$M I$^{-1}$ + 5 $\mu$g/mL HydPOX + 500 $\mu$M H$_2$O$_2$ in 10 mM phosphate buffer pH 6.0 |

Bacterial dilutions of between 10$^{-3}$ to 10$^{-6}$ to which the respective reaction mixtures were added were then plated on LB agar plates and incubated at 37 °C overnight. On the next day, the number of cells were counted on each plate (Table 2).

Table 2: Number of E. coli/bacterial colonies/cells on LB agar plates of respective (bacterial) dilutions after co-incubation of bacterial dilutions with different reaction mixtures ("mixtures") as illustrated in Table 1 and overnight-incubation at 37 °C.

| Mixtures | (Bacterial) Dilutions | | | |
|---|---|---|---|---|
| | 10$^{-3}$ | 10$^{-4}$ | 10$^{-5}$ | 10$^{-6}$ |
| 1. | Confluent | 1600 | 850 | 293 |
| 2. | Confluent | 1758 | 810 | 251 |
| 3. | Confluent | 1458 | 680 | 289 |
| 4. | Confluent | 1578 | 634 | 258 |
| 5. | 0 | 0 | 0 | 0 |

As is evident from the number of *E. coli* colonies/cells that grew on each agar plate, only the reaction mixture comprising iodide, hydrogen peroxide and HydPOX peroxidase in aqueous solution (i.e., "mixture" 5 in Table 1 and 2) showed effective prevention and/or control of bacterial growth and/or spreading (ie, pathogen killing) for all (bacterial) dilutions tested (10$^{-3}$ to 10$^{-6}$). Hence HydPOX when combined with a reduction agent and hydrogen peroxide in aqueous solution could prevent and/or control bacteria, which is evident from the reduction of the number of bacterial cells that grew on the agar plate (i.e., none as compared to all the other "mixtures 1-4" tested). Hence, the inventors have demonstrated that HydPOX as defined in SEQ ID NO: 1 in combination with a reducing agent such as iodide and hydrogen peroxide in aqueous solution may be employed as a biocontrol agent against bacterial pathogens.

B. Addition of HydPOX to fungi

In analogy to the application of HydPOX to bacteria as described in *"A. Application of HydPOX to bacteria"* above, the same assay was carried out using *S. cerevisiae*. Again, dilutions of fungi/yeast/S. cerevisiae cells ("(fungi) dilutions") were prepared ranging between 10$^{-3}$ to 10$^{-6}$. Reaction mixtures ("mixtures") were prepared as described above in *"A. Application of HydPOX to bacteria"* and incubated for 30 min at room temperature before they were combined with the (fungi) dilutions as described. The resulting (fungi) dilutions were plated on LB plates and incubated at 28 °C for 2 days. After incubation, the number of fungi colonies were counted on each plate (Table 3).

Table 3: Number of S.cerevisiaelfungi colonies/cells on LB agar plates of respective (fungi) dilutions after co-incubation of (fungi) dilutions with different reaction mixtures ("mixtures") as illustrated in Table 1 and overnight-incubation at 37 °C.

| Mixtures | (Fungi) Dilutions | | | |
|---|---|---|---|---|
| | 10$^{-3}$ | 10$^{-4}$ | 10$^{-5}$ | 10$^{-6}$ |
| 1. | 1200 | 562 | 125 | 14 |
| 2. | 1450 | 621 | 190 | 14 |
| 3. | 1470 | 542 | 182 | 32 |

(continued)

| Mixtures | (Fungi) Dilutions | | | |
|---|---|---|---|---|
| | $10^{-3}$ | $10^{-4}$ | $10^{-5}$ | $10^{-6}$ |
| 4. | 1350 | 495 | 190 | 19 |
| 5. | 0 | 0 | 0 | 0 |

As is evident from the number of *S. cerevisiae* colonies/cells that grew on each agar plate, only the reaction mixture comprising iodide, hydrogen peroxide and HydPOX peroxidase in aqueous solution (i.e., "mixture" 5 in Table 1 and 3) showed effective prevention and/or control of *fungus* growth and/or spreading (i.e., pathogen killing) for all (fungi) dilutions tested ($10^{-3}$ to $10^{-6}$). Hence HydPOX when combined with a reduction agent and hydrogen peroxide in aqueous solution could prevent and/or control fungi, which is evident from the reduction of the number of fungus cells that grew on the agar plate (i.e., none as compared to all the other "mixtures 1-4" tested). Hence, the inventors have demonstrated that HydPOX as defined in SEQ ID NO: 1 in combination with a reducing agent such as iodide and hydrogen peroxide in aqueous solution may be employed as a biocontrol agent against fungus pathogens.

**Example 9. Construction of the expression vectors for production of cyanobacterial peroxidases HydPOXs, OkePOX and OkePOXs in *Bacillus subtilis***

Protein overexpression plasmids ("vectors") for heterologous expression of bacterial heme peroxidases in *Bacillus subtilis* (*B. subtilis*) were assembled in *Escherichia coli* (*E. coli*) using the bifunctional plasmid pABP_36 (ECE743 derivative). Plasmid/vector features for cloning in *E. coli* are the bla gene mediating resistance against ampicillin, an *E. coli* origin of replication, and a multiple cloning site. The pABP_36 heterologous expression system furthermore encodes a strong constitutive promoter. It furthermore contains an MLS resistance cassette (macrolide-lincosamide-streptogramin) for selection on erythromycin and lincomycin in B. *subtilis* and an origin of replication for *B. subtilis.* pABP_36 encodes for a signal peptide of an extracellular *Bacillus subtilis* protease, which enables efficient secretion of cyanobacterial heme peroxidases like HydPOXs, OkePOXs or cyanobacterial heme peroxidases from *Okeania SIO2C9* and *Okeania hirsuta.*

A. Generation of HydPOXs expression vectors

The HydPOXs (SEQ ID NO: 19) fragment was amplified from gBlock of HydPOX (SEQ ID NO: 2) with primers ABP 5717 (SEQ ID NO: 20) and ABP 4251 (SEQ ID NO 6) to eliminate 116 amino acids of the proregion and generating shorter protein sequence of HydPOXs (SEQ ID NO: 18). The same as with HydPOX, a poly-histidine tag (His$_6$-tag) was fused to the C-terminus of HydPOXs construct. PCR conditions for amplification were the same as for HydPOX (Example 1), also the same backbone was used to construct the final plasmid.

PCR reaction products of each fragment were run on a 0.8 % agarose gel and amplicons of the correct size were extracted. The concentration of each fragment was measured using a NanoDrop instrument (absorbance at 260 nm). The fragments were assembled into a final expression construct in a 10 $\mu$l HIFI assembly reaction (NEBuilder HiFi DNA Assembly Master Mix). The reaction was set up on ice as follows: 5 $\mu$l of HiFi DNA Assembly Master Mix were added to the mix of DNA fragments (molar ratio vector: insert = 1:2). The reaction was filled to a final volume of 10 $\mu$l with nuclease free water. Samples were incubated in a thermocycler at 50°C for 60 minutes. Next, 1 $\mu$l of chilled assembled product was used for transformation of competent *E. coli DH10$\beta$* cells. Plasmid DNA was isolated from the obtained bacterial transformants/clones and correct assembly was confirmed by Sanger sequencing.

B. Generation of OkePOX expression vectors

The wild type amino acid sequence of the bacterial peroxidase from *Okeania hirsuta.* CS-953, (NCBI accession number WP_124142942.1) (OkePOX) (defined as SEQ ID NO: 11), was used for generating a codon-optimized nucleotide sequence - OkePOX-gBlock (SEQ ID NO: 21) with start and stop codon for gene expression in *B. subtilis.* For construction of plasmids containing OkePOX construct, DNA was amplified from gBlock synthesised fragment with forward primer ABP 3877 (SEQ ID NO: 28) and reverse primer ABP 3878 (SEQ ID NO: 23). A poly-histidine tag (His$_6$-tag) was fused to the C-terminus of the protein for Western blot detection and purification using primer ABP 3878 (SEQ ID NO: 23). The fragments were amplified using Phusion polymerase (Thermo Fisher) in a final reaction volume of 50 $\mu$l containing reaction buffer as provided by the manufacturer, 200 $\mu$M dNTPs, 0.5 $\mu$M of each primer, and approximately 10 ng of template DNA. OkePOX PCR amplifications were performed in 30 cycles using the following PCR cycling conditions: 98 °C 30s, 30 cycles of (98°C 30s, 66.0°C 25s, 72°C 70s), 72 °C 5 min. Backbone preparation, assembly of plasmids and transformations were made as stated above in 'A: Generation of HydPOX and HydPOXs expression vectors.

SEQ ID NO: 28: ABP 3877 sequence
CTGCGGCCGGTGCACATatgGACGACAATTACGAGAAAAATAATCGGATACA

C: Generation of OkePOXs expression vectors

The wild type amino acid sequence of the bacterial peroxidase from *Okeania hirsuta. CS-953*, (NCBI accession number WP_124142942.1) (OkePOX) (defined as SEQ ID NO: 11), was used for generating a codon-optimized nucleotide sequence - OkePOX-gBlock (SEQ ID NO: 21) with start and stop codon for gene expression in *B. subtilis.* For construction of plasmids containing OkePOXs (SEQ ID NO: 24), DNA was amplified from gBlock (SEQ ID NO: 21) synthetised fragment using forward primer ABP 5758 (SEQ ID NO: 22) and reverse primer ABP 3878 (SEQ ID NO: 23).

A poly-histidine tag (His$_6$-tag) was fused to the C-terminus of the protein for Western blot detection and purification using primer ABP 3878 (SEQ ID NO: 23). The fragments were amplified using Phusion polymerase (Thermo Fisher) in a final reaction volume of 50 $\mu$l containing reaction buffer as provided by the manufacturer, 200 $\mu$M dNTPs, 0.5 $\mu$M of each primer, and approximately 10 ng of template DNA. OkePOXs PCR amplifications were performed in 30 cycles using the following PCR cycling conditions: 98 °C 30s, 30 cycles of (98°C 30s, 66.0°C 25s, 72°C 70s), 72 °C 5 min. Backbone preparation, assembly of plasmids and transformations were made as stated in Example 1.

As a host for heterologous protein production, an engineered *Bacillus subtilis* strain BGSC 1A1605 was used that lacked endogenous proteases NprE, AprE, Epr, Bpr, Mpr, NprB, Vpr, and WprA. HydPOXs and OkePOXs expression vectors were introduced via natural competence into the BGSC 1A1605 strain. BGSC 1A1605 strain was made competent by growing in LB medium. When the strain reached late exponential phase, 500 $\mu$l of culture was combined with 1 $\mu$g of plasmid DNA. The transformation mixture was incubated 1h at 37°C before plating the total volume on LB plates supplemented with appropriate antibiotics. Transformants/clones appeared after 1-2 days of incubation at 37°C.

Transformation with expression vector for expression of the bacterial heme peroxidase HydPOXs resulted in the transformed strains/clones ABBPP557, ABBPP558 and ABBPP559. Transformation with expression vector for expression of OkePOXs resulted in the transformed strains/clones ABBPP467, ABBPP468 and ABBPP469. The correct identity of the transformants were confirmed by colony PCR.

**Example 10. Recombinant expression of HydPOXs and OkePOXs by *Bacillus subtilis* transformants**

Transformed strains/clones ABBPP557-559 (HydPOXs) and ABBPP467-469 (OkePOXs) for recombinant expression of the respective peroxidases and untransformed engineered control *Bacillus subtilis* strain BGSC 1A1605 were preserved in 20% glycerol at -80°C. recombinant expression of both HydPOXs and OkePOXs were performed as described in Example 2.

**Example 11. Purification of recombinant bacterial peroxidases HydPOXs and OkePOXs from bacterial expression culture supernatant**

His$_6$-tagged recombinant proteins HydPOXs, and OkePOXs expressed from *Bacillus subtilis* transformed strains/clones ABBPP557 (HydPOXs), and ABBPP467 (OkePOXs), prepared as described in Example 9, were purified from the bacterial expression culture supernatant using a Ni-NTA His-trap column as described in Example 3. For visualization of His-tagged proteins, polyclonal rabbit anti-His antibodies (Vendor: Thermo Scientific PA1-983B) were used. Figure 7 shows that tested bacterial recombinant peroxidases HydPOXs and OkePOXs could be expressed by *Bacillus subtilis* and subsequently purified from the bacterial expression culture supernatant by immobilized metal affinity chromatography.

**Example 12. Activity and enzyme kinetics of recombinantly expressed peroxidases and bovine lactoperoxidase (standard ABTS activity assay)**

For the determination of the peroxidase activity of (recombinant) peroxidases (produced in *B. subtilis*) a standard activity assay was performed, similar to that in Examples 4 and 4.1 using the artificial one-electron donor ABTS (2,2'-azino-bis (3-ethylbenzothiazoline-6-sulfonic acid)) and $H_2O_2$ in aqueous solution.

The assays were performed in triplicates on a TECAN microtiter plate reader in a total of 200 $\mu$L. The assay mixture containing 6.45 nM peroxidase, 1 mM ABTS (or varying concentrations thereof), 100 $\mu$M $H_2O_2$ in 50 mM sodium acetate buffer pH 5.0. The oxidation reaction was read for 30 min at 25 °C. Rates of ABTS oxidation were calculated by following the absorbance increase at 414 nm ($\varepsilon 414 = 36$ mM$^{-1}$cm$^{-1}$). Here peroxidases were compared under similar, but more defined conditions for bacterial peroxidases as in Examples 4 and 4.1.

A. Kinetics measurements

For determination of enzymatic kinetic constants ABTS was used in a concentration range from 0.025 - 5 mM together with a 50 mM sodium acetate buffer pH 5.0. Kinetic constants were calculated using a nonlinear regression fitting curve (Fig. 8A). The calculated kinetic parameters are shown in Table 4.

Table 4: Kinetic parameters for each peroxidase in ABTS assay: $V_{max}$- maximal velocity of enzyme, $K_m$ - concentration of substrate at half-maximal velocity of enzyme, $k_{cat}$ - turnover number, $k_{cat}/K_{0.5}$ - enzyme specificity constant.

| K | $V_{max}$ [μmol/min] | $K_m$ [mM] | $k_{cat}$ [s$^1$] | $k_{cat}/K_m$ [s$^{-2}$ mM$^{-1}$] |
|---|---|---|---|---|
| LspPOX | 0.004 | 1.09 | 57 | 23 |
| HydPOX | 0.0085 | 0.26 | 109 | 416 |
| HydPOXs | 0.0073 | 0.56 | 95 | 169 |
| OkePOXs | 0.010 | 0.67 | 134 | 200 |

The turnover number of an enzyme, or the $k_{cat}$, is the maximal number of molecules of substrate converted to product per enzyme per unit time when the enzyme is saturated. The higher $k_{cat}$ shows that this peroxidase turnover, showing better processivity of the enzyme compared to LspPOX. In this Example we used more optimal conditions for peroxidase activity and this is the reason for improved activity of HydPOX compared to the activity from the Example 4.1. Activity of all bacterial peroxidases HydPOX, HydPOXs and OkePOXs is better in low pH conditions.

B. Determination of peroxidase activity for peroxidase activity comparison of HydPOX, HydPOXs, OkePOXs, LpoPOX and LspPOX

The peroxidase activity of HydPOX, HydPOXs (ABBPP557) and OkePOXs (ABBPP467) was subsequently compared to LspPOX (peroxidase from *Lyngbya sp.* PCC 8106) and LpoPOX (bovine lactoperoxidase; commercial protein was used having the amino acid sequence as defined in SEQ ID NO: 16 which lacks the propeptide region; see below; for comparison, the full length LpoPOX amino acid sequence is defined in SEQ ID NO: 17 below). The assay was performed as described above (see Example 4.1). One unit of peroxidase activity was defined as the amount of peroxidase enzyme that oxidizes 1 μmol of substrate (ie ABTS)/min at the defined pH. All bacterial heme peroxidases, HydPOX, HydPOXs and OkePOXs, when compared to LpoPOX and LspPOX have increased peroxidase activity (Table 5 and Figure 8). The activity of the bacterial peroxidases (in U/mg), was compared to the activity of LpoPOX and bacterial LspPOX peroxidase.

Table 5: Comparison of peroxidase activity against ABTS of HydPOX, HydPOXs and OkePOXs compared to LpoPOX and LspPOX. Increase is shown as percentage of unit/mg compared to the LpoPOX or LspPOX.

| | /LpoPOX [%] | /LspPOX [%] |
|---|---|---|
| HydPOX | 98 | 184 |
| HydPOXs | 56 | 125 |
| OkePOXs | 131 | 232 |

As shown in Figure 8B and Table 5, HydPOX has 98% increased activity compared to LpoPOX and 184% increased activity compared to LspPOX. HydPOXs has 56% increased activity compared to LpoPOX and 125% increased activity compared to LspPOX. OkePOXs has 131% increased activity compared to LpoPOX and 232% increased activity compared to LspPOX. Thus all measured bacterial peroxidases show a tremendously increased peroxidase activity when compared to LpoPOX or LspPOX in the ABTS assay.

**Example 13. Thymol blue assay (Halogenation assay)**

Peroxidase activity towards iodide was determined using the Thymol blue assay read out on a TECAN microtiter plate reader similar as in Examples 5 and 5.1. Lowering the final concentration of $H_2O_2$ resulted in higher assay specificity for I$^-$. The bacterial peroxidases (HydPOX, HydPOXs, OkePOXs) were compared to LpoPOX and LspPOX under these modified conditions.

The enzymatic reactions were performed at room temperature for 30 min in clear flat-bottomed microplate wells containing 200 $\mu$l 0.1 M phosphate buffer pH 7.2, 100 $\mu$M thymol blue, 1 $\mu$g/ml of recombinant bacterial peroxidase (or commercial LpoPOX as defined in SEQ ID NO: 16), $H_2O_2$ and a reducing agent such as I- (general assay setup).

A. Kinetics measurements

For determination of kinetic constants for LpoPOX, LspPOX, HydPOX, HydPOXs and OkePOXs, varying concentrations of KI (0.03 - 4 mM) and 0.1 mM $H_2O_2$ were used in the general assay setup as described above. Kinetic constants were calculated using a nonlinear regression fitting curve (Figure 9A). A substrate vs. rate curve for all peroxidases had sigmoidal fitting. For this reason, $K_{0.5}$ values are used indicating the substrate concentration at which half maximal velocity/half-saturation is achieved. Novel peroxidases (HydPOX, HydPOXs and OkePOXs) have similar processivity as LpoPOX and LspPOX, but have much higher specificity ($k_{cat}/K_{0.5}$, Table 6) to I-, having greater activity than both LpoPOX and LspPOX in lower concentration of substrate (Figure 9A and Table 6, indicated by the reduced $K_{0.5}$ values).

Table 6: Kinetic parameters for each peroxidase in Thymol blue assay: $V_{max}$- maximal velocity of enzyme, $K_{0.5}$- concentration of substrate at half-maximal velocity, $k_{cat}$ - turnover number, $k_{cat}/K_{0.5}$ - enzyme specificity constant.

| | $V_{max}$ [$\mu$mol/min] | $K_{0.5}$ [mM] | $k_{cat}$ [s$^{-1}$] | $k_{cat}/K_{0.5}$ [s$^{-1}$ mM$^{-1}$] |
|---|---|---|---|---|
| LpoPOX | 0.0025 | 1.32 | 16.5 | 12.5 |
| LspPOX | 0.0029 | 1.39 | 14.7 | 10.6 |
| HydPOX | 0.0024 | 0.08 | 14.6 | 176.1 |
| HydPOXs | 0.0021 | 0.12 | 10.6 | 85.1 |
| OkePOXs | 0.0027 | 0.12 | 13.7 | 118.6 |

B. Determination of peroxidase activity for peroxidase activity comparison of HydPOX, HydPOXs, OkePOXs, LpoPOX and LspPOX

For determination of peroxidase activity (active units), 1 mM KI and 0.1 mM $H_2O_2$ were used in the general assay setup as described above (see Example 5.1). One unit of peroxidase activity was defined as the amount of peroxidase enzyme that oxidizes 1 $\mu$mol of substrate/min at the defined pH. Peroxidase activity displayed as difference in active units of peroxidase per mg is shown when bacterial peroxidases (HydPOX, HydPOXs, OkePOXs) were compared to LspPOX and LpoPOX (Figure 9B). In the thymol blue assay all bacterial heme peroxidases (HydPOX, HydPOXs, OkePOXs) exhibit an activity increase compared to both LpoPOX and LspPOX. Activity of the bacterial peroxidases (in U/mg), was compared to the activity of LpoPOX and LspPOX peroxidases (Table 7 and Figure 9B).

Table 7: Comparison of peroxidase activity of HydPOX, HydPOXs, OkePOXs compared to LpoPOX and LspPOX for Thymol blue assay. Increase is shown as percentage of unit/mg compared to the LpoPOX or LspPOX.

| Compared to | /LpoPOX [%] | /LspPOX [%] |
|---|---|---|
| HydPOX | 299 | 161 |
| HydPOXs | 233 | 143 |
| OkePOXs | 348 | 202 |

As shown in Figure 9B and Table 7, HydPOX has 299% increased activity compared to LpoPOX and 161% increased activity compared to LspPOX. HydPOXs has 233% increased activity compared to LpoPOX and 143% increased activity compared to LspPOX. OkePOXs has 348% increased activity compared to LpoPOX and 202% increased activity compared to LspPOX. Thus all measured bacterial peroxidases (HydPOX, HydPOXs, OkePOXs) show a tremendously increased peroxidase activity when compared to LpoPOX or LspPOX in the thymol blue assay. In addition, as evident from Figure 9A, the HydPOX, HydPOXs and OkePOXs peroxidases show a dramatically increased activitiy at low substrate concentrations also indicated in the low $K_{0.5}$ values in Table 6.

**Example 14. Temperature stability of HydPOX, HydPOXs and OkePOXs**

For determination of the effect of temperature on HydPOX, HydPOXs and OkePOXs peroxidase activity, the protein was kept at the respective temperature (20-90 °C) for 5 min and was then slowly brought to room temperature for kinetic analysis. For determination of residual activity, the ABTS oxidizing assay was used. For the assay 6.45 nM peroxidase, 0.1 mM $H_2O_2$ and 1 mM ABTS in 50 mM sodium acetate buffer at pH 5.0 was used. All measurements were performed in triplicates in a total volume of 200 $\mu$L using a TECAN microtiter plate reader.

As is evident from Figure 10, which shows residual activity of the enzyme at different temperatures relative to its activity at 25 °C, all peroxidases are stable until at least 60 °C.

**Example 15. Activity of HydPOX, HydPOXs and OkePOXs under different pH conditions**

The peroxidase activity of HydPOX, HydPOXs and OkePOXs was measured under 4 different pH conditions using the ABTS assay. Therefore, the assay contained 6.45 nM peroxidase, 1 mM ABTS and a buffer with a specific pH (four different pHs were tested in total) as a substitute for sodium acetate buffer (at least where the pH 6.0, 7.2 and 8.0 were to be tested; for pH 5.0 the sodium acetate buffer pH 5.0 was used). The following buffers were used in the reaction: 100mM sodium acetate pH 5.0 and 100mM $KH_2PO_4$/$K_2HPO_4$ ("phosphate") buffers at pH 6.0; 7.2 and 8.0. All measurements were performed in triplicates on a TECAN microtiter plate reader in a total volume of 200 $\mu$L. As is evident from Figure 11, all peroxidases have an optimal peroxidase activity at about pH 5. Above pH 5 the peroxidase activity of the enzyme gradually decreases with increasing pH.

Example 16. **Comparison of novel peroxidases as potential pest control agents**

In this example HydPOX, HydPOXs and OkePOXs were used as preventing and/or controlling (the growth and/or the spreading of) agent against pathogens like a fungus or a bacterium. For this purpose, a volume of 450 $\mu$L of antimicrobial agent mixture was prepared containing individual peroxidase, potassium iodide, glucose oxidase and glucose as stated in Table 8. Glucose oxidase in presence of glucose generates $H_2O_2$, which subsequentially is used by the peroxidase to generate antimicrobial molecule IO⁻ toxic to the pathogen. For each peroxidase a negative control mixture was prepared the same as the active mixture (Table 8), only without glucose (antimicrobial reaction without glucose cannot take place). All bacterial peroxidases described above were tested for their suitability as an antimicrobial biocontrol agent.

Table 4: formulation mixture of antimicrobial agent containing peroxidase.

| Component | Final concentration |
|---|---|
| Peroxidase (HydPOX, HydPOXs or OkePOXs) | 50 mg/L |
| KI | 33.2 ppm |
| Glucose Oxidase | 0.25 UA* |
| Glucose | 5 % (w/V) |
| 100 mM sodium acetate buffer (ph =5.0) | until 450 uL |
| * Enzyme purchased from Sigma: One unit will oxidize 1.0 micromole of beta-D-glucose to D-gluconolactone and hydrogen peroxide per min at pH 5.1 at 35 °C. | |

A. Direct activity against bacterial pathogen *Agrobacterium tumefaciens*

Freshly prepared stock solution of *Agrobacterium tumefaciens* spores at concentration 2.45*10^9 /mL were used in this example. Immediately after preparation 450 $\mu$L of antimicrobial agent was mixed with 50 $\mu$L of bacterial stock solution. The peroxidase system was subsequently given 10- and 30-min (25 °C) time at room temperature to act on spores. At each given time point 20 ul was diluted 1000x times in 0.9 % NaCl solution. This diluted solution was then diluted once more in 0.9 % NaCl solution and 100 $\mu$L of each dilution was plated on LB (lysogen broth) agar plates. After 48 hours of incubation at 30 °C colonies grown on plates were counted. The number of colonies grown was compared to that of the negative control. The antimicrobial agent treatment group did not show any colonies after incubation. Thus, it was shown that 100% of *Agrobacterium tumefaciens* was killed in 10 min in presence of each HydPOX, HydPOXs and OkePOXs peroxidase.

B. Direct activity against fungi pathogen *Botrytis cinerea*

Analogically to the application of peroxidases to bacteria as described in *"A. Direct activity against bacterial*

*pathogen Agrobacterium tumefaciens"* above, the same assay was used on freshly prepared spores of fungi *Botrytis cinerea.* Concentration for Botrytis *cinerea* spores of were 1.1*10^7 /mL. The peroxidase system was subsequently given 10- and 30-min time at room temperature to act on spores. At each given time point 100 ul was diluted 100x times in 0.9 % NaCl solution. This diluted solution was then diluted once more in 0.9 % NaCl solution and 100 $\mu$L of each dilution was plated on PDA (Potato Dextrose Agar) agar plates. After 168 hours of incubation at 25 °C germinating spores grown on plates were counted. The number of spores grown was compared to that of the negative control. The antimicrobial agent treatment group did not show any colonies after incubation. Thus, it was shown that 100% of *Botrytis cinerea* was killed in 10 min in presence of each peroxidase.

**Claims**

1. A non-therapeutic method for preventing and/or controlling the growth and/or the spreading of a pathogen, said method comprising contacting the pathogen with one or more bacterial heme peroxidase as defined in SEQ ID NO: 1 (HydPOX), SEQ ID NO: 18 or 26 (HydPOXs), SEQ ID NO: 11 (OkePOX), or SEQ ID NO: 25 or 27 (OkePOXs),

   wherein said contacting of said pathogen with the bacterial heme peroxidase comprises the co-administration of said bacterial heme peroxidase with a reducing agent, and

   (i) hydrogen peroxide and/or
   (ii) a hydrogen-peroxide donor system;

   in aqueous solution.

2. The method of claim 1, wherein said pathogen is in or on a tissue of a plant, preferably a crop.

3. The method of claim 1 or 2, wherein said pathogen is selected from the group consisting of fungi, preferably moulds and yeasts, and bacteria, preferably pathogenic bacteria.

4. A non-therapeutic use of a composition comprising one or more bacterial heme peroxidase as defined in any one of SEQ ID NOs: 1, 18, 11, or 25-27 as a pesticide,

   wherein the composition further comprises a reducing agent and

   (i) hydrogen peroxide and/or
   (ii) a hydrogen-peroxide donor system

   in aqueous solution.

5. A composition comprising one or more bacterial heme peroxidase as defined in any one of SEQ ID NOs: 1, 18, 11, or 25-27,

   a reducing agent, and

   (i) hydrogen peroxide, and/or
   (ii) a hydrogen-peroxide donor system,

   in aqueous solution for use as a medicament.

6. A composition comprising one or more bacterial heme peroxidase as defined in any one of SEQ ID NOs: 1, 18, 11, or 25-27,

   a reducing agent, and

   (i) hydrogen peroxide and/or
   (ii) a hydrogen-peroxide donor system,

   in aqueous solution for use in the treatment of an infection with a pathogen in or on a human or animal body.

7.  The composition for use of claim 6, wherein said bacterial heme peroxidase is to be brought into contact with biological tissue of said human or animal, in particular with mucosae or with skin, in particular epidermal skin like scalp or facial skin.

8.  A bacterial heme peroxidase as defined in any one of SEQ ID NOs: 18, 25, or 27.

9.  The non-therapeutic method of preventing and/or controlling the growth and/or the spreading of a pathogen of any one of claims 1 to 3, wherein the heme peroxidase has at least 10%, or preferably

    at least 30% increased peroxidase activity in the standard ABTS activity assay or thymol blue assay compared to bovine lactoperoxidase (LpoPOX) or LspPOX; or
    wherein the substrate concentration at which half maximal velocity/half-saturation (K0.5) of the heme peroxidase is achieved is at least 5-fold lower, preferably at least 10-fold lower than that of bovine lactoperoxidase (LpoPOX) or LspPOX.

10. The non-therapeutic use of claim 4, wherein the heme peroxidase has at least 10%, or preferably , at least 30% increased peroxidase activity in the standard ABTS activity assay or thymol blue assay compared to bovine lactoperoxidase (LpoPOX) or LspPOX; or
    wherein the substrate concentration at which half maximal velocity/half-saturation (K0.5) of the heme peroxidase is achieved is at least 5-fold lower, preferably at least 10-fold lower than that of bovine lactoperoxidase (LpoPOX) or LspPOX.

11. The composition for use of any one of claims 5 to 7, wherein the heme peroxidase has at least 10%, or preferably

    at least 30% increased peroxidase activity in the standard ABTS activity assay or thymol blue assay compared to bovine lactoperoxidase (LpoPOX) or LspPOX; or
    wherein the substrate concentration at which half maximal velocity/half-saturation (K0.5) of the heme peroxidase is achieved is at least 5-fold lower, preferably at least 10-fold lower than that of bovine lactoperoxidase (LpoPOX) or LspPOX.

12. The bacterial heme peroxidase of claim 8, wherein the heme peroxidase has at least 10%, or preferably at least 30% increased peroxidase activity in the standard ABTS activity assay or thymol blue assay compared to bovine lactoperoxidase (LpoPOX) or LspPOX; or
    wherein the substrate concentration at which half maximal velocity/half-saturation (K0.5) of the heme peroxidase is achieved is at least 5-fold lower, preferably at least 10-fold lower than that of bovine lactoperoxidase (LpoPOX) or LspPOX.

13. A method for producing one or more bacterial heme peroxidase as defined in any one of SEQ ID NOs: 18, 25 or 27 in an engineered Bacillus subtilis strain, preferably wherein said engineered Bacillus subtilis strain has reduced activity of one or more extracellular Bacillus subtilis protease(s).

14. A method for producing a pesticide composition comprising one or more heme peroxidase protein as defined in any one of SEQ ID NOs: 18, 25 or 27 in an engineered Bacillus subtilis strain, preferably wherein said engineered Bacillus subtilis strain has reduced activity of one or more extracellular Bacillus subtilis protease(s), optionally, wherein the method further comprises complementing the one or more heme peroxidase as defined in SEQ ID NOs: 18, 25 or 27 with a reducing agent and/or (i) hydrogen peroxide and/or (ii) a hydrogen-peroxide donor system, in aqueous solution.

15. The method of claim 13 or 14, wherein said reduced activity of one or more extracellular Bacillus subtilis protease(s) results from the stable knock-out, transient downregulation/repression and/or transient inhibition of said Bacillus subtilis protease(s) on the DNA, RNA and/or protein level, optionally wherein said one or more extracellular Bacillus subtilis protease(s) are selected from the group consisting of NprE, AprE, Epr, Bpr, Mpr, NprB, Vpr, and WprA.

**Patentansprüche**

1.  Nicht-therapeutisches Verfahren zur Vorbeugung und/oder Kontrolle des Wachstums und/oder der Ausbreitung eines Pathogens, wobei das Verfahren das Inkontaktbringen des Pathogens mit einer oder mehreren bakteriellen Hämperoxidase(n), wie in SEQ ID NO:1 (HydPOX), SEQ ID NO:18 oder 26 (HydPOXs), SEQ ID NO:11 (OkePOX) oder SEQ ID NO:25 oder 27 (OkePOXs) definiert, umfasst,

wobei das Inkontaktbringen des Pathogens mit der bakteriellen Hämperoxidase das gleichzeitige Verabreichen der bakteriellen Hämperoxidase mit einem Reduktionsmittel und

(i) Wasserstoffperoxid und/oder
(ii) einem Wasserstoffperoxid-Donorsystem

in wässriger Lösung umfasst.

2. Verfahren nach Anspruch 1, wobei das Pathogen in oder auf einem Gewebe einer Pflanze, bevorzugt Getreide, ist.

3. Verfahren nach Anspruch 1 oder 2, wobei das Pathogen ausgewählt ist aus der Gruppe bestehend aus Pilzen, bevorzugt Schimmelpilzen und Hefen, und Bakterien, bevorzugt pathogenen Bakterien.

4. Nicht-therapeutische Verwendung einer Zusammensetzung, umfassend eine oder mehrere bakterielle Hämperoxidase(n), wie in einer von SEQ ID NOs:1, 18, 11 oder 25-27 definiert, als Pestizid,

wobei die Zusammensetzung des Weiteren ein Reduktionsmittel und

(i) Wasserstoffperoxid und/oder
(ii) einem Wasserstoffperoxid-Donorsystem

in wässriger Lösung umfasst.

5. Zusammensetzung, umfassend eine oder mehrere bakterielle Hämperoxidase(n), wie in einer von SEQ ID NOs:1, 18, 11 oder 25-27 definiert,

ein Reduktionsmittel, und

(i) Wasserstoffperoxid und/oder
(ii) einem Wasserstoffperoxid-Donorsystem

in wässriger Lösung, zur Verwendung als Medikament.

6. Zusammensetzung, umfassend eine oder mehrere bakterielle Hämperoxidase(n), wie in einer von SEQ ID NOs:1, 18, 11 oder 25-27 definiert,

ein Reduktionsmittel, und

(i) Wasserstoffperoxid und/oder
(ii) einem Wasserstoffperoxid-Donorsystem

in wässriger Lösung, zur Verwendung bei der Behandlung einer Infektion mit einem Pathogen in oder auf einem Körper eines Menschen oder eines Tiers.

7. Zusammensetzung zur Verwendung nach Anspruch 6, wobei die bakterielle Hämperoxidase mit einem biologischen Gewebe des Menschen oder Tiers, insbesondere mit der Schleimhaut oder mit der Haut, insbesondere der epidermalen Haut wie Kopfhaut oder Gesichtshaut, in Kontakt zu bringen ist.

8. Bakterielle Hämperoxidase wie in einer von SEQ ID NOs:18, 25 oder 27 definiert.

9. Nicht-therapeutisches Verfahren zur Vorbeugung und/oder Kontrolle des Wachstums und/oder der Verbreitung eines Pathogens nach einem der Ansprüche 1 bis 3, wobei die Hämperoxidase mindestens 10% oder bevorzugt mindestens 30% erhöhte Peroxidase-Aktivität im standardisierten ABTS-Aktivität-Assay oder Thymolblau-Assay im Vergleich zu Rinderlactoperoxidase (LpoPOX) oder LspPOX aufweist; oder
wobei die Substratkonzentration, bei der halbmaximale Geschwindigkeit/Halbsättigung (K0,5) der Hämperoxidase erreicht ist, mindestens 5-mal niedriger, bevorzugt mindestens 10-mal niedriger ist als die der Rinderlactoperoxidase (LpoPOX) oder LspPOX.

10. Nicht-therapeutische Verwendung nach Anspruch 4, wobei die Hämperoxidase mindestens 10% oder bevorzugt mindestens 30% erhöhte Peroxidase-Aktivität im standardisierten ABTS-Aktivität-Assay oder Thymolblau-Assay im Vergleich zu Rinderlactoperoxidase (LpoPOX) oder LspPOX aufweist; oder
wobei die Substratkonzentration, bei der halbmaximale Geschwindigkeit/Halbsättigung (K0,5) der Hämperoxidase erreicht ist, mindestens 5-mal niedriger, bevorzugt mindestens 10-mal niedriger ist als die der Rinderlactoperoxidase (LpoPOX) oder LspPOX.

11. Zusammensetzung zur Verwendung nach einem der Ansprüche 5 bis 7, wobei die Hämperoxidase mindestens 10% oder bevorzugt mindestens 30% erhöhte Peroxidase-Aktivität im standardisierten ABTS-Aktivität-Assay oder Thymolblau-Assay im Vergleich zu Rinderlactoperoxidase (LpoPOX) oder LspPOX aufweist; oder
wobei die Substratkonzentration, bei der halbmaximale Geschwindigkeit/Halbsättigung (K0,5) der Hämperoxidase erreicht ist, mindestens 5-mal niedriger, bevorzugt mindestens 10-mal niedriger ist als die der Rinderlactoperoxidase (LpoPOX) oder LspPOX.

12. Bakterielle Hämperoxidase nach Anspruch 8, wobei die Hämperoxidase mindestens 10% oder bevorzugt mindestens 30% erhöhte Peroxidase-Aktivität im standardisierten ABTS-Aktivität-Assay oder Thymolblau-Assay im Vergleich zu Rinderlactoperoxidase (LpoPOX) oder LspPOX aufweist; oder
wobei die Substratkonzentration, bei der halbmaximale Geschwindigkeit/Halbsättigung (K0,5) der Hämperoxidase erreicht ist, mindestens 5-mal niedriger, bevorzugt mindestens 10-mal niedriger ist als die der Rinderlactoperoxidase (LpoPOX) oder LspPOX.

13. Verfahren zur Herstellung einer oder mehrerer bakterieller Hämperoxidase(n), wie in einer von SEQ ID NOs:18, 25 oder 27 definiert, in einem gentechnisch veränderten *Bacillus subtilis-Stamm,* bevorzugt wobei der gentechnisch veränderte *Bacillus subtilis-Stamm* eine verringerte Aktivität der einen oder mehreren extrazellulären *Bacillus* subtilis-Protease(n) aufweist.

14. Verfahren zur Herstellung einer Pestizid-Zusammensetzung, umfassend ein oder mehrere Hämperoxidaseprotein(e), wie in einer von SEQ ID NOs:18, 25 oder 27 definiert, in einem gentechnisch veränderten *Bacillus subtilis-Stamm,* bevorzugt wobei der gentechnisch veränderte *Bacillus subtilis-Stamm* eine verringerte Aktivität der einen oder mehreren extrazellulären *Bacillus* subtilis-Protease(n) aufweist, gegebenenfalls wobei das Verfahren des Weiteren das Komplementieren der einen oder mehreren bakteriellen Hämperoxidase(n), wie in SEQ ID NOs:18, 25 oder 27 definiert, mit einem Reduktionsmittel und/oder (i) Wasserstoffperoxid und/oder (ii) einem Wasserstoffperoxid-Donorsystem in wässriger Lösung umfasst.

15. Verfahren nach Anspruch 13 oder 14, wobei die verringerte Aktivität der einen oder mehreren extrazellulären *Bacillus* subtilis-Protease(n) aus dem stabilen Knockout, der transienten Herunterregulierung/Repression und/oder transienten Inhibition der *Bacillus* subtilis-Protease(n) auf der DNA-, RNA- und/oder der Proteinebene resultiert, gegebenenfalls wobei die einen oder mehreren extrazellulären *Bacillus subtilis*-Protease(n) ausgewählt ist/sind aus NprE, AprE, Epr, Bpr, Mpr, NprB, Vpr und WprA.

**Revendications**

1. Procédé non thérapeutique pour prévenir et/ou réguler la croissance et/ou la propagation d'un agent pathogène, ledit procédé comprenant une mise en contact de l'agent pathogène avec une ou plusieurs peroxydases héminiques bactériennes telles que définies dans SEQ ID NO : 1 (HydPOX), SEQ ID NO : 18 ou 26 (HydPOXs), SEQ ID NO : 11 (OkePOX), ou SEQ ID NO : 25 ou 27 (OkePOXs), dans lequel ladite mise en contact dudit agent pathogène avec la peroxydase héminique bactérienne comprend la co-administration de ladite peroxydase héminique bactérienne avec un agent réducteur, et

(i) du peroxyde d'hydrogène et/ou
(ii) un système donneur de peroxyde d'hydrogène ;

dans une solution aqueuse.

**2.** Procédé selon la revendication 1, dans lequel ledit agent pathogène est dans ou sur un tissu d'une plante, de préférence une culture.

**3.** Procédé selon la revendication 1 ou 2, dans lequel ledit agent pathogène est choisi dans le groupe comprenant les champignons, de préférence des moisissures et des levures, et des bactéries, de préférence des bactéries pathogènes.

**4.** Utilisation non thérapeutique d'une composition comprenant une ou plusieurs peroxydases héminiques bactériennes telles que définies dans l'une quelconque des SEQ ID NO : 1, 18, 11 ou 25 à 27 en tant que pesticide, dans laquelle la composition comprend en outre un agent réducteur et

(i) du peroxyde d'hydrogène et/ou
(ii) un système donneur de peroxyde d'hydrogène dans une solution aqueuse.

**5.** Composition comprenant une ou plusieurs peroxydases héminiques bactériennes telles que définies dans l'une quelconque des SEQ ID NO : 1, 18, 11 ou 25 à 27, un agent réducteur, et

(i) du peroxyde d'hydrogène, et/ou
(ii) un système donneur de peroxyde d'hydrogène, dans une solution aqueuse pour utilisation comme médicament.

**6.** Composition comprenant une ou plusieurs peroxydases héminiques bactériennes telles que définies dans l'une quelconque des SEQ ID NO : 1, 18, 11 ou 25 à 27, un agent réducteur, et

(i) du peroxyde d'hydrogène, et/ou
(ii) un système donneur de peroxyde d'hydrogène,

dans une solution aqueuse pour utilisation dans le traitement d'une infection par un agent pathogène dans ou sur un corps humain ou animal.

**7.** Composition à utiliser selon la revendication 6, dans laquelle ladite peroxydase héminique bactérienne doit être mise en contact avec un tissu biologique dudit humain ou animal, en particulier avec des muqueuses ou avec la peau, en particulier la peau épidermique comme le cuir chevelu ou la peau du visage.

**8.** Peroxydase héminique bactérienne telle que définie dans l'une quelconque des SEQ ID NO : 18, 25 ou 27.

**9.** Procédé non thérapeutique de prévention et/ou de régulation de la croissance et/ou de la propagation d'un agent pathogène selon l'une quelconque des revendications 1 à 3, dans lequel la peroxydase héminique présente une activité peroxydase accrue d'au moins 10 %, ou de préférence d'au moins 30 % dans le test d'activité ABTS standard ou le test au bleu de thymol par rapport à la lactoperoxydase bovine (LpoPOX) ou à la LspPOX ; ou dans lequel la concentration de substrat à laquelle la demi-vitesse maximale/demi-saturation (K0.5) de la peroxydase héminique est atteinte est au moins 5 fois inférieure, de préférence au moins 10 fois inférieure à celle de la lactoperoxydase bovine (LpoPOX) ou de la LspPOX.

**10.** Utilisation non thérapeutique selon la revendication 4, dans laquelle la peroxydase héminique présente une activité peroxydase accrue d'au moins 10 %, ou de préférence d'au moins 30 % dans le test d'activité ABTS standard ou le test au bleu de thymol par rapport à la lactoperoxydase bovine (LpoPOX) ou à la LspPOX ; ou dans laquelle la concentration de substrat à laquelle la demi-vitesse maximale/demi-saturation (K0.5) de la peroxydase héminique est atteinte est au moins 5 fois inférieure, de préférence au moins 10 fois inférieure à celle de la lactoperoxydase bovine (LpoPOX) ou de la LspPOX.

**11.** Composition pour utilisation selon l'une quelconque des revendications 5 à 7, dans laquelle la peroxydase héminique présente une activité peroxydase accrue d'au moins 10 %, ou de préférence d'au moins 30 % dans le test d'activité ABTS standard ou le test au bleu de thymol par rapport à la lactoperoxydase bovine (LpoPOX) ou à la LspPOX ; ou dans laquelle la concentration de substrat à laquelle la demi-vitesse maximale/demi-saturation (K0.5) de la peroxydase héminique est atteinte est au moins 5 fois inférieure, de préférence au moins 10 fois inférieure à celle de la lactoperoxydase bovine (LpoPOX) ou de la LspPOX.

**12.** Peroxydase héminique bactérienne selon la revendication 8, dans laquelle la peroxydase héminique présente au moins 10 %, ou de préférence au moins 30 % d'activité de peroxydase accrue dans le test d'activité ABTS standard ou le test au bleu de thymol par rapport à la lactoperoxydase bovine (LpoPOX) ou la LspPOX ; ou dans laquelle la concentration de substrat à laquelle la demi-vitesse maximale/demi-saturation (K0.5) de la peroxydase héminique est atteinte est au moins 5 fois inférieure, de préférence au moins 10 fois inférieure à celle de la lactoperoxydase bovine (LpoPOX) ou de la LspPOX.

**13.** Procédé de production d'une ou plusieurs peroxydases héminiques bactériennes telles que définies dans l'une quelconque des SEQ ID NO : 18, 25 ou 27 dans une souche de *Bacillus subtilis* modifiée génétiquement, de préférence dans laquelle ladite souche de *Bacillus subtilis* modifiée présente une activité réduite d'une ou plusieurs protéases de *Bacillus subtilis* extracellulaires.

**14.** Procédé de production d'une composition pesticide comprenant une ou plusieurs protéines de peroxydase héminique telles que définies dans l'une quelconque des SEQ ID NO: 18, 25 ou 27 dans une souche de *Bacillus subtilis* modifiée, de préférence dans lequel ladite souche de *Bacillus subtilis* modifiée présente une activité réduite d'une ou plusieurs protéases de *Bacillus subtilis* extracellulaires, facultativement, dans lequel le procédé comprend en outre un complément des une ou plusieurs peroxydases héminiques telles que définies dans les SEQ ID NO : 18, 25 ou 27 avec un agent réducteur et/ou (i) du peroxyde d'hydrogène et/ou (ii) un système donneur de peroxyde d'hydrogène, dans une solution aqueuse.

**15.** Procédé selon la revendication 13 ou 14, dans lequel ladite activité réduite d'une ou plusieurs protéases de *Bacillus subtilis* extracellulaires résulte de l'inactivation stable, de la régulation/répression vers le bas transitoire et/ou de l'inhibition transitoire de ladite ou desdites protéases de *Bacillus subtilis* au niveau de l'ADN, de l'ARN et/ou de la protéine, facultativement dans lequel ladite ou lesdites protéases de *Bacillus subtilis* extracellulaires sont choisies dans le groupe comprenant NprE, AprE, Epr, Bpr, Mpr, NprB, Vpr et WprA.

EP 4 309 500 B1

**Figure 1**

**Figure 2**

76

**Figure 3**

A

B

**Figure 3.1**

A

B

**Figure 4**

A

B

**Figure 4.1**

A

HydPOX

B

**Figure 5**

**Figure 6**

**Figure 7**

**Figure 8**

**Figure 9**

**Figure 10**

**Figure 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1997026908 A1

- WO 1999022597 A1

**Non-patent literature cited in the description**

- **AUER**. *J Biol Chem*, 2013, 288
- **TANAKA**. *Biosci Biotechnol Biochem*, 2003, vol. 67
- **AUER, MARKUS et al.** A stable bacterial peroxidase with novel halogenating activity and an autocatalytically linked heme prosthetic group. *Journal of Biological Chemistry*, 2013, vol. 288 (38), 27181-27199
- **VERHAEGHE, ELODIE et al.** A colorimetric assay for steady-state analyses of iodo-and bromoperoxidase activities.. *Analytical biochemistry*, 2008, vol. 379 (1), 60-65

- **VERHAEGHE et al.** *Anal Biochem*, 2008, 379
- **VERHAEGHE**. *Anal Biochem*, 2008, vol. 379
- **HANKIN** ; **PETERS**. Snyder & Champness Molecular Genetics of Bacteria. Wiley, 2020
- **MADIGAN et al.** Brock Biology of Microorganisms. 2018
- **HELYER et al.** Biological control in plant protection: a color handbook. John Wiley & Sons, 2010
- **AUER**. *J Biol Chem*, 2013, vol. 288